(19) Europäisches Patentamt
European Patent Office
Office européen des brevets

(11) EP 0 809 811 B1

(12) # EUROPÄISCHE PATENTSCHRIFT

(45) Veröffentlichungstag und Bekanntmachung des Hinweises auf die Patenterteilung:
**11.07.2001 Patentblatt 2001/28**

(21) Anmeldenummer: **96907242.0**

(22) Anmeldetag: **09.04.1996**

(51) Int Cl.7: **G01S 13/44**

(86) Internationale Anmeldenummer:
**PCT/CH96/00124**

(87) Internationale Veröffentlichungsnummer:
**WO 97/22890 (26.06.1997 Gazette 1997/27)**

(54) **VERFAHREN UND AMPLITUDEN- ODER PHASEN-MONOPULSRADARGERÄT ZUR ORTUNG VON FLUGOBJEKTEN**

PROCESS AND AMPLITUDE OR PHASE-SINGLE PULSE RADAR DEVICE FOR LOCATING FLYING OBJECTS

PROCEDE ET APPAREIL RADAR MONOPULSE EN AMPLITUDE OU EN PHASE POUR REPERER DES OBJETS VOLANTS

(84) Benannte Vertragsstaaten:
**AT BE CH DE DK ES FI FR GB GR IE IT LI LU MC NL PT SE**

(30) Priorität: **19.12.1995 CH 359095**

(43) Veröffentlichungstag der Anmeldung:
**03.12.1997 Patentblatt 1997/49**

(73) Patentinhaber: **Siemens Schweiz AG**
**8047 Zürich (CH)**

(72) Erfinder: **KÜPFER, Hanspeter**
**CH-8903 Birmensdorf (CH)**

(74) Vertreter: **Zedlitz, Peter, Dipl.-Inf. et al**
**Siemens AG,**
**Patentabteilung,**
**Postfach 22 16 34**
**80506 München (DE)**

(56) Entgegenhaltungen:
**GB-A- 2 014 393** **US-A- 4 084 160**

- **IEEE TRANSACTIONS ON INSTRUMENTATION AND MEASUREMENT, Bd. 40, Nr. 3, 1.Juni 1991, Seiten 596-600, XP000269333 ONSY A ABD EL-ALIM ET AL: "SECOND-ORDER DISCRIMINANT FUNCTION FOR AMPLITUDE COMPARISON MONOPULSE ANTENNA SYSTEMS"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 809 811 B1

Printed by Jouve, 75001 PARIS (FR)

## Beschreibung

Die vorliegende Erfindung betrifft ein Verfahren zur Ortung von Flugobjekten für ein Amplituden- oder Phasen-Monopulsradargerät nach Anspruch 1 bzw. 2 sowie ein entsprechendes Amplituden- oder Phasen-Monopulsradargerät nach Anspruch 18 bzw. 19.

Zur Ortung und gegebenenfalls Verfolgung von Flugobjekten werden heute normalerweise Monopulsradargeräte eingesetzt, wie sie u.a. in M. Skolnik, Radar-Handbook, Mc Graw Hill 1970, Kapitel 21 oder E. Brookner (editor), ASPECTS OF MODERN RADAR, Artech House Inc. 1988, Kapitel 5 (S.M. Sherman, Monopulse Principles and Techniques) beschrieben sind. Mit Monopulsradargeräten werden mit jedem empfangenen Puls in Azimut und Elevation Winkelfehlersignale erzeugt, die zu Null werden, wenn die Antennen- bzw. Boresightachse genau auf das Ziel ausgerichtet ist. Die Ausrichtung und gegebenenfalls Nachführung der Boresightachse erfolgt mechanisch oder mit einer Phased-Array-Antenne elektronisch. Oft wird mit einer Phased-Array-Antenne der Messbereich in Elevation elektronisch und in Azimut mechanisch abgetastet (A.E. Acker, HOW TO SPEAK RADAR, BASIC FUNDAMENTALS AND APPLICATIONS OF RADAR, Varian Associates, Palo Alto 1988, Seiten 30 und 31).

Bekannte Amplituden- oder Phasen-Monopulsradargeräte liefern genaue Winkel-Messdaten bezüglich einem Flugobjekt, solange zusätzlich zu den direkt vom überwachten Flugobjekt empfangenen Signalen, keine Signale von weiteren Objekten oder ein- oder mehrfach reflektierte Signale vom ersten oder den weiteren Objekten empfangen werden.

Fig. 1 zeigt zwei Flugobjekte TT1 und TT2 in einem Antennenstrahl B, von denen sich das erste über und das zweite unterhalb der Boresightachse bx befindet. Gemäss E. Brookner, a.a.O., Kapitel 5, Seiten 323 - 330 kann mit einem konventionellen Monopulsradargerät die räumliche Lage eines Flugobjekts nicht mehr präzise bestimmt werden, sobald sich ein zweites Flugobjekt in demselben Radarstahl befindet. Im Vergleich zum Einziel-Fall ändert sich die Phase des resultierenden Differenzsignals bezüglich dem Summensignal. Zudem liefern konventionelle Monopulsradargeräte fehlerhafte Winkel-Messdaten, sofern die Ziele auch distanzmässig nicht getrennt werden können. Ein Spezialfall des Zweiziel-Falles ist die Spiegelung des von einem Flugobjekt reflektierten Radarechos z.B. auf einer Wasseroberfläche.

Wird z.B. mit einem Zielfolge-Radargerät ein über Wasser fliegendes Objekt verfolgt, tritt meist ein Elevations-Winkelfehlersignal auf, das auch dann nicht null ist, wenn die Boresightachse genau auf das Flugobjekt ausgerichtet ist. Neben dem Echosignal des überwachten Flugobjekts wird ein zweites an der Wasseroberfläche gespiegeltes Zielechosignal empfangen. Das resultierende Signal kann dann bezüglich diesen beiden Signalen weder in der Distanz noch im Winkel aufgelöst werden. Die Überlagerung dieser zwei Echosignale ergibt daher falsche Angaben bezüglich der Elevation des Zielobjekts. Dadurch führt der Elevations-Servokreis während der Nachführphase die Boresightachse in eine falsche vom Ziel abgelegene Richtung. Bekannt ist femer, dass zur gleichzeitigen Vermessung von $n_t$ verschiedenen kohärenten Zielen in 2 Dimensionen theoretisch wenigstens $m_a = 2 * n_t$ verschiedene Teilantennen (unabhängige Empfangspunkte innerhalb eines Antennensystems) benötigt werden, die komplexe Signale abgeben, welche in exakt kalibrierten, stabilen Inphase- und Quadraturkanälen zu verarbeiten sind. Zur Ermittlung der Zieldaten werden m, komplexe Gleichungen benötigt, die vom Computer des Radarsystems nach den Unbekannten aufzulösen sind (siehe A. I. Leonov, K.I. Fomichev, Monopulse Radar, 1986 Artech House Inc., Kapitel 5.4.4 (Functional Signal Processing)). Diese theoretischen Überlegungen wurden aufgrund der zu erwartenden Schwierigkeiten bisher noch nicht in der vorgeschlagenen Form in die Praxis umgesetzt (vgl. E. Brookner, a.a.O., Kapitel 5.7, Seiten 323 und 324). Sie liegen der nachfolgend erwähnten Lösung zugrunde, bei der es gelang, durch gezielte Vereinfachungen ein Verfahren zur Vermessung von zwei gleichzeitig auftretenden Zielen zu finden, dass aufgrund der vorgenommenen Einschränkungen jedoch nur für Zielfolge-Radargeräte anwendbar ist.

Durch dieses aus Dr. A. Schenkel, Crossfeed monopulse - a specific method to eliminate mistrakking over sea, presented at the international conference "Radar-87", London, 19-21 Oktober 1987 bekannte Verfahren werden fehlerhafte Vermessungen von über Wasser fliegenden Objekten vermieden. Bei dieser Methode, die ferner in den Patentschriften U.S. 4,084,160 und U.S. 4,219,816 bzw. CH 592 887 und CH 629 898 beschrieben ist, werden die bisher benutzten sowie weitere Winkelfehlersignale verwendet, die bei richtiger Kombination auch im Spiegelungsfall eine Signal-Nullstelle auf der Boresightachse erzeugen. Die Anwendung dieser Methode bei der Vermessung eines Flugobjekts in Azimut und Elevation erlaubt zudem eine Vermessung nicht nur beim beschriebenen Spiegelungsfall (Ziel 1 und 2 haben denselben Azimut), sondern beim allgemeinen Zweiziel-Fall (Ziel 1 und 2 unterscheiden sich in Azimut und Elevation). Das für diese Methode verwendete Radargerät ist ein Amplituden-Monopulsradargerät, bei dem die konventionelle mit vier Antennenhömem (Feeds) versehene Antenne (vgl. E. Brookner, a.a.O., Kapitel 5, Seite 301, Fig. 5.1-3) um 45° gedreht ist (Diamantanordnung der Antennenhörner). Nebst den bisher bekannten Antennensignalen (vgl. E. Brookner, a.a.O., Kapitel 5, Seite 301, Fig. 5.1-3 : Sum, Traverse difference, Elevation difference) wird darin neu ein sogenanntes Crossignal (Cross difference bzw. Kreuztermsignal) verwendet, das der Differenz der beiden Summensignale entspricht, die durch Addition der Signale der einander diagonal gegenüberliegenden Antennenhörner gebildet werden. Anwendbar für diese Methode ist ferner eine Antenne, die drei ein Dreieck bildende Antennenhörner aufweist. Die Crossfeed-Methode basiert daher u.a. auf der Auswertung eines Kreuztermsignals, das durch Differenzbildung von Signalen erzeugt wird, die von Antennenhörnem abgegeben werden, die nicht alle in der Messebene liegen und in der Grundausführung der Crossfeed-Antenne ein Kreuz bilden.

Obwohl das beschriebene (Crossfeed-) Verfahren gegenüber dem konventionellen Monopuls-Verfahren grundlegende Verbesserungen erbrachte, ist unter bestimmten Umständen auch bei diesem Verfahren mit Messfehlern zu rechnen. Falls z.B. ein Flugobjekt in einem Winkel von 45° über der um 45° gedrehten Antenne (Diamantanordnung der Antennenhörner gemäss CH Pat. 592 887, Fig. 2a) erscheint und somit gleiche Ablage in Elevation und Azimut aufweist, wirkt die Antenne in Bezug auf dieses Objekt als konventionelle Monopulsantenne, da das Kreuztermsignal, wie leicht nachgeprüft werden kann, gleich null wird. Bei einer Antennenanordnung mit drei Antennenhömem (A, B, C) gemäss CH Pat. 592 887, Fig. 2c treten zusätzlich Messfehler auf, die stark von der Verschiebung des zu vermessenden Flugobjekts senkrecht zur Messachse und damit senkrecht zur Strecke abhängen, die durch die beiden den Summenanteil des Kreuztermsignals liefernden Hörner (A und C) gebildet wird. Weniger ausgeprägt, aber dennoch spürbar, treten diese Probleme bei der Diamantanordnung der Antennenhömer auf; dabei müssen für eine Messachse statt drei, vier Antennenhörner vorgesehen werden. Bei dieser Anordnungen können Messfehler jedoch nur vermieden werden, wenn die Boresightachse präzise auf das Ziel ausgerichtet wird und die Antennenhörner identische Charakteristiken aufweisen und präzise justiert sind. Dies kann jedoch nur bei Zielfolgeradargeräten mit einem Servokreis und mit einem entsprechend hohen Aufwand erreicht werden. Gemäss E. Brookner, a.a.O., Kapitel 5.1.5, Seite 305 bildet jedoch insbesondere der hohe Aufwand bei der Herstellung und Kalibrierung der Antenne den Hauptnachteil der Monopulstechnik. Die durch den Zweiziel-Fall gestellten zusätzlichen Anforderungen an die Präzision der Antennengeometrie führen zu einem entsprechend hohen Aufwand. Bei nicht optimaler Antennengeometrie werden die oben beschriebenen Probleme insbesondere dann spürbar, wenn die Phasenlage zwischen einem direkt empfangenen und dem reflektierten Echosignal nahe 0° oder 180° ist. Bei einer Anwendung in Such- oder Sekundärradaranlagen wären die resultierenden Fehler in der Zielwinkelbestimmung nicht mehr tolerierbar. Dies wird u.a. in Sherman, S.M., Monopulse Principles and Techniques, Artech House, Norwood, MA, 1984, Seite 340 durch die Feststellung bestätigt, dass das Diagonal-Differenzsignal (bezüglich der Definition dieses Signals, das auch Kreuztermsignal genannt wird, siehe a.a.O. auf Seiten 74 - 75) keinen praktischen Wert für die Bestimmung der Raumwinkel von ein oder zwei Zielen aufweist.

Der vorliegenden Erfindung liegt daher die Aufgabe zugrunde, ein Verfahren und eine Radarvorrichtung anzugeben durch die zwei Flugobjekte unabhängig von ihrer Position innerhalb des Radarstrahls präzise geortet und bezüglich ihrer Lage vermessen werden können. Das zweite Signal kann statt von einem zweiten Flugobjekt auch ein reflektiertes Signal vom ersten Flugobjekt sein.

Diese Aufgabe wird durch die in den Patentansprüchen 1 bzw. 2 sowie 18 bzw. 19 angegebenen Massnahmen gelöst. Vorteilhafte Ausgestaltungen der Erfindung sind in weiteren Ansprüchen angegeben.

Durch das erfindungsgemässe Verfahren können die Echosignale von zwei sich im Antennenstrahl befindenden Flugobjekten aufgelöst und zur Lagebestimmung der Flugobjekte in Azimut und Elevation verwendet werden. Das erfindungsgemässe Verfahren eignet sich als Erweiterung sowohl für Amplituden- wie für Phasen-Monopulsradargeräte, die als Such-, Zielfolge- oder Sekundärradargeräte eingesetzt werden. Von der Position der Flugobjekte innerhalb des Antennenstrahls abhängige Messfehler werden dadurch vermieden. Die erfindungsgemäss vorgesehene Anordnung und Ausprägung der Antennenhömer oder Teilantennen und die Auswertung der davon abgegebenen Signale kann mit verhältnismässig geringem Aufwand realisiert werden. Der Bereich ungünstiger Phasenlagen nahe 0° oder 180° zwischen einem direkt empfangenen und dem dazu korrespondierenden indirekt reflektierten Echosignal oder dem Signal von einem zweiten Ziel, die die Messung ungünstig beeinflussen, wird durch das erfindungsgemässe Verfahren und die Vorrichtung stark vermindert. Insbesondere für Such- und Sekundärradaranlagen ist von Bedeutung, dass dadurch auch bei Zielablagen senkrecht zur Messachse Messfehler vollständig vermieden werden.

Die Erfindung wird nachfolgend anhand von Zeichnungen beispielsweise näher erläutert. Dabei zeigt

- Fig. 1 zwei durch einen Antennenstrahl erfasste Flugobjekte,
- Fig. 2 einen Schnitt durch die Strahlen einer Amplituden-Monopulsantenne mit drei Hömem,
- Fig. 3 einen Schnitt durch die Strahlen einer Amplituden-Monopulsantenne mit fünf Hömem,
- Fig. 4 die Homantenne gemäss Fig. 3 in Verbindung mit einem Parabolreflektor,
- Fig. 5 eine Arrayantenne mit drei Teilantennen für das Amplituden-Monopulsverfahren,
- Fig. 6 die Antennenstrahlen der in Fig. 2 und Fig. 5 gezeigten Antenne,
- Fig. 7 eine Phased-Array-Antenne, innerhalb der drei Teilantennen gebildet werden,
- Fig. 8 die Antennenstrahlen einer Phasen-Monopulsantenne, z.B. einer Phased-Array-Antenne gemäss Fig. 7,
- Fig. 9 ein erfindungsgemässes Monopulsradargerät,
- Fig. 10 die Diagramme von zwei Funktionen, die durch Kombination der von einer erweiterten Monopuls-Antenne abgegebenen Signale gebildet werden,
- Fig. 11 das Diagramm der Beleuchtungsfunktion des Kreuztermsignals (Diagonal-Differenzsignal) mit horizontaler Messachse,

Fig. 12 das Diagramm der normierten Kreuztermfunktion deren Funktionswerte, wie ersichtlich, bei Zielablagen senkrecht zur Messachse nicht konstant sind,

Fig. 13 das Diagramm der Beleuchtungsfunktion J02 der erfindungsgemäss festgelegten Funktion F02 (Messachse horizontal),

Fig. 14 das Diagramm der normierten Funktion gemäss Fig. 13, deren Funktionswerte, wie ersichtlich, bei Zielablagen senkrecht zur Messachse konstant sind,

Fig. 15 das Diagramm der zur Normierung vorgesehenen Summenfunktion,

Fig. 16 das Diagramm der Beleuchtungsfunktionen J01, J02 realisiert mit einer SLS-Antenne,

Fig. 17 eine Waben-Antenne mit Messachsen, die nicht senkrecht aufeinander stehen und

Fig. 18 den Verlauf von bevorzugten Beleuchtungsfunktionen.

Der vorliegenden Erfindung liegt die Erkenntnis zugrunde, dass zur Bestimmung der Ablagewinkel von zwei gleichzeitig von der Monopuls-Antenne erfassten Flugobjekten in einer Dimension (Messachse) wenigstens drei Teilantennen A, B und Ω benötigt werden, deren Signale derart miteinander kombiniert werden, dass zwei voneinander linear unabhängige Funktionen $\underline{F1}(x)$, $\underline{F2}(x)$ (x ist die Zielablage in der gewählten Messdimension, z.B. Azimut) entstehen, die durch seitliche Ablagen der erfassten Flugobjekte senkrecht zur Messachse x nicht beeinflusst werden. Die resultierenden Funktionen $\underline{F1}(x)$ und $\underline{F2}(x)$ (und damit die z.B. durch Kombinationen von Antennenelementen gebildeten Teilantennen und die Kombinationsvorschrift für deren Signale) müssen dabei gewisse im folgenden beschriebene Bedingungen erfüllen.

Für den Fall, dass das erfindungsgemässe Verfahren in zwei Messdimensionen durchgeführt wird, ist zu beachten, dass vorgesehene Messachsen x, y mit Azimut und Elevation übereinstimmen und senkrecht zueinander stehen können. Es ist z.B. jedoch auch möglich, dass die vorgesehenen Messachsen x, y einen spitzen Winkel einschliessen und weder mit Azimut, noch mit Elevation richtungsmässig übereinstimmen. Die Richtung senkrecht zur ersten Messachse x muss daher nicht zwangsläufig der Richtung der zweiten Messachse y entsprechen. In den angegebenen Ausführungsbeispielen, sofern nicht ausdrücklich angegeben, sind die Messachsen x und y senkrecht zueinander und übereinstimmend mit Azimut bzw. Elevation gewählt. Die Dimensionen senkrecht zu den Messdimensionen x und y werden nachstehend mit sx bzw. sy bezeichnet.

Dabei wurde festgestellt, dass zwei voneinander unabhängige Funktionen auch dann gebildet werden können, wenn die Strahlungsdiagramme senkrecht zur Messebene denselben Amplituden- und Phasengang aufweisen und die Achsen $bx_A$, $bx_B$ und $bx_\Omega$ der Teilantennen A, B und Ω demzufolge in dieser Messebene liegen. Beim erweiterten Amplituden-Monopulsverfahren sollen die Teilantennen A, B und Ω, die Strahlen innerhalb der Messebene in unterschiedlicher Richtung empfangen (Squint Beams, die einen Winkelunterschied nur innerhalb der Messebene aufweisen) und die ein gemeinsames Phasenzentrum bzw. einen identischen Phasengang aufweisen. Beim erweiterten Phasen-Monopulsverfahren sollen die Phasenzentren der Teilantennen A, B und Ω bzw. der entsprechenden Subarrays, deren Antennenstrahlen vorzugsweise parallel ausgesendet werden, auf einer Geraden liegen. Bei beiden Verfahren sollen die Teilstrahlen in Ebenen senkrecht zur Messebene gleiche Richtung und Richtcharakteristik aufweisen. In einem späteren Abschnitt wird dargelegt, dass die Forderung für Phasen-Monopulsradargeräte besonders einfach erfüllt werden kann. Auf die Bildung eines Kreuztermsignals (Cross difference) mit Signalanteilen von Antennenhörnern mit zugeordneten Strahlungsrichtungen, die nicht in der Messebene liegen, kann daher verzichtet werden. Seitliche Ablagen (senkrecht zur Messebene) der zu vermessenden Flugobjekte TT1, TT2 beeinflussen daher die in bezug auf die Messebene gewonnen Messresultate nicht. Zudem wird die Messung nicht mehr verunmöglicht, falls eines der Flugobjekte in der Messachse sowie senkrecht dazu die gleiche Ablage aufweist.

Das vorgeschlagene Verfahren teilt sich nun in zwei Teilschritte auf. Erstens werden durch eine speziell gewichtete normierte Linearkombination der von den drei Teilantennen A, B und Ω abgegebenen komplexen Signale $\underline{a}(x)$, $\underline{b}(x)$ und $\underline{\omega}(x)$ zwei komplexe mit den Funktionen $\underline{F1}(x)$ und $\underline{F2}(x)$ korrespondierende Teilsignale $\underline{F1}_{ACT}$ und $\underline{F2}_{ACT}$ gewonnen. Mit komplexen Grössen, die in diesem Dokument unterstrichen dargestellt sind, sind im folgenden immer in Funktion der Zeit stehende sinusförmige Signale konstanter Frequenz oder Verhältnisse von solchen Signalen in Vektordarstellung gemeint. Sie können in zwei Komponenten (Real- und Imaginärteil bzw. Amplitude und Phase) aufgeteilt werden. Die Funktionen $\underline{F1}(x)$ und $\underline{F2}(x)$ sind dabei derart gewählt, dass sie voneinander linear unabhängig sind und im Einziel-Fall Signale ($\underline{F1}_{ACT}$ und $\underline{F2}_{ACT}$) ergeben, die rein reell oder rein imaginär sind. Zweitens werden Gleichungen, welche die Inphase- und die Quadraturkomponenten der beiden im Zweizielfall komplexen Signale $\underline{F1}_{ACT}$ und $\underline{F2}_{ACT}$ sowie die Funktionen $\underline{F1}(x)$ und $\underline{F2}(x)$ selbst enthalten, bezüglich den vier darin enthaltenen Unbekannten gelöst.

Damit zwei Antennenfunktionen $\underline{F1}(x)$, $\underline{F2}(x)$ sich für das erfindungsgemässe Verfahren eignen, sind diese sowie die erweiterte Monopuls-Antenne derart zu wählen:

Forderung 1 dass im Einziel-Fall die Quotienten der von den Teilantennen abgegebenen komplexen Signale unabhängig von der Zielablage senkrecht zur Messebene bzw. Messachse sind,

Forderung 2 dass die für den Einziel-Fall definierten komplexen Antennenfunktionen F1(x), F2(x) entweder rein reell oder rein imaginär sind

Forderung 3 dass die Antennenfunktionspaare F1(x), F2(x) voneinander linear unabhängig sind und

Forderung 4 dass die Antennenfunktionspaare F1(x), F2(x) auf einer Normierung durch Division mit einem gemeinsamen Referenzsignal Fs(x) basieren.

Für die Beschreibung des Erfindungsgegenstandes bedeuten :

| | |
|---|---|
| A, B und Ω: | für die Messung in der ersten Messdimension (z.B. Azimut) verwendete Teilantennen oder aus Antennenelementen bestehende Subarrays |
| C, D und Ω : | für die Messung in der zweiten Messdimension (z.B. Elevation) verwendete Teilantennen oder aus Antennenelementen bestehende Subarrays |
| Ω : | Referenz(-Teil)antenne (ω(x) := Referenzantennenfunktion) |
| a(x), b(x), ω (x) : | Antennenfunktionen der Teilantennen Ω, A, ..., D (in Vektorform), die abhängig von Zielablagen in einer ersten Messachse x sind |
| a2(x,sx), ... : | Antennenfunktionen der Teilantennen Ω, A, ..., D (in Vektorform), die abhängig von Zielablagen in einer Messachse x und einer dazu senkrechten Achse sx sind |
| Σω(x), Σa(x),... : | Amplituden der Teilantennenfunktionen a(x), b(x), ω(x) |
| Φω(x), Φa(x),... : | Phasen der Teilantennenfunktionen a(x), b(x), ω(x) |
| α(x), β(x) : | Phasendifferenz Φa(x) - Φω(x); Φb(x) - Φω(x) |
| A(x),B(x) : | normierte Antennensignale A(x) = a(x) / ω (x); B(x) = b(x) / ω(x) |
| e, h, r, t : | konstante Gewichtungsfaktoren |
| E,G,H,R,S,T | konstante Gewichtungsfaktoren (e, h, r und t) → (E, H, R, und T) |
| F1(x), F2(x) : | rein reell oder rein imaginär gewählte, für den Einziel-Fall ausmessbare erste und zweite durch Linearkombination aus den 3 Teilantennensignalen gewonnene Antennenfunktionen |
| F01(x) : | charakteristischer Funktionsteil von F1(x) = F01(x)/Fs(x) (Zähler) |
| F02(x) : | charakteristischer Funktionsteil von F2(x) = F02(x)/Fs(x) (Zähler) |
| Fs(x) : | Referenzsignal Fs(x) := E * a(x) + G * ω(x) + H * b(x) (für beide Funktionen F1(x), F2(x) gleich) (Nenner) |
| F1p(x), F2p(x) : | Realanteile der Funktionen F1(x), F2(x) |
| F1q(x), F2q(x) : | Quadratur- bzw. Imaginärteile der Funktionen F1(x), F2(x) |
| $F1p_{ACT}$, $F2p_{ACT}$ : | Realanteile der entsprechend den festgelegten Funktionen F1(x), F2(x) im Zweiziel-Fall tatsächlich gemessenen Signale |
| $F1q_{ACT}$, $F2q_{ACT}$ : | Quadratur- bzw. Imaginäranteile der entsprechend den Funktionen F1(x), F2(x) im Zweiziel-Fall tatsächlich gemessenen Signale |
| x1, x2 : | Ablagewinkel zweier Ziele in bezug auf die Boresightachse in der ersten Messdimension (z.B. Azimut) |
| y1,y2 : | Ablagewinkel zweier Ziele in bezug auf die Boresightachse in der zweiten Messdimension (z.B. Elevation) |
| ex1 : | die aus der Richtung x1, y1 des ersten Zieles eintreffende Signalfeldstärke |
| ex2 : | die aus der Richtung x2, y2 des zweiten Zieles eintreffende Signalfeldstärke |
| ρ : | Reflexionsgrad bzw. Signalstärkeverhältnis von zwei Zielen |
| φ : | Phasenwinkel zwischen den aus Richtung x1, y1 und x2, y2 eintreffenden Signalen |
| F12(x1, x2, p, φ) : | : die erste Antennenfunktion für den Zweiziel-Fall |
| F12p(x1, x2, p, φ) : | Realteil der ersten Antennenfunktion für den Zweiziel-Fall |
| F12q(x1, x2, ρ, φ) : | Imaginärteil der ersten Antennenfunktion für den Zweiziel-Fall |
| F22(x1, x2, ρ, φ) : | : die zweite Antennenfunktion für den Zweiziel-Fall |
| F22p(x1, x2, ρ, φ) : | Realteil der zweiten Antennenfunktion für den Zweiziel-Fall |
| F22q(x1, x2, ρ, φ) : | Imaginärteil der zweiten Antennenfunktion für den Zweiziel-Fall |
| F12(y1,y2,ρ,φ) : | die erste Antennenfunktion für den Zweiziel-Fall in einer zweiten Messdimension |
| F22(y1, y2, ρ, φ) | die zweite Antennenfunktion für den Zweiziel-Fall in einer zweiten Messdimension |
| Fs(x1) : | Summen- oder Referenzsignal Fs(x1) := E * a(x1) + G * b(x1) + H * ω(x1) für das erste Ziel |
| Fs(x2) : | Summen- oder Referenzsignal Fs(x2) := E * a(x2) + G * b(x2) + H * ω(x2) für das zweite Ziel |
| N : | Hilfsfaktor (N(x1, x2, ρ) = ρ * Fs(x2)/Fs(x1)) |

Die Funktionen für die zweite Messachse y sind entsprechend gekennzeichnet ($\underline{F1}$(y), $\underline{F2}$(y), etc.).

Die zwei voneinander unabhängigen Funktionen $\underline{F1}$(x) und $\underline{F2}$(x), die zur Bestimmung der Position der Flugobjekte pro Messdimension (in diesem Fall in x-Richtung bzw. in Azimut) benötigt werden, werden wie folgt gebildet :

Die von Teilantennen A, B und Ω einer erweiterten Monopulsantenne abgegebenen Signale $\underline{a2}$(x,sx), $\underline{b2}$(x,sx) und $\underline{\omega2}$(x,sx) sind im allgemeinen von der Lage x eines Flugobjekts bezüglich der Messdimension und der dazu senkrechten Lage sx abhängig. Mit den als Konstanten gewählten Gewichtungsfaktoren r, S, t, e, G und h, die auch negative Werte annehmen können, wird folgender Quotient von gewichteten Linearkombinationen gebildet:

$$\underline{f}(x,sx) = \frac{r * \underline{a2}(x,sx) + S * \underline{\omega2}(x,sx) + t * \underline{b2}(x,sx)}{e * \underline{a2}(x,sx) + G * \underline{\omega2}(x,sx) + h * \underline{b2}(x,sx)} \qquad \text{Formel 1}$$

Es wird nun gefordert, dass die Strahlungsdiagramme der Teilantennen A, B und Ω senkrecht zur Messebene denselben Amplituden- und Phasengang aufweisen. Nach einer Aufteilung in einen von x und (senkrecht dazu) einen von sx abhängigen Anteil der Teilantennenfunktionen $\underline{a2}$(x,sx), $\underline{b2}$(x,sx) und $\underline{\omega2}$(x,sx) gilt :

$$\frac{\underline{a2}(x,sx)}{\underline{\omega2}(x,sx)} = \frac{\underline{a}(x) * \underline{a22}(sx)}{\underline{\omega}(x) * \underline{\omega22}(sx)} = \frac{\underline{a}(x)}{\underline{\omega}\ (x)} * \frac{\underline{a22}(sx)}{\underline{\omega22}(sx)} = \frac{\underline{a}(x)}{\underline{\omega}(x)} * KA \qquad \text{Formel 1a}$$

und

$$\frac{\underline{b2}(x,sx)}{\underline{\omega2}(x,sx)} = \frac{\underline{b}(x) * \underline{b22}(sx)}{\underline{\omega}(x) * \underline{\omega22}(sx)} = \frac{\underline{b}(x)}{\underline{\omega}(x)} * \frac{\underline{b22}(sx)}{\underline{\omega22}(sx)} = \frac{\underline{b}(x)}{\underline{\omega}(x)} * KB \qquad \text{Formel 1b}$$

Diese Ausdrücke sollen nur von Zielabweichungen x entlang der Messachse abhängig sein. Willkürlich wurde zur Normierung die Antennenfunktion $\underline{\omega2}$(x,sx) verwendet. Diese Teilantennenfunktion $\underline{\omega2}$(x,sx) sowie $\underline{\omega}$(x) wird daher als Referenzfunktion und die Teilantenne Ω als Referenzantenne bezeichnet.

Von Zielablagen sx senkrecht zur Messachse bleiben die beiden Quotienten KA und KB unberührt und sind deshalb konstant. Der Bruch in Formel 1 wird nun mit $\underline{\omega2}$(x,sx) gekürzt und die Formeln 1a, 1b werden eingesetzt. Die Gewichtungsfaktoren r, t, e und h werden in der resultierenden Formel dann durch die Faktoren R = r * KA, E = e * KA, T = t * KB und H = h * KB ersetzt. Für die weiteren Ableitungen werden diese als reell angenommen, da sich damit erfindungsgemäss verwendbare Funktionen ergeben. Dadurch erscheinen anstelle der Teilantennenfunktionen $\underline{a2}$(x,sx), $\underline{b2}$(x,sx) und $\underline{\omega2}$(x,sx) anschliessend die ausschliesslich von x abhängigen Teilantennenfunktionen $\underline{a}$(x), $\underline{b}$(x) und $\underline{\omega}$(x).

Es gilt daher für die von der Ablage sx senkrecht zur Messachse unabhängige Vermessung von Winkelablagen x in der Messdimension:

$$\underline{f}(x,sx) = \underline{F}(x) = \frac{R * \frac{\underline{a}(x)}{\underline{\omega}(x)} + S + T * \frac{\underline{b}(x)}{\underline{\omega}(x)}}{E * \frac{\underline{a}(x)}{\underline{\omega}(x)} + G + H * \frac{\underline{b}(x)}{\underline{\omega}(x)}} \qquad \text{Formel 2}$$

Eine Normierung der Teilantennenfunktionen $\underline{a}$(x) und $\underline{b}$(x) mit $\underline{\omega}$(x) ergibt Quotienten $\underline{A}$(x) und $\underline{B}$(x), die unabhängig von Ablagen in der Dimension sx sind:

$$\underline{A}(x) = \underline{a}(x)/\underline{\omega}(x) \qquad \text{Formel 3a}$$

$$\underline{B}(x) = \underline{b}(x)/\underline{\omega}(x) \qquad \text{Formel 3b}$$

Das Einsetzen von $\underline{A}$(x) und $\underline{B}$(x) in Formel 2 ergibt folgende von Ablagen in der Dimension sx unabhängige Antennenfunktion:

$$\underline{F}(x) = \frac{R * \underline{A}(x) + S + T * \underline{B}(x)}{E * \underline{A}(x) + G + H * \underline{B}(x)} \quad \text{Formel 4}$$

Eine für das erfindungsgemasse Verfahren geeignete Antennenfunktion $\underline{F}(x)$ ist daher eine normierte Linearkombination von wenigstens drei Teilantennenfunktionen, welche die obengenannten Bedingungen (Forderung 1) erfüllen. Die vektoriellen Signale der Teilantennenfunktionen $\underline{a}(x)$, $\underline{b}(x)$ und $\underline{\omega}(x)$ werden anschliessend durch ihre Amplitude und Phasenlage dargestellt:

$\underline{\omega}(x)$ : $\Sigma\omega(x)$ ist die Amplitude von $\underline{\omega}(x)$; $\Phi\omega(x)$ ist die Phase von $\underline{\omega}(x)$
$\underline{a}(x)$ : $\Sigma a(x)$ ist die Amplitude von $\underline{a}(x)$; $\Phi a(x)$ ist die Phase von $\underline{a}(x)$
$\underline{b}(x)$ : $\Sigma b(x)$ ist die Amplitude von $\underline{b}(x)$; $\Phi b(x)$ ist die Phase von $\underline{b}(x)$

Die Phasenlagen der Teilantennenfunktionen $\underline{a}(x)$ und $\underline{b}(x)$ werden einfachheitshalber auf die Phasenlage der Referenzfunktion $\underline{\omega}(x)$ bezogen:

Die Phasendifferenz zwischen $\underline{a}(x)$ und $\underline{\omega}$ (x) ist gleich:

$$\alpha(x) = \Phi a(x) - \Phi\omega(x)$$

Die Phasendifferenz zwischen $\underline{b}(x)$ und $\underline{\omega}$ (x) ist gleich:

$$\beta(x) = \Phi b(x) - \Phi\omega(x)$$

Die Amplituden $\Sigma\omega(x)$, $\Sigma a(x)$ sowie $\Sigma b(x)$ und die Phasen $\Phi\omega(x)$, $\Phi a(x)$ sowie $\Phi b(x)$ bzw. $\alpha(x)$ sowie $\beta(x)$ sind abhängig von der Zielablage in der Messachse x. Die vektoriellen Quotienten $\underline{A}(x)$ und $\underline{B}(x)$ können somit durch ihre Länge und Phasenlage dargestellt werden:

$$\underline{A}(x) = \frac{\Sigma a(x)}{\Sigma\omega(x)} * e^{j\alpha} \quad \text{Formel 5a}$$

$$\underline{B}(x) = \frac{\Sigma b(x)}{\Sigma\omega(x)} * e^{j\beta} \quad \text{Formel 5b}$$

Dies eingesetzt in Formel 4 ergibt:

$$\underline{F}(x) = \frac{R * \frac{\Sigma a(x)}{\Sigma\omega(x)} * e^{j\alpha} + S + T * \frac{\Sigma b(x)}{\Sigma\omega(x)} * e^{j\beta}}{E * \frac{\Sigma a(x)}{\Sigma\omega\ (x)} * e^{j\alpha} + G + H * \frac{\Sigma b(x)}{\Sigma\omega(x)} * e^{j\beta}} \quad \text{Formel 6}$$

Diese Funktion kann in Real- und Imaginärteil aufgeteilt werden :

$$\underline{F}(x) = Fp(x) + j\ Fq(x) \quad \text{Formel 7}$$

Durch naheliegende Umformungen können Realteil Fp(x) und Imaginärteil Fq(x) ermittelt werden:

Mit

$$NP = E\ \frac{\Sigma a(x)}{\Sigma\omega(x)}\cos(\alpha) + G + H\ \frac{\Sigma b(x)}{\Sigma\omega(x)}\cos(\beta), \quad \text{Formel 8a}$$

$$NQ = E\ \frac{\Sigma a(x)}{\Sigma\omega(x)}\sin(\alpha) + H\ \frac{\Sigma b(x)}{\Sigma\omega(x)}\sin(\beta), \quad \text{Formel 8b}$$

$$ZP = R\,\frac{\Sigma a(x)}{\Sigma\omega(x)}\cos(\alpha) + S + T\,\frac{\Sigma b(x)}{\Sigma\omega(x)}\cos(\beta) \qquad \text{Formel 8c}$$

und

$$ZQ = R\,\frac{\Sigma a(x)}{\Sigma\omega(x)}\sin(\alpha\,) + T\,\frac{\Sigma b(x)}{\Sigma\omega(x)}\sin(\beta) \qquad \text{Formel 8d}$$

gilt :

$$Fp(x) = \frac{NP * ZP + NQ * ZQ}{NP^2 + NQ^2} \qquad \text{Formel 9a}$$

$$Fq(x) = \frac{NP * ZP + NQ * ZQ}{NP^2 + NQ^2} \qquad \text{Formel 9b}$$

Da oben festgelegt wurde, dass die Funktionen F1(x), F2(x) entweder rein reell oder rein imaginär sein sollen, ist durch geeignete Massnahmen entweder der Zähler des Realteils Fp(x) oder der Zähler des Imaginärteils Fq(x) gleich null zu setzen. NP und NQ dürfen zu diesem Zweck nicht gleichzeitig gleich null gesetzt werden, weil sonst gleichzeitig sowohl Realteil Fp(x) wie Imaginärteil Fq(x) gleich null würden. Soll F(x) rein (rein reell oder rein imaginär) sein, sind entsprechend den Gleichungssätzen G11, ..., G22 vier Fälle möglich :

F(x) reell ($Fp(x) \neq 0$, $Fq(x) = 0$):

$ZQ = 0$, $ZP \neq 0$, $NQ = 0$ und $NP \neq 0$; $Fp(x) = ZP / NP$ Gleichungssatz G11
$ZQ \neq 0$, $ZP = 0$, $NQ \neq 0$ und $NP = 0$; $Fp(x) = ZQ / NQ$ Gleichungssatz G12

F(x) imaginär ($Fp(x) = 0$, $Fq(x) \neq 0$):

$ZQ \neq 0$, $ZP = 0$, $NQ = 0$ und $NP \neq 0$; $Fq(x) = ZQ/NP$ Gleichungssatz G21
$ZQ = 0$, $ZP \neq 0$, $NQ \neq 0$ und $NP = 0$; $Fq(x) = ZP / NQ$ Gleichungssatz G22

Die Gleichungssätze G12 und G22 ergeben Funktionen mit Polen, die für eine Weiterverarbeitung ungünstig sind. Von praktischer Bedeutung sind also Gleichungssatz G11 und Gleichungssatz G21. Für jede der Funktionen F1 (x) und F2(x) muss daher entweder Gleichungssatz G11 oder Gleichungssatz G21 erfüllt sein.

Für das erweiterte Amplituden-Monopulsverfahren, das z.B. mit dem in Fig. 2 dargestellten Antennensystem durchführbar ist, gilt :

Die Funktionen a(x) und b(x) der Elemente A und B sollen sich bezüglich der Phase nicht von der Phase der Funktion ω(x) des Referenzelementes Ω unterscheiden : $\Phi a(x) = \Phi b(x) = \Phi\omega(x)$ und $\alpha(x) = \beta(x) = 0$. Alle Teilantennen A, B und Ω sollen, unabhängig von der Zielrichtung x, idealerweise das gleiche Phasenzentrum aufweisen. Dadurch wird Gleichungssatz G11 unabhängig von der Wahl der Gewichtungsfaktoren immer erfüllt : $Fq(x) = 0$, $ZQ = 0$, $ZP \neq 0$, $NQ = 0$ und $NP \neq 0$. Das Erfüllen von Gleichungssatz G11 mit Einsetzen der Formeln 8a und 8c in Formel 9a ergibt die nachstehende Formel für $Fp(x) = Fp_A(x)$. Die Gewichtungsfaktoren R, S, T, E, G und H können in der nachstehenden Formel, bei der die Zugehörigkeit zum Amplituden-Monopulsverfahren durch den Index A angezeigt ist, für die Funktionen F1(x) und F2(x) frei gewählt werden.

$$Fp_A(x) = \frac{R * \frac{\Sigma a(x)}{\Sigma\omega(x)} + S + T * \frac{\Sigma b(x)}{\Sigma\omega(x)}}{E * \frac{\Sigma a(x)}{\Sigma\omega(x)} + G + H * \frac{\Sigma b(x)}{\Sigma\omega(x)}} \qquad \text{Formel 10}$$

Durch die Wahl geeigneter Gewichtungsfaktoren R, S, T, E, G und H kann einer gewünschten Anordnung und Charakteristik der Teilantennen A, B und Ω Rechnung getragen werden. Anstelle von $Fp_A(x)$ wird nur noch $F_A(x)$ geschrieben.

Mit den bevorzugten Symmetriebedingungen R/T=-1, E/H=1, S=0, $\Sigma a(-x) = \Sigma b(x)$, $\Sigma\omega(-x) = \Sigma\omega(x)$ ergibt sich für eine erste Funktion $F1_A(x)$:

$$F1_A(x) = \frac{R * (\frac{\Sigma a(x)}{\Sigma\omega(x)} - \frac{\Sigma a(-x)}{\Sigma\omega(-x)})}{E * (\frac{\Sigma a(x)}{\Sigma\omega(x)} + \frac{\Sigma a(-x)}{\Sigma\omega(-x)}) + G} \qquad \text{Formel 11}$$

Gemäss Formel 11 ist offensichtlich $F1_A(x) = -F1_A(-x)$. $F1_A(x)$ ist daher eine ungerade Funktion.

Bevorzugte Symmetriebedingungen sind ferner: R/T=1, E/H=1, $\Sigma a(-x)= \Sigma b(x)$, $\Sigma\omega(-x)= \Sigma\omega(x)$ und

$$\frac{S}{R} = -2 * \frac{\Sigma a(0)}{\Sigma\omega(0)} .$$

Dadurch wird die Boresightachse zur Symmetrieachse für die Diagramme des Elementenpaares A, B sowie für das Diagramm des Referenzelementes Ω. Zugleich wird $F2_A(0)$ auf der Boresightachse gleich null. Diese Symmetriebedingungen führen zur zweiten Funktion $F2_A(x)$:

$$F2_A(x) = \frac{R * (\frac{\Sigma a(x)}{\Sigma\omega(x)} + \frac{\Sigma a(-x)}{\Sigma\omega(-x)} - 2 * \frac{\Sigma a(0)}{\Sigma\omega(0)})}{E * (\frac{\Sigma a(x)}{\Sigma\omega(x)} + \frac{\Sigma a(-x)}{\Sigma\omega(-x)}) + G} \qquad \text{Formel 12}$$

Gemäss Formel 12 ist offensichtlich $F2_A(x) = F2_A(-x)$. $F2_A(x)$ ist daher eine gerade Funktion.

Bei der Wahl der Gewichtungsfaktoren ist darauf zu achten, dass die Unabhängigkeit beider Funktionen $\underline{F1}(x)$ und $\underline{F2}(x)$ gewahrt bleibt. Die Funktionen $\underline{F1}(x)$ und $\underline{F2}(x)$ sind hingegen immer voneinander unabhängig wenn eine (z.B. $\underline{F1}(x)$) ungerade und die andere ($\underline{F2}(x)$) gerade ist. Da von den beiden für das Amplituden-Monopulsverfahren beispielsweise angegebenen Funktionen $F1_A(x)$ und $F2_A(x)$ die erste ungerade und die zweite gerade ist, ist neben den Forderungen 1 und 2 auch die eingangs genannte Forderung 3 nach Unabhängigkeit der Funktionen $F1_A(x)$ und $F2_A(x)$ erfüllt. Da die Funktionen $F1_A(x)$ und $F2_A(x)$ denselben Nenner haben, ist auch Forderung 4 erfüllt.

Für das erweiterte Phasen-Monopulsverfahren gilt:

In Fig. 7 ist eine erweiterte Phasen-Monopulsantenne PA1 gezeigt, die für das erfindungsgemässe Verfahren besonders vorteilhaft einsetzbar ist, da Antennenelemente AE der Phased-Array-Antenne PA ohne Schwierigkeiten derart wählbar sind, dass Teilantennen Ω, C, D gebildet werden, deren Phasenzentren auf einer Geraden liegen und deren Hauptstrahlungsachsen $tax_C$, $tax_D$ und $tax_\Omega$, wie in Fig. 8 gezeigt, parallel zueinander in einer Ebene liegen. Die Zonen $Z_\Omega$, $Z_C$, und $Z_D$, deren Phasenzentren erfindungsgemäss anzuordnen sind, werden z.B. wie in Fig. 7 gewählt. Die Antenne PA1 dient z.B. zur Vermessung von Objekten in Elevation. Zur zusätzlichen Vermessung der Lage der Objekte in Azimut sind weitere Teilantennen A, B bzw. Zonen $Z_A$, $Z_B$ vorzusehen, deren Phasenzentren auf einer weiteren Geraden liegen, die z.B. orthogonal zur ersten Geraden angeordnet ist, auf der die Phasenzentren der Teilantennen Ω, C, D liegen. Die Phasenzentren der Teilantennen A und B sollen zudem den gleichen Abstand vom Phasenzentrum der in der Mitte liegenden Teilantenne Ω aufweisen.

Gemäss E. Brookner, a.a.O., Kapitel 5.5.3, Seiten 318 - 319 weisen die von Teilantennen eines Phasen-Monopulsradargerätes empfangenen Signale, die von einem ausserhalb der Boresightachse gelegenen Flugobjekt TT reflektiert wurden, ungleiche Phasen und gleiche Amplituden auf. Beim klassischen Amplituden- und Phasen-Monopulsradargerät weisen die Differenzsignale inbezug auf die Summensignale einen Phasenunterschied von 0° für Amplituden-Monopuls bzw. 90° für Phasen-Monopuls auf. Dieser Sachverhalt ist ebenfalls bei der Bildung der Formeln für elweiterte Monopulsradargeräte entsprechend zu berücksichtigen.

Die Funktionen $\underline{a}(x)$ und $\underline{b}(x)$ der Elemente A und B sollen sich bezüglich Amplitudengang nicht voneinander unterscheiden ($\Sigma a(x) = \Sigma b(x)$). Die bedeutet, dass die Teilantennen A und B denselben Amplitudengang bzw. in der Messachse dasselbe Antennendiagramm aufweisen müssen. Ferner soll gelten: $\Sigma a(x) = \Sigma a(-x)$, $\Sigma b(x) = \Sigma b(-x)$ und $\Sigma\omega(x) = \Sigma\omega(-x)$. Diese Bedingung ist erfüllt, wenn die Hauptstrahlungsrichtungen der drei Teilantennen A, B und Ω zueinander parallel und senkrecht zu einer Geraden liegen, auf der sich die Phasenzentren der Teilantennen A, B und Ω befinden.

Zusätzlich soll folgende Bedingung eingehalten weiden : $\alpha(x) = -\beta(x)$. Diese Bedingung ist erfüllt, wenn die Teilantenne Ω und damit deren Phasenzentrum genau in der Mitte zwischen den Phasenzentren der Teilantennen A und B angeordnet ist. Diese Bedingungen können im Vergleich zum Amplituden-Monopulsverfahren, bei dem alle Teilantennen A, B und Ω dasselbe Phasenzentrum aufweisen sollen, verhältnismässig leicht erfüllt werden. Durch das Berücksichtigen dieser Bedingungen und die entsprechende Wahl der Gewichtungsfaktoren E, G, H, R, S und T in den Formeln 8a bis 8d wird wahlweise Gleichungssatz G11 oder G21 erfüllt. Zur Kennzeichnung der Funktionen des Phasen-Monopulsverfahrens wird der Index $\phi$ verwendet.

Zur Erfüllung des Gleichungssatzes G21 wird vorzugsweise R / T = -1, E / H = 1 und S = 0 gesetzt. Daher gilt : Fp(x) = 0, ZQ ≠ 0, ZP = 0, NQ = 0 und NP ≠ 0. Das Erfüllen von Gleichungssatz G21 und das Einsetzen von Formeln 8a und 8d in Formel 9b ergibt die nachstehende Formel für j*Fq(x) = $\underline{F1}_{\Phi}(x)$

$$\underline{F1}_{\Phi}(x) = j * \frac{2 * R * \frac{\Sigma a(x)}{\Sigma \omega(x)} * \sin(\alpha(x))}{2 * E * \frac{\Sigma a(x)}{\Sigma \omega(x)} * \cos(\alpha(x)) + G} \qquad \text{Formel 13}$$

Die Funktion $\underline{F1}_{\Phi}$ (x) gemäss Formel 13 ist daher ungerade und imaginär.

Zur Erfüllung des Gleichungssatzes G11 wird vorzugsweise R / T = E / H = 1 und zusätzlich

$$\frac{S}{R} = -2 * \frac{\Sigma a(0)}{\Sigma \omega(0)}$$

gesetzt.

Daher gilt: Fq(x)=0, ZQ = 0, ZP ≠ 0, NQ = 0 und NP ≠ 0. Das Erfüllen von Gleichungssatz G11 und das Einsetzen von Formeln 8a und 8c in Formel 9a ergibt die nachstehende Formel für Fp(x) = $F2_{\Phi}(x)$:

$$F2_{\Phi}(x) = \frac{2 * R * \frac{\Sigma a(x)}{\Sigma \omega(x)} * \cos(\alpha(x)\text{- }1)}{2 * E * \frac{\Sigma a(x)}{\Sigma \omega(x)} * \cos(\alpha(x)) + G} \qquad \text{Formel 14}$$

Die Funktion $F2_{\Phi}(x)$ gemäss Formel 14 ist daher gerade und reell, da α(x) ungerade ist. Zugleich wird sie auf der Boresightachse (x=0) zu null.

Die ungerade Funktion $\underline{F1}_{\Phi}(x)$ und die gerade Funktion $\underline{F2}_{\Phi}(x)$ sind voneinander linear unabhängig.

Das gebildete Antennenfunktionspaar ($F1_A(x)$, $F2_A(x)$ bzw. $F1_{\Phi}(x)$, $F2_{\Phi}(x)$), welches die Forderungen 1, 2, 3 und 4 erfüllt, wird für den Einziel-Fall ausgemessen. Die ermittelten Funktionswene werden in einem Speicher abgelegt. Für beispielsweise festgelegte Antennenfunktionen $\underline{F1}(x)$, $\underline{F2}(x)$ ausgemessene Funktionskurven sind in Fig. 10 dargestellt. Eingezeichnet sind ferner die Werte der Antennenfunktionen $\underline{F1}(x)$, $\underline{F2}(x)$ an den Stellen x1 und x2, an denen die Flugobjekte TT1, TT2 stehen.

Aus Formel 2, erweitert mit $\underline{\omega}(x)$ und angewendet auf $\underline{F1}(x)$ ergibt sich :

$$\underline{F1}(x) = \frac{R1 * \underline{a}(x) + S1 * \underline{\omega}(x) + T1 * \underline{b}(x)}{E * \underline{a}(x) + G * \underline{\omega}(x) + H * \underline{b}(x)} \qquad \text{Formel 15}$$

Mit R1, S1 und T1 werden die für die erste Funktion $\underline{F1}(x)$ gewählten Koeffizienten R, S bzw. T bezeichnet. Ein Ziel aus der Richtung x erzeugt die Feldstärke ex. Formel 15 erweitert durch ex ergibt

$$\underline{F1}(x) = \frac{R1 * \underline{a}(x) * ex + S1 * \underline{\omega}(x) * ex + T1 * \underline{b}(x) * ex}{E * \underline{a}(x) * ex + G * \underline{\omega}(x) * ex + H * \underline{b}(x) * ex} = \frac{\underline{F01}(x) * ex}{\underline{Fs(x)} * ex} = \frac{\underline{Z1}}{\underline{No}} \qquad \text{Formel 16}$$

Der Ausdruck $\underline{a}(x)$ * ex ist dann das Signal, das infolge der Feldstärke ex des Zieles aus der Richtung x am Ausgang der Teilantenne A entsteht. Entsprechendes gilt für die Teilantennen B und Ω. Damit steht im Zähler des Ausdrucks gemäss Formel 16 das gesamte aus der gewichteten Summe aufgrund von ex erzeugte Zählersignal $\underline{Z1}$. Desgleichen im Nenner das Nennersignal $\underline{No}$. Entsprechend gilt für die zweite Funktion $\underline{F2}(x)$, die das gleiche Nennersignal $\underline{No}$ wie die erste Funktion $\underline{F1}(x)$aufweist :

$$\underline{F2}(x) = \frac{R2 * \underline{a}(x) * ex + S2 * \underline{\omega}(x) * ex + T2 * \underline{b}(x) * ex}{E * \underline{a}(x) * ex + G * \underline{\omega}(x) * ex + H * \underline{b}(x) * ex} = \frac{\underline{F02}(x) * ex}{\underline{Fs} * ex} = \frac{\underline{Z2}}{\underline{No}} \qquad \text{Formel 17}$$

Falls sich nur ein einzelnes Objekt im Radarstrahl befindet (Einziel-Fall), kann dessen Lage x in der ersten Messdimension x (und analog bei einer Vorrichtung mit zwei Messdimensionen in der zweiten Messdimension y) gemäss dem klassischen Monopulsverfahren bestimmt werden.

Im Zweiziel-Fall werden die im Radargerät gemäss diesen Formeln ermittelten Signalwerte $\underline{F1}_{ACT}$ und $\underline{F2}_{ACT}$

komplex und entsprechen nicht mehr den für den Einziel-Fall aufgenommenen Werten. Zusätzlich zu den reinen Signalanteilen, z.B. $F1p_{ACT}$ und $F2p_{ACT}$, treten z.B. Quadratur-Signalanteile $F1q_{ACT}$ und $F2q_{ACT}$ auf, die zur korrekten Lagebestimmung der beiden Flugobjekte zu berücksichtigen sind. Die entstehenden Signale werden nachfolgend abgeleitet:

Von zwei Zielen aus den Richtungen x1 und x2 werden die Signale mit den Feldstärken $\underline{ex1}$ und $\underline{ex2}$ empfangen, die um den Winkel φ phasenverschoben sind und um den Faktor ρ verschiedene Signalstärken aufweisen. Die Feldstärke $\underline{ex2}$ ist daher: $\underline{ex2} = \underline{ex1} * \rho * e^{j\varphi}$. Da sich die von beiden Zielen empfangenen Signale je in der Zähler- und der Nennerfunktion überlagem, entstehen für den Zweizielfall die Funktionen :

$$\underline{\underline{F12}}(x1,x2,\rho,\varphi) = \frac{\underline{\underline{Z11}} + \underline{\underline{Z12}}}{\underline{N1o} + \underline{N2o}} \qquad \text{Former 101a}$$

$$\underline{\underline{F22}}(x1,x2,\rho,\varphi) = \frac{\underline{\underline{Z21}} + \underline{\underline{Z22}}}{\underline{N1o} + \underline{N2o}} \qquad \text{Formel 101b}$$

Mit

$\underline{Z11} = \underline{F01}(x1) * \underline{ex1}$, $\underline{Z12} = \underline{F01}(x2) * \underline{ex2} = \underline{F01}(x2) * \underline{ex1} * \rho * e^{j\varphi}$,
$\underline{Z21} = \underline{F02}(x1)*\underline{ex1}$, $\underline{Z22} = \underline{F02}(x2) * \underline{ex2} = \underline{F02}(x2)*\underline{ex1} * \rho * e^{j\varphi}$,
$\underline{N1o} = \underline{Fs}(x1) * \underline{ex1}$ und
$\underline{N2o} = \underline{Fs}(x2) * \underline{ex2} = \underline{Fs}(x2)*\underline{ex1} * \rho * e^{j\varphi}$

entsteht durch Einsetzen in den Formeln 101a und 101b:

$$\underline{\underline{F12}}(x1,x2,\rho,\varphi) = \frac{\underline{\underline{F01}}(x1) * \underline{ex1} + \underline{\underline{F01}}(x2) * \underline{ex1} * \rho * e^{j\varphi}}{\underline{Fs}(x1) * \underline{ex1} + \underline{Fs}(x2) * \underline{ex1} * \rho * e^{j\varphi}} \qquad \text{Formel 102a}$$

$$\underline{\underline{F22}}(x1,x2,\rho,\varphi) = \frac{\underline{\underline{F02}}(x1) * \underline{ex1} + \underline{\underline{F02}}(x2) * \underline{ex1} * \rho * e^{j\varphi}}{\underline{Fs}(x1) * \underline{ex1} + \underline{Fs}(x2) * \underline{ex1} * \rho * e^{j\varphi}} \qquad \text{Formel 102b}$$

Das Ersetzen der Funktionsteile $\underline{F01}(x)$ und $\underline{F02}(x)$ durch die Antennenfunktionen $\underline{F1}(x)$ und $\underline{F2}(x)$ gemäss Formel 16 und 17 und Kürzung mit $\underline{ex1}$ ergibt:

$$\underline{\underline{F12}}(x1,x2,\rho,\varphi) = \frac{\underline{\underline{F1}}(x1) * \underline{Fs}(x1) + \rho * e^{j\varphi} * \underline{\underline{F1}}(x2) * \underline{Fs}(x2)}{\underline{Fs}(x1) + \rho * e^{j\varphi} * \underline{Fs}(x2)} \qquad \text{Formel 103}$$

$$\underline{\underline{F22}}(x1,x2,\rho,\varphi) = \frac{\underline{\underline{F2}}(x1) * \underline{Fs}(x1) + \rho * e^{j\varphi} * \underline{\underline{F2}}(x2) * \underline{Fs}(x2)}{\underline{Fs}(x1) + \rho * e^{j\varphi} * \underline{Fs}(x2)} \qquad \text{Formel 104}$$

Das Einsetzen von N(x1, x2, ρ)*$\underline{Fs}$(x1)/$\underline{Fs}$(x2) anstelle von ρ ergibt:

$$\underline{\underline{F12}}(x1,x2,\rho,\varphi) = \frac{\underline{\underline{F1}}(x1) * \underline{Fs}(x1) + N * e^{j\varphi} * \underline{\underline{F1}}(x2) * \underline{Fs}(x1)}{\underline{Fs}(x1) + N * e^{j\varphi} * \underline{Fs}(x1)} \qquad \text{Formel 105}$$

$$\underline{F22}(x1,x2,\rho,\varphi) = \frac{\underline{F2}(x1) * \underline{Fs}(x1) + N * e^{j\varphi} * \underline{F2}(x2) * \underline{Fs}(x1)}{\underline{Fs}(x1) + N * e^{j\varphi} * \underline{Fs}(x1)} \qquad \text{Formel 106}$$

Die Kürzung mit $\underline{Fs}$(x1) ergibt :

$$\underline{F12}(x1,x2,\rho,\varphi) = \frac{\underline{F1}(x1) + N * e^{j\varphi} * \underline{F1}(x2)}{1 + N * e^{j\varphi}} \qquad \text{Formel 107}$$

$$\underline{F22}(x1,x2,\rho,\varphi) = \frac{\underline{F2}(x1) + N * e^{j\varphi} * \underline{F2}(x2)}{1 + N * e^{j\varphi}} \qquad \text{Formel 108}$$

Die komplexen Funktionen $\underline{F1}$(x) und $\underline{F2}$(x) werden nun in ihre Real- und Imaginärkomponenten (p bzw. q) zerlegt:

$$\underline{F1}(x1) = F1p(x1) + j * F1q(x1) \qquad \text{Formel 109a}$$

$$\underline{F1}(x2) = F1p(x2) + j * F1q(x2) \qquad \text{Formel 109b}$$

$$\underline{F2}(x1) = F2p(x1) + j * F2q(x1) \qquad \text{Formel 110a}$$

$$\underline{F2}(x2) = F2p(x2) + j * F2q(x2) \qquad \text{Formel 110b}$$

Für die Funktionen $\underline{F12}$(x1, x2, ρ,φ) und $\underline{F22}$(x1, x2, ρ,φ) gilt daher:

$$\underline{F}12(x1,x2,\rho,\varphi) = \frac{(F1p(x1) + j * F1q(x1)) + N * e^{j\varphi} * (F1p(x2) + j * F1q(x2))}{1 + N * e^{j\varphi}} \qquad \text{Formel 111}$$

$$\underline{F22}(x1,x2,\rho,\varphi) = \frac{(F2p(x1) + j * F2q(x1)) + N * e^{j\varphi} * (F2p(x2) + j * F2q(x2))}{1 + N * e^{j\varphi}} \qquad \text{Formel 112}$$

Die Zerlegung der komplexen Funktionen $\underline{F12}$(x1, x2, ρ,φ) und $\underline{F22}$(x1, x2, ρ,φ) lautet dementsprechend :

$$\underline{F12}(x1, x2, \rho,\varphi) = F12p(x1, x2, \rho,\varphi) + j * F12q(x1, x2, \rho,\varphi) := F1p_{ACT} + j * F1q_{ACT} \qquad \text{Formel 113}$$

$$\underline{F22}(x1, x2, \rho,\varphi) = F22p(x1, x2, \rho,\varphi) + j * F22q(x1, x2, \rho,\varphi) := F2p_{ACT} + j * F2q_{ACT} \qquad \text{Formel 114}$$

Da in den Formeln 113 und 114 die realen Verhältnisse, d.h. das Auftreten eines zweiten Zieles berücksichtigt ist, entsprechen die Real- und Imaginärteile F12p(x1, x2, ρ,φ), F12q(x1, x2, ρ,φ), F22p(x1, x2, ρ,φ) und F12q(x1, x2, ρ,φ) nun den tatsächlich gemessenen (bzw. in Quadraturkanälen gebildeten) Signalwerten $F1p_{ACT}$, $F2p_{ACT}$, $F1q_{ACT}$ und $F2q_{ACT}$, die aus den von den Teilantennen A, B, Ω abgegebenen und entsprechend gewichteten und kombinierten Signalen gebildet werden.

Die Signalwerte $F1p_{ACT}$, $F2p_{ACT}$, $F1q_{ACT}$ und $F2q_{ACT}$ sind daher gleich den Real- und Imaginärteilen F12p (x1, x2, ρ,φ), F12q(x1, x2, ρ,φ), F22p(x1, x2, ρ,φ) und F22q(x1, x2, ρ,φ) der Funktionen $\underline{F12}$(x1, x2, ρ,φ) und $\underline{F22}$(x1,

x2, ρ,φ). Durch Umformung werden nun diese Real- und Imaginärteile F12p(x1, x2, ρ,φ), F12q(x1, x2, ρ,φ), F22p(x1, x2, ρ,φ) und F22q(x1, x2, ρ,φ) näher bestimmt.

Da oben festgelegt wurde, dass die Funktionen $\underline{F1}$(x), $\underline{F2}$(x) entweder rein reell oder rein imaginär sein sollen und die Gewichtungsfaktoren E, G, H, R, S und T dazu entsprechend gewählt wurden, kann für jede Funktion $\underline{F1}$(x) bzw. $\underline{F2}$(x) entweder der Realteil F1p(x), F2p(x) oder der Imaginärteil F1q(x), F2q(x) gleich null gesetzt werden. Die entsprechenden Komponenten sind in den Formeln 111 und 112 daher gleich null zu setzen.

Für erweiterte Amplituden-Monopulsradangeräte wird für beide Funktionen $\underline{F1}$(x) und $\underline{F2}$(x) Gleichungssatz G11 edüllt, so dass F1q(x) und F2q(x) gleich null gesetzt werden (daher $\underline{F1}$(x1) = F1p(x1), $\underline{F1}$(x2) = F1p(x2), $\underline{F2}$(x1) = F2p(x1) und $\underline{F2}$(x2) = F2p(x2)). Für $F1p_{ACT}$, $F1q_{ACT}$ bzw. $F2p_{ACT}$ und $F2q_{ACT}$ gilt in diesem Fall:

$$F1p_{ACT} = \frac{\underline{F1}(x1) + N * \cos\varphi * (\underline{F1}(x1) + \underline{F1}(x2)) + N^2 * \underline{F1}(x2)}{1 + 2 * N * \cos\varphi + N^2} \qquad \text{Formel 115p}$$

$$F1q_{ACT} = \frac{(\underline{F1}(x2) - \underline{F1}(x1)) * N * \sin\varphi}{1 + 2 * N * \cos\varphi + N^2} \qquad \text{Formel 116p}$$

$$F2p_{ACT} = \frac{\underline{F2}(x1) + N * \cos\varphi * (\underline{F2}(x1) + \underline{F2}(x2)) + N^2 * \underline{F2}(x2)}{1 + 2 * N * \cos\varphi + N^2} \qquad \text{Formel 117p}$$

$$F2q_{ACT} = \frac{(\underline{F2}(x2) - \underline{F2}(x1)) * N * \sin\varphi}{1 + 2 * N * \cos\varphi + N^2} \qquad \text{Formel 118p}$$

Falls für die Funktionen $\underline{F1}$(x) Gleichungssatz G21 und für Funktion F2(x) Gleichungssatz G11 erfüllt wird (Phasenmonopuls) und daher F1p(x) und F2p(x) gleich null gesetzt werden ($\underline{F1}$(x1) = j * F1q(x1), $\underline{F1}$(x2) = j * F1q(x2), $\underline{F2}$(x1) = F2p(x1) und $\underline{F2}$(x2) = F2p(x2)), gilt. für $F1p_{ACT}$, $F1q_{ACT}$ bzw. $F2p_{ACT}$ und $F2q_{ACT}$:

$$F1p_{ACT} = j * \frac{(\underline{F1}(x2) - \underline{F1}(x1)) * N * \sin\varphi}{1 + 2 * N * \cos\varphi + N^2} \qquad \text{Formel 115q}$$

$$F1q_{ACT} = -j * \frac{\underline{F1}(x1) + N * \cos\varphi * (\underline{F1}(x1) + \underline{F1}(x2)) + N^2 * \underline{F1}(x2)}{1 + 2 * N * \cos\varphi + N^2} \qquad \text{Formel 116q}$$

$$F2p_{ACT} = \frac{\underline{F2}(x1) + N * \cos\varphi * (\underline{F2}(x1) + \underline{F2}(x2)) + N^2 * \underline{F2}(x2)}{1 + 2 * N * \cos\varphi + N^2} \qquad \text{Formel 117q}$$

$$F2q_{ACT} = \frac{(\underline{F2}(x1) - \underline{F2}(x2)) * N * sin\varphi}{1 + 2 * N * \cos\varphi + N^2} \qquad \text{Formel 118q}$$

Durch Einsetzen der Formeln 115p bis 118p und Ersatz von $\underline{F1}$(x) und $\underline{F2}$(x) durch $F1_A$(x) und $F2_A$(x) (für Amplituden-Monopuls) lässt sich nachweisen, dass für x=x1 und x=x2 die nachstehende Proportion für die Werte x1 und x2 gültig ist:

$$\frac{F1_A(x) - F1_A p_{ACT}}{F1_A q_{ACT}} = \frac{F2_A(x) - F2_A p_{ACT}}{F2_A q_{ACT}} \qquad \text{Formel 119a}$$

Durch Einsetzen der Formeln 115q bis 118q und Ersatz von $\underline{F1}$(x) und $\underline{F2}$(x) durch $\underline{F1}_\phi$ (x) und $F2_\phi$ (x) (für Phasen-Monopuls) lässt sich nachweisen, dass für x=x1 und x=x2 die nachstehende Proportion für die Werte x1 und x2 gültig ist:

$$\frac{-j * \underline{F1}_{\phi}(x) - F1_{\phi} q_{ACT}}{-F1_{\phi} p_{ACT}} = \frac{F2_{\phi}(x) - F2_{\phi} p_{ACT}}{F2_{\phi} q_{ACT}}$$ Formel 119b

Die Werte $F1_A p_{ACT}$, $F1_A q_{ACT}$, $F2_A p_{ACT}$ und $F2_A q_{ACT}$ bzw. $F1_{\phi} p_{ACT}$, $F1_{\phi} q_{ACT}$, $F2_{\phi} p_{ACT}$ und $F2_{\phi} q_{ACT}$ werden gemessen. Durch die Ermittlung der Funktionswerte $F1_A(x)$ und $F2_A(x)$ bzw. $\underline{F1}_{\phi}(x)$ und $F2_{\phi}(x)$, durch die die Gleichung gemäss Formel 119a bzw. 119b erfüllt wird, können die Werte x=x1 und x=x2 ermittelt werden. Z.B. werden zu einem ersten Schätzwert x0 für x1 die dazu korrespondierenden Funktionswerte $\underline{F1}(x0)$ und $\underline{F2}(x0)$ aus dem Diagramm (Fig. 10) oder einer Tabelle ausgelesen. Anschliessend erfolgt eine iterative Annäherung an den korrekten Wert x1. Analog dazu wird x2 ermittelt.

Der Wert von x für das der Boresightachse nähere Ziel kann angenähert auch aus den Formeln 119a, 119b abgeleiteten Formeln 120p bzw. 120q ermittelt werden, indem der Wert für $F2_A(x)$ bzw. $F2_{\phi}(x)$ jeweils gleich $F2_A(0)$ bzw. gleich $F2_{\phi}(0)$ gesetzt wird.

$$F1_A(x) = F1_A p_{ACT} - F2_A p_{ACT} * \frac{F1_A q_{ACT}}{F2_A q_{ACT}} + F2_A(x) * \frac{F1_A q_{ACT}}{F2_A q_{ACT}}$$ Formel 120p

$$-j * \underline{F1}_{\phi}(x) = F1_{\phi} q_{ACT} + F2_{\phi} p_{ACT} * \frac{-F1_{\phi} p_{ACT}}{F2_{\phi} q_{ACT}} - F2_{\phi}(x) * \frac{-F1_{\phi} p_{ACT}}{F2_{\phi} q_{ACT}}$$ Formel 120q

Falls sich nur ein einzelnes Objekt im Radarstrahl befindet (Einziel-Fall), kann dessen Lage x in der ersten Messdimension x (und analog bei einer Vorrichtung mit zwei Messdimensionen in der zweiten Messdimension y) wie folgt bestimmt werden :

$$F1_A(x) = F1_A p_{ACT} \Rightarrow x = F1_A^{-1}(F1_A p_{ACT}) \text{ bzw. } x = F2_A^{-1}(F2_A p_{ACT})$$ Formel 121p

$$-j * \underline{F1}_{\phi}(x) = F1_{\phi} q_{ACT} \Rightarrow x = \underline{F1}_{\phi}^{-1}(j * F1_{\phi} q_{ACT}) \text{ bzw. } x = F2_{\phi}^{-1}(F2_{\phi} p_{ACT})$$ Formel 121q

Das erfindungsgemässe Verfahren erlaubt im Vergleich zum klassischen Monopulsverfahren, daher auch im Einziel-Fall die genaue Ermittlung der Zieldaten, da zur Bestimmung der Zielablagen x,y je zwei Gleichungen zur Verfügung stehen.

Zur Bestimmung der Lage der Flugobjekte TT1 und TT2 in einer weiteren Messdimension werden, wie z.B, in Fig. 3 und Fig. 4 gezeigt (Fig. 4 zeigt einen Schnitt durch eine Parabolantenne), zwei weitere Teilantennen C und D benötigt. Anhand der Teilantennen Ω, C und D kann das erfindungsgemässe Verfahren analog auch für die zweite Messachse (Elevation) vorgenommen werden. Die zentral angeordnete Teilantenne Ω kann als Referenzantenne für beide Messdimensionen dienen. Die Hauptstrahlrichtung der Teilantenne Ω liegt zusammen mit den Hauptstrahlrichtungen der Teilantennen A und B in einer ersten Messebene und zusammen mit den Achsen der Teilantennen C und D in einer zur elsten Ebene vorzugsweise orthogonalen zweiten Messebene. Durch die Anwendung des erfindungsgemässen Verfahrens können daher die Positionen von zwei Flugobjekten TT1 und TT2 sowohl bezüglich Elevation wie Azimut präzise vermessen werden.

In Fig. 5 ist ferner gezeigt, dass aus Antennenelementen AE1, ..., AEn bestehende Teilantennen auch für das Amplituden-Monopulsverfahren vorteilhaft einsetzbar sind. Die Antennenelemente AE1, ..., AEn sind dabei derart anzuordnen und mit vorhandenen Netzwerken AFa und AFb zu verbinden, dass die Hauptstrahlungsrichtungen der Teilantennen wiederum wie in Fig. 6 gezeigt, ausgerichtet werden. Vom Netzwerk AFa wird das Signal $\underline{a}(x)$, vom Netzwerk AFb wird das Signal $\underline{b}(x)$ und vom Antennenelement AE6 das Signal $\underline{\omega}(x)$ abgegeben. Die Gewichtung und Kombination der Antennensignale $\underline{a}(x)$, $\underline{b}(x)$ und $\underline{\omega}(x)$ erfolgt z.B. in einem nachfolgenden Netzwerk.

Fig. 9 zeigt ein Monopulsradargerät, das entweder eine Antenne HA2 oder eine Antenne PA, ein zur Summen- und Differenzbildung sowie zur Gewichtung der Antennensignale $\underline{a}(x)$, $\underline{b}(x)$, $\underline{\omega}(x)$, $\underline{c}(x)$ und $\underline{d}(x)$ vorgesehenes Netzwerk AF, eine zur Quotientenbildung vorgesehene Divisionsstufe NM, die normalerweise auch die Empfangskanäle enthält, einen zur Bildung von Quadraturanteilen vorgesehenen Quadraturdemodulator QG sowie einen mit einer Speichereinheit MEM verbundenen Prozessor PROC aufweist. Netzwerke AF und Demodulator QG sind z.B. aus E. Brookner, a.a.O., Kapitel 5.4.5, Seite 316 (Comparators) und Kapitel 5.6.2, Seite 322 bekannt. Die Quotienten gemäss Formel 16 und 17, die unabhängig von der einfallenden Signalstärke sind, können in der Divisionsstufe NM gebildet werden. Grundsätzlich können die in den Stufen AF, NM, QG ablaufenden Vorgänge auch im Prozessor PROC vollzogen werden. Dazu werden die von den Teilantennen A, B, Ω, C, D abgegebenen Signale verstärkt, demoduliert und digitalisiert dem Prozessor PROC zugeführt. Der Prozessor PROC arbeitet bevorzugt nach dem Pipelineverfahren und weist daher einen hohen Einlesetakt auf. Das Auslesen der Daten erfolgt unter Umständen jedoch um einige Taktzyklen verzögert. Die gespeicherten Funktionen F1, F2 werden vorzugsweise in einem ersten Schritt durch Polynome dritten Grades approximiert und die Gleichungen analytisch gelöst. Die dadurch gefundenen Lösungen werden vorzugsweise als erste Näherungswerte für ein iteratives Verfahren verwendet.

Das Radargerät kann als erweitertes Amplituden- oder als Phasen-Monopulsradargerät ausgebildet sein und wird dementsprechend mit einer der in Fig. 2, Fig. 3, Fig. 5 oder Fig. 7 gezeigten Antennen (z.B. Homantenne HA2 oder Phased-Array-Antenne PA) versehen. Im Netzwerk AF werden die von den Teilantennen A, B, Ω, C, D abgegebenen Signale $\underline{a}(x)$, $\underline{b}(x)$ und $\underline{\omega}(x)$ (bzw. $\underline{c}(y)$, $\underline{d}(y)$ und $\underline{\omega}(y)$) für Zähler und Nenner der Formeln 16 und 17 (bzw. 101a, 101b) individuell gewichtet und addiert. In der Divisionsstufe NM erfolgen die Divisionen der Signale gemäss den Formeln 16 und 17 (bzw. 101a, 101b), so dass am Ausgang dieser Stufe den Funktionen $\underline{F12}$ und $\underline{F22}$ entsprechende Signale vorliegen, die im Demodulator QG in Inphase-Anteile $F1p_{ACT}$, $F2p_{ACT}$ und in Quadratur-Anteile $F1q_{ACT}$, $F2q_{ACT}$ aufgeteilt werden. Die durch diese Massnahmen im Radargerät ermittelten Signale $F1p_{ACT}$, $F1q_{ACT}$, $F2p_{ACT}$ und $F2q_{ACT}$ werden entsprechend der Signalbandbreite abgetastet und dem Prozessor PROC zugeführt, der gemäss Formel 119a bzw. 119b unter Verwendung der im Speicher MEM abgelegten, für den Einziel-Fall ausgemessenen Antennenfunktionen $\underline{F1}(x)$, $\underline{F2}(x)$ die Lösungen x1 und x2 der Gleichungen 119a bzw. 119b bestimmt. Die dadurch bestimmten Ablagewinkel x1 und x2 sowie y1 und y2, die analog zu bestimmen sind, geben präzise Auskunft über die Lage der beiden im Radarstrahl befindlichen Flugobjekte TT1, TT2.

Gemäss Formel 2 gilt für die Funktionen $\underline{F1}(x)$ und $\underline{F2}(x)$:

$$\underline{F1}(x) = \frac{R1 * \underline{a}(x) + S1 * \underline{\omega}(x) + T1 * \underline{b}(x)}{E * \underline{a}(x) + G * \underline{\omega}(x) + H * \underline{b}(x)} = \frac{\underline{F01}(x)}{\underline{Fs}(x)}$$

$$\underline{F2}(x) = \frac{R2 * \underline{a}(x) + S2 * \underline{\omega}(x) + T2 * \underline{b}(x)}{E * \underline{a}(x) + G * \underline{\omega}(x) + H * \underline{b}(x)} = \frac{\underline{F02}(x)}{\underline{Fs}(x)}$$

Geschrieben in Matrixform gilt dementsprechend:

$$\begin{pmatrix} \underline{Fs}(x) \\ \underline{F01}(x) \\ \underline{F02}(x) \end{pmatrix} = \begin{pmatrix} E & G & H \\ R1 & S1 & T1 \\ R2 & S2 & T2 \end{pmatrix} * \begin{pmatrix} \underline{a}(x) \\ \underline{\omega}(x) \\ \underline{b}(x) \end{pmatrix} \text{ oder}$$

$$\begin{pmatrix} \underline{a}(x) \\ \underline{\omega}(x) \\ \underline{b}(x) \end{pmatrix} = \begin{pmatrix} E & G & H \\ R1 & S1 & T1 \\ R2 & S2 & T2 \end{pmatrix}^{-1} * \begin{pmatrix} \underline{Fs}(x) \\ \underline{F01}(x) \\ \underline{F02}(x) \end{pmatrix} \qquad \text{Formel 1000}$$

Grundsätzlich können daher, wie einleitend beschrieben, passende Funktionen $\underline{F1}(x)$, $\underline{F2}(x)$ festgelegt und anschliessend die entsprechenden Antennenstrahlen gemäss Formel 1000 bestimmt werden. Für Array-Antennen, bei denen möglichst von allen Antennenelementen Signalanteile gewonnen werden sollen, ist es jedoch sinnvoller, Beleuchtungsfunktionen $\underline{Js}$, $\underline{J01}$ und $\underline{J02}$ festzulegen und zu optimieren und basierend darauf die Funktionen $\underline{F1}(x)$ und $\underline{F2}(x)$ zu bestimmen. Der Übergang von der Beleuchtungsfunktion $\underline{Js}$; $\underline{J01}$ bzw. $\underline{J02}$, durch die die Gewichtung der Elementarsignale einer Array-Antenne als Funktion des Ortes lx auf dem Array festgelegt wird, zur entsprechenden Antennenfunktion $\underline{Fs}(x)$, $\underline{F01}(x)$ und $\underline{F02}(x)$ erfolgt durch die Founertransformation. Durch Beleuchtungsfunktionen $\underline{Js}$(lx), $\underline{J01}$(lx) und $\underline{J02}$(lx) werden die von den vermessenen Zielen eintreffenden Wellenfronten, die beim Mehrziel-Fall gekrümmt sind, abgetastet bzw. ausgemessen. Falls nur eine kugelförmige bzw. näherungsweise ebene, von einem Ziel stammende Wellenfront zu vermessen wäre, könnte deren Neigung bezüglich der Radarantenne mit einer Beleuchtungsfunktion gemäss dem klassischen Monopulsverfahren (Neigungsmonopuls) bestimmt werden. Zur Vermessung der Krümmung einer von zwei Zielen stammenden Wellenfront wird eine zusätzliche Beleuchtungsfunktion benötigt, die von der ersten linear unabhängig ist. Die Erweiterung des klassischen Monopulsverfahrens durch die Einführung einer zusätzlichen Antennenfunktion wird nachstehend als Kurvatur-Monopulsverfahren bezeichnet. Die Beleuchtungsfunktion J02(lx) wird dabei für eine Messung der Feldkrümmung optimiert. Für die zweidimensionale Summen-Beleuchtungsfunktion gilt demgegenüber js(lx,ly) mit js(lx,0) = Js(lx); js(0,ly)=Js(ly).

Aufbauend auf den eingangs gewonnen Erkenntnissen werden für die Beleuchtungsfunktionen J01, J02 des Kurvatur-Monopulsverfahrens folgende Bedingungen gestellt:

Forderung 1' die normierten Antennenfunktionen F1(x), F2(x) sollen im Einziel-Fall Signale abgeben, die unabhängig von der Zielablage senkrecht zur Messebene bzw. Messachse sind,

Forderung 2' die für den Einziel-Fall definierten komplexen Antennenfunktionen F1(x), F2(x) sollen entweder rein reell oder rein imaginär sein,

Forderung 3' die beiden Beleuchtungsfunktionen J01 (Neigung), J02 (Kurvatur) sollen voneinander linear unabhängig sein,

Forderung 4' zur Normierung der Fourier-transformierten Beleuchtungsfunktionen J01, J02 bzw. der daraus entstehenden Antennenfunktionen F1(x), F2(x) wird eine gemeinsame Referenz-Beleuchtungsfunktion Js bzw. deren Antennenfunktion Fs(x) verwendet,

Durch die Erfüllung dieser Forderungen, die zu den eingangs genannten Forderungen 1, 2, 3 und 4 korrespondieren, werden Antennenfunktionen F1(x), F2(x) erzielt, anhand denen die Auflösung von zwei Zielen bezüglich Lage sowie Signalleistung und Signalphase gelingt. Nach Ermittlung der Antennenfunktionen F1(x), F2(x) erfolgt das erfindungsgemässe Verfahren wie bereits oben beschrieben.

Zur Erzielung der Unabhängigkeit der Beleuchtungsfunktionen J01(1x) und J02(1x) wird vorzugsweise die erste ungerade und die zweite gerade gewählt. Der Verlauf der ungeraden Beleuchtungsfunktion ist bezüglich dem Ursprung des Koordinatensystems punktsymmetrisch. Der Verlauf der geraden Beleuchtungsfunktion ist bezüglich der Ordinate des Koordinatensystems achsensymmetrisch. Durch diese Massnahmen wird die lineare Unabhängigkeit beider Beleuchtungsfunktionen J01(lx) und J02(lx) und somit auch die der Antennenfunktionen F1(x), F2(x) erzielt.

Ferner werden die Extrema von beiden zweidimensionalen Beleuchtungsfunktionen j01(lx,lsx) =J01(lx)*J01s (lsx)) und j02(lx,lsx)=J02(lx)*J02s(lsx)) (sowie der Referenzfunktion js(lx,lsx) =Js(lx)*Jss(lsx))) in der Messebene vorgesehen. Die Verläufe der Beleuchtungsfunktionen J01s(lsx) und J02s(lsx) (sowie der Referenzfunktion Jss(lsx)) bezüglich Zielablagen sx senkrecht zur Messebene sind vorzugsweise symmetrisch zur Messebene vorzusehen. Die Beleuchtungsfunktion Js(lx) die durch Anwendung der Fouriertransformation in die Summen- oder Referenzfunktion Fs(x) übergeht, ist derart zu wählen, dass das Verhältnis F01(x) / Fs(x) bzw. F02(x) / Fs(x) für Ablagen senkrecht zur Messachse konstant bleibt. Dies kann z.B. erzielt werden, indem nebst der Erfüllung der obenerwähnten Bedingungen die Beleuchtungsfunktionen J01s(lsx), J02s(lsx) und Jss(lsx) über die Apertur der Array-Antenne senkrecht zur Messachse Funktionsverläufe aufweisen, die sich nur durch einen Proportionalitätsfaktor unterscheiden. Die aus den zweidimensionalen Beleuchtungsfunktionen j01(lx, lsx), j02(lx,lsx) js(lx,lsx) durch Fourier-Transformation hervorgehenden Antennenfunktonen sind f01(lx, lsx), f02(lx,lsx) fs(lx,lsx).

Falls die Extrema einer Beleuchtungsfunktion (z.B. J02) nicht in der Messebene liegen, kann das dazu korrespondierende Funktionsverhältnis F02(x)/Fs(x) für Ablagen senkrecht zur Messebene nicht konstant gehalten werden.

Beim klassischen Monopulsverfahren ist für jede Messdimension nur eine durch eine Referenzfunktion normierte ungerade Antennenfunktion (Azimut oder Elevation) vorgesehen, die bezüglich Zielablagen senkrecht zur Messrichtung konstante Werte liefern kann. Bei der Normierung der aus dem Stand der Technik bekannten Diagonal-Differenzfunktion oder Kreuztermfunktion mit derselben Referenzfunktion entsteht eine Funktion, die in Abhängigkeit von Zielablagen senkrecht zur Messrichtung unterschiedliche Werte ergibt. Dies ist offenbar einer der Gründe für die obenzitierte Meinung, dass das Diagonal-Differenzsignal keinen praktischen Wert für die Bestimmung der Raumwinkel von ein oder zwei Zielen aufweist.

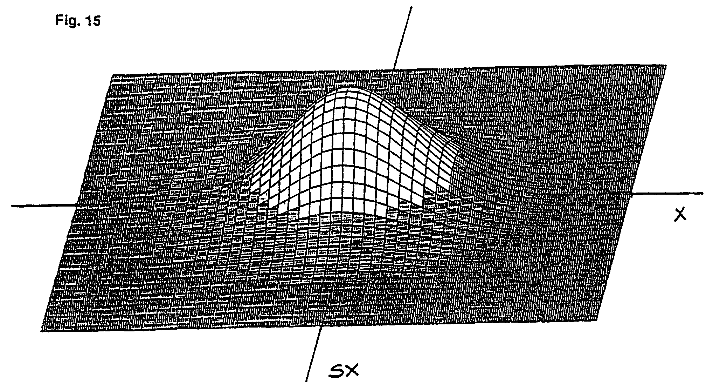

Fig. 11 zeigt das aus Sherman, S.M., Monopulse Principles and Techniques, Artech House, Norwood, MA, 1984, Seite 341, Fig. 12.2-1 bekannte zweidimensionale Muster der Antennenfunktion des Kreuztermsignals (Diagonal-Differenzsignals). Nach der Normierung mit der in Fig. 15 gezeigten Summenfunktion Fs entsteht daraus die normierle Kreuzterm-Funktion, deren zweidimensionales Muster in Fig. 12 gezeigt ist. Daraus ist ersichtlich, dass sich die Werte dieser Kreuzterm-Funktion in Abhängigkeit von Zielablagen x in der Messebene sowie in Abhängigkeit von Zielablagen sx senkrecht zur Messebene ändern. Die aus dem Stand der Technik bekannte Kreuztermfunktion erfüllt die erfindungsgemässe Forderung 3' daher nicht.

Fig. 13 zeigt das zweidimensionale Muster einer erfindungsgemäss festgelegten Beleuchtungsfunktion für eine erfindungsgemäss verwendbare Funktion (z.B. für Fig. 10, Funktion F2(x)). Nach der Fouriertransformation dieser Beleuchtungsfunktion und anschliessender Normierung mit der in Fig. 15 gezeigten Summenfunktion Fs entsteht daraus die normierte Funktion f2(x,sx), deren zweidimensionales Muster in Fig. 14 gezeigt ist. Daraus ist ersichtlich, dass sich die Werte dieser Funktion f2(x,sx) in Abhängigkeit von Zielablagen x in der Messebene ändern. Änderungen der Zielablage sx senkrecht zur Messebene bleiben ohne Einfluss auf die Werte der Funktion f2(x,sx), die demzufolge nur in Abhängigkeit der Argumente x steht f2(x,sx) $\rightarrow$ F2(x). Die erfindungsgemäss festgelegte Funktion F2(x) erfüllt die erfindungsgemässe Forderung 1'.

Die Optimierung der Beleuchtungsfunktionen für das Summen- und das Differenzsignal sind aus dem Stand der Technik bekannt. Als Bewertungskriterium für die Effizienz der zur Messung der Feldkrümmung vorgesehenen geraden Beleuchtungsfunktion ist eine gerade, quadratische Gewichtungsfunktion W2(lx) vorgesehen, deren Mittelwert über der Antennenapertur null ist:

$$W2(lx) = \left(\frac{lx}{lxo}\right)^2 - \frac{1}{3},$$

wobei

$$\int_{-lxo}^{lxo} W2(lx)dlx = 0$$

ist.

lx ist dabei der Ort auf der Antenne vom Zentrum gemessen und lxo der Abstand vom Rand bis zum Zentrum der Antenne. Die Funktion W2 ist ideal zur Vermessung der Krümmung eines Feldes. Sie weist jedoch starke Seitenzipfel auf, die nicht tolerierbar sind. Die Beleuchtungsfunktion J02 soll daher der Funktion W2 soweit angenähert werden, bis die Seitenzipfel das noch tolerierbare Mass erreichen. Es sei nun :

$$P02 = \int_{-lxo}^{lxo} J02(lx)^2\, dlx$$

die Referenzleistung des Kurvaturstrahls und

$$P02m = \left(\int_{-lxo}^{lxo} J02(lx) * W2(lx)dlx\right)^2$$

die Messleistung.

Die Kurvatur-Beleuchtungsfunktion ist nun so zu wählen, dass J02(lx) = J02(-lx) ist. Ferner soll unter Berücksichtigung zulässiger Nebenzipfel P02 maximal sein, wodurch sich eine gute Ankopplung der Antennenelemente ergibt. Ferner soll Q02=P02m/P02 maximal sein. Q02 ist ein Mass für die Effizienz des Antennenstrahls F02 bzw. der Beleuchtungsfunktion J02, die Krümmung des Feldes zu messen. Bevorzugt weist die Beleuchtungsfunktion J02(lx) in der Messdimension zumindest annähernd folgenden in Fig. 18 gezeigten Verlauf auf:

$$J02(lx) = Const * (lx^2 - lx0^2) * e^{\frac{lx^2}{2*lx0^2}} \; ;$$

Diese Funktion entsteht nach der doppelten Ableitung einer für Js(lx) angenommenen Gauss-Funktion. lx0 ist dabei der Ort auf der Apertur, wo die Anregungsamplitude der Gaussfunktion um $1/e^{½}$ bzw. die Anregungsleistung um 1/e gegenüber dem Wert im Zentrum abgenommen hat.

Besonders vorteilhaft ist das erfindungsgemässe Verfahren im Zusammenhang mit Radargeräten anwendbar, die zur Durchführung des Sidelobe Suppression (SLS) - Verfahrens geeignet sind, das z.B. in Richard C. Johnson, Antenna Engineering Handbook, Mc Graw-Hill Book Company, New York 1993, dritte Auflage, Kapitel 33, Seiten 33-6 bis 33-8 beschrieben ist. Zusätzlich zu einem Differenz- und einem Summen-Muster (Difference- and $\Sigma$-Pattern) wird ein Lücken-Muster (Notch-Pattem) verwendet, das aus dem Summen-Muster durch die Phasenumkehrung der Elementarsignale von Antennenelementen hervorgeht, die in der Mitte der Arrayantenne senkrecht zur Messachse eine Säule bilden. Dieses Lücken-Muster weist eine Ähnlichkeit mit dem in Fig. 13 gezeigten Muster der erfindungsgemäss festgelegten Beleuchtungsfunktion J02(lx) auf. Die dem Lücken-Muster entsprechende Beleuchtungsfunktion der SLS-Arrayantenne entspricht nach Fouriertransformation und Normierung mit der Summenfunktion einer erfindungsgemäss verwendbaren geraden Funktion F2(x). Ein Radarsystem, das zur Durchführung Sidelobe Suppression (SLS) - Verfahrens geeignet ist, kann daher praktisch ohne Handwareänderungen der Antenne zu einem zur Durchführung des erfindungsgemässen Verfahrens geeigneten System erweitert werden. Die beiden in einem Radarsystem vorgesehenen Verfahren zur Unterdrückung von Zielsignalen, die über Nebenkeulen empfangen werden, sowie zur Auflösung von zwei Zielen, die durch die Hauptkeulen erfasst werden, ergänzen sich daher in idealer Weise.

Die nach dem erfindungsgemässen Verfahren ermittelten Zielrichtungen können auch zur Steuerung der Antenne verwendet werden. Bei der vorzugsweisen Verwendung von elektronisch steuerbaren Antennen wird das Sendediagramm derart eingestellt, dass in bezug auf die Richtung eines Störsignals oder eines auszublendenden Ziels möglichst kein Signal ausgesendet oder empfangen wird.

Die zur Bestimmung der Zielablagen x1, x2 (bzw. falls vorgesehen y1, y2) im Prozessor vorhandenen Daten können ferner zur Bestimmung des Phasenwinkels φ zwischen den aus Richtung x1, y1 und x2, y2 eintreffenden Signalen verwendet werden. Für die Werte des Differenzkanals des Amplituden-Monopulsverfahrens gilt (Index A und ACT sind nicht geschrieben, z.B. $F1_A q_{ACT} \rightarrow F1q$, $F1_A p_{ACT} \rightarrow F1p$; $F1_A(x) \rightarrow F1(x)$) :

$$\sin\varphi = \frac{-F1q * (F1(x1) - F1(x2))}{\sqrt{F1q^2 + F1(x2)^2 - 2F1(x2) * F1p + F1p^2} * \sqrt{F1q^2 + F1(x1)^2 - 2F1(x1) * F1p + F1p^2}}$$

$$\cos\varphi = \frac{-F1(x1) * F1(x2) - F1(x1) * F1p - F1(x2) * F1p + F1p^2 + F1q^2)}{\sqrt{F1q^2 + F1(x1)^2 - 2F1(x1) * F1p + F1p^2} * \sqrt{F1q^2 + F1(x2)^2 - 2F1(x2) * F1p + F1p^2}}$$

Anhand der Werte von sin φ und cos φ kann der Winkel φ eindeutig bestimmt werden. Ebenso kann der Winkel φ auch mit den Daten des Kurvaturkanals (F1 in den obigen Formeln durch F2 ersetzen) sowie den beim Phasen-Monopulsverfahren verwendeten Daten bestimmt werden. Durch die Messung des Winkels φ können echte Zweiziel-Fälle und Reflexions-Fälle voneinander unterschieden sowie ungünstige Phasenlagen erkannt werden, bei denen der Winkel φ nahe null oder nahe π wird.

Phasendifferenzen φ nahe null oder nahe π können z.B. durch eine Änderung der Sendefrequenz vermieden werden. Bei Reflexionen sind die Phasenänderungen zwischen zwei Messungen typischerweise etwa um den Faktor hundert kleiner als bei Zweiziel-Fällen, bei denen die Transponder von zwei Zielen unterschiedliche Sendefrequenzen aufweisen. Damit können Reflexionen von echten Zweizielfällen unterschieden werden. Zwei Zielen kann zudem jeweils eine Differenzfrequenz (Schwebung) zugeordnet werden, die es erlaubt, dieses Zielpaar zu einem späteren Zeitpunkt wieder zu identifizieren.

Weiterhin können die Verhältnisse L1, L2 der Leistungen der Signale von zwei Zielen aus den Richtungen x1,y1 und x2,y2 im Verhältnis zur Leistung des Summensignals bestimmt werden. Nachstehend wird dies für das Amplituden-Monopulsverfahren ausgewiesen (mit Indexzeichen A):

$$L_A1 = \frac{F1_A q_{ACT}^{\;2} + F1_A(x2)^2 - 2 * F1_A(x2) * F1_A p_{ACT} + F1_A p_{ACT}^{\;2}}{F1_A(x2)^2 - 2 * F1_A(x1) * F1_A(x2) + F1_A(x1)^2};$$

$$L_A2 = \frac{F1_A q_{ACT}^{\;2} + F1_A(x1)^2 - 2 * F1_A(x1) * F1_A p_{ACT} + F1_A p_{ACT}^{\;2}}{F1_A(x2)^2 - 2 * F1_A(x1) * F1_A(x2) + F1_A(x1)^2};$$

Ebenso können die Leistungsverhältnisse $L_A1$, $L_A2$ auch mit den Daten des Kurvaturkanals sowie den beim Phasen-Monopulsverfahren verwendeten Daten bestimmt werden. Aufgrund der gewonnen Daten können die Ziele markiert und danach einfacher verfolgt werden. Falls zwei Ziele durch das erfindungsgemässe Radarsystem (siehe Fig. 9) erfasst werden, können deren Winkeldaten x1,y1 und x2,y2 erfindungsgemäss bestimmt werden. Falls die Ziele z.B. in einem späteren Moment ihre Positionen vertauschen, wird dies nicht erkannt, falls nur die Winkeldaten x1,y1 und x2,y2 bestimmt werden. Falls vor dem Vertauschen jedoch die Leistungsverhältnisse $L_A1$, $L_A2$ bestimmt wurden, können die Ziele auch nach einem Sendeunterbruch wieder eindeutig identifiziert werden.

Sollen aus einer Leistungsmessung des Summensignals und der bestimmten Leistungsverhältnisse L1 und L2 die effektiven antennenunabhängigen zielspezifischen Leistungen bestimmt werden, ist die Richtungscharakteristik des Summendiagramms in der Richtung des betreffenden Ziels im Vergleich mit der Kalibrationsrichtung als Korrekturfaktor zu berücksichtigen.

Die Ermittlung der Leistungsverhältnisse $L_A1$, $L_A2$ und der zielspezifischen Leistungen kann für verschiedene Zwecke äusserst vorteilhaft eingesetzt werden. Einerseits können die Ziele wie oben beschrieben etikettiert werden, wodurch die Verfolgung dieser Ziel deutlich vereinfacht wird. Ferner kann der Reflexionsfaktor bei gespiegelten Zielen ermittelt werden. Ferner kann festgestellt werden, ob ein Ein- oder ein Zweiziel-Fall vorliegt. Falls die Division der Leistungsverhältnisse $L_A1$, $L_A2$ gegen null oder $\infty$ geht, liegt ein Einziel-Fall vor. Falls ein Schwellwert nahe bei null oder $\infty$ unter- bzw. überschritten wird, wird daher das Verfahren zur Ermittlung der Zieldaten gemäss den Formeln (Formel 121) für den Einziel-Fall angewendet. Von Vorteil ist die Ermittlung der Leistungsverhältnisse $L_A1$, $L_A2$ ferner bei der Zielvermessung in zwei Dimensionen. Durch das erfindungsgemässe Verfahren können, wie oben erläutert, Zielablagen x1, x2, y1 und y2 ermittelt werden. Unklar ist vorerst, welche Zielablagen miteinander zu kombinieren sind. Befindet sich das erste Ziel an der Stelle x1, y2 und das zweite Ziel an der Stelle x2, y1 oder befindet sich das erste Ziel an der Stelle x1, y1 und das zweite Ziel an der Stelle x2, y2? Durch die Leistungsmessung kann nun festgestellt werden, welches Paar der Zielablagen x1, y1; x1,y2 bzw. x2, y1; x2,y2 zumindest annähernd dieselben Leistungsverhältnisse $L_A1$ bzw. $L_A2$ aufweist und einem Zielpaar und nicht einem Phantompaar zugehört. Von besonderer Bedeutung ist die Ermittlung der Leistungsverhältnisse $L_A1$, $L_A2$ für die Unterdrückung bzw. Separierungvon Störsignalen (defruiting, degarbeling). Die zugrunde liegenden Einzelsignale können damit identifiziert werden.

Vorteilhaft anwendbar ist ferner die in Fig. 17 gezeigte mit sieben Subarrays versehene Wabenantenne WA, welche ertaubt, zwei Ziele in drei koplanaren Messdimensionen x,y,z zu vermessen und anhand der Messwerte x1, x2, y1, y2, z1, z2 eindeutig zu orten. Die drei Messachsen x,y,z laufen durch die Phasenzentren pz5, pzΩ, pz6; pz3, pzΩ, pz4 bzw. pz1, pzΩ, pz2 von je drei Subarrays und schneiden sich vorzugsweise im Phasenzentrum pzΩ des zentralen Subarrays Ω. Phantom- oder Geistbilder können durch die Verwendung der Messwerte aus der dritten Messdimension vollständig ausgeschaltet werden, ohne dass die Leistungen der einzelnen Signale zu berücksichtigen sind. Dies ergibt den Vorteil, dass die eindeutige Ortung auch möglich ist, wenn die Leistungsverhältnisse beider Zielechosignale gleich sind. Die in Fig. 17 gezeigten Ziele TT1, TT2 liegen dabei an Stellen, die durch Messwerte aus allen drei Messdimensionen bezeichnet sind.

Zur präzisen Zielvermessung ist insbesondere beim Empfang nicht kohärenter Ziele (z.B. bei IFF-Empfang von zwei Transpondersignalen mit leicht voneinander abweichender Frequenz) wichtig, dass die Eingangssignale $F1p_{ACT}$, $F1q_{ACT}$, $F2p_{ACT}$, $F2q_{ACT}$ gleichzeitig abgetastet werden.

Es versteht sich, dass die Vermessung der Zieldaten nach dem erfindungsgemässen Verfahren nur bezüglich Lage x1,y1;x2,y2, nur bezüglich der Phase φ oder nur bezüglich der Leistungsverhältnisse $L_A1$, $L_A2$, jedoch auch beliebig kombiniert erfolgen kann.

## Patentansprüche

1. Verfahren für ein Amplituden- oder Phasen-Monopulsradargerät zur Lagevermessung eines ersten und gegebenenfalls eines zweiten vom Radarstrahl erfassten Ziels (TT1, TT2) aus den Richtungen x1,y1; x2,y2, deren Echosignale sich überlappen, mit einer Horn- oder Arrayantenne (HA; PA), die für eine Messachse x wenigstens drei derart ausgestaltete und angeordnete Teilantennen (A, B, Ω) aufweist, dass mit deren Ausgangssignalen zwei Linearkombinationen $\underline{F01}(x)$ und $\underline{F02}(x)$ gebildet werden können, durch die, nach Normierung mit einer dritten Linearkombination $\underline{Fs}(x)$ von Ausgangssignalen, zwei voneinander linear unabhängige, rein reelle oder rein imaginäre und von Zielablagen senkrecht zur Messachse unabhängige Antennenfunktionen

$$\underline{F1}(x) = \underline{F01}(x)/\underline{Fs}(x) = F1p(x) + j\,F1q(x), \text{ mit } F1p(x) \text{ oder } F1q(x) = 0$$

$$\underline{F2}(x) = \underline{F02}(x)/\underline{Fs}(x) = F2p(x) + j\,F2q(x), \text{ mit } F2p(x) \text{ oder } F2q(x) = 0$$

gebildet werden, dass diese Antennenfunktionen $\underline{F1}(x)$ und $\underline{F2}(x)$ für den Einziel-Fall ausgemessen und die von der Zielablage x abhängigen Funktionswerte gespeichert werden, dass für die vom Radarstrahl erfassten Ziele (TT1, TT2) gemäss den Antennenfunktionen $\underline{F1}(x)$ und $\underline{F2}(x)$ Messwerte

$$\underline{F1}_{ACT} = F1p_{ACT} + F1q_{ACT}, \text{ im Zweiziel-Fall mit } F1p_{ACT} \text{ und } F1q_{ACT} \neq 0,$$

$$\underline{F2}_{ACT} = F2p_{ACT} + F2q_{ACT}, \text{ im Zweiziel-Fall mit } F2p_{ACT} \text{ und } F2q_{ACT} \neq 0$$

ermittelt werden und die nachstehende für das Amplituden- bzw. das Phasen-Monopulsverfahren angegebene Gleichung unter Verwendung der gespeicherten Funktionswerte nach den Zielrichtungen x1 und x2 gelöst wird

$$\frac{F1_A(x) - F1_A p_{ACT}}{F1_A q_{ACT}} = \frac{F2_A(x) - F2_A p_{ACT}}{F2_A q_{ACT}};$$

$$\frac{-j * F1_\phi(x) - F1_\phi q_{ACT}}{-F1_\phi p_{ACT}} = \frac{F2_\phi(x) - F2_\phi p_{ACT}}{F2_\phi q_{ACT}}$$

**2.** Verfahren für ein Amplituden- oder Phasen-Monopulsradargerät zur Lagevermessung eines ersten und gegebenenfalls eines zweiten vom Radarstrahl erfassten Ziels (TT1, TT2) aus den Richtungen x1,y1; x2,y2, deren Echosignale sich überlappen, mit einer Antenne, deren Signale durch drei derart gewählte und zu Antennenfunktionen F01(x), F02(x), Fs(x) transformierte Beleuchtungsfunktionen, von denen die erste J01(lx) zur Messung der Feldneigung, die zweite J02(lx) zur Messung der Feldkrümmung und die dritte Js(lx) zur Messung der Feldintensität vorgesehen ist, erzeugt werden, dass nach Normierung der Antennenfunktionen F01(x), F02(x) mit der Antennenfunktion Fs(x) zwei voneinander linear unabhängige, rein reelle oder rein imaginäre und von Zielablagen senkrecht zur Messachse unabhängige Antennenfunktionen

$$\underline{F1}(x) = \underline{F01}(x)/\underline{Fs}(x) = F1p(x) + j\,F1q(x), \text{ mit } F1p(x) \text{ oder } F1q(x) = 0$$

$$\underline{F2}(x) = \underline{F02}(x)/\underline{Fs}(x) = F2p(x) + j\,F2q(x), \text{ mit } F2p(x) \text{ oder } F2q(x) = 0$$

gebildet werden, dass diese Antennenfunktionen $\underline{F1}(x)$ und $\underline{F2}(x)$ für den Einziel-Fall ausgemessen und die von der Zielablage x abhängigen Funktionswerte gespeichert werden, dass für die vom Radarstrahl erfassten Ziele (TT1, TT2) gemäss den Antennenfunktionen $\underline{F1}$ und $\underline{F2}$ Messwerte

$$\underline{F1}_{ACT} = F1p_{ACT} + F1q_{ACT}, \text{ im Zweiziel-Fall mit } F1p_{ACT} \text{ und } F1q_{ACT} \neq 0,$$

$$\underline{F2}_{ACT} = F2p_{ACT} + F2q_{ACT}, \text{ im Zweiziel-Fall mit } F2p_{ACT} \text{ und } F2q_{ACT} \neq 0$$

ermittelt werden und die nachstehende für das Amplituden- bzw. das Phasen-Monopulsverfahren angegebene Gleichung unter Verwendung der gespeicherten Funktionswerte nach den Zielrichtungen x1 und x2 gelöst wird :

$$\frac{F1_A(x) - F1_A p_{ACT}}{F1_A q_{ACT}} = \frac{F2_A(x) - F2_A p_{ACT}}{F2_A q_{ACT}};$$

$$\frac{-j * F1_\phi(x) - F1_\phi q_{ACT}}{-F1_\phi p_{ACT}} = \frac{F2_\phi(x) - F2_\phi p_{ACT}}{F2_\phi q_{ACT}}$$

**3.** Verfahren nach Anspruch 1 oder 2, **dadurch gekennzeichnet, dass** eine der Funktionen $\underline{F1}(x)$, $\underline{F2}(x)$ gerade und die andere ungerade ist und/oder dass die Hauptstrahlungsrichtungen der drei Teilantennen (A, B, Ω) bzw. die Extrema aller Beleuchtungsfunktionen j01(lx.lsx), j02(lx,lsx), js(lx,lsx) in einer Ebene liegen und/oder dass die Strahlungsdiagramme der drei Teilantennen (A, B, Ω) bzw. die Beleuchtungsfunktionen j01(lx,lsx), j02(lx,lsx), js (lx,lsx) bezüglich Ablagen senkrecht zur Messachse einen geraden Symmetrie-Verlauf aufweisen und/oder dass die Funktionen $\underline{f1}(x,sx)$, $\underline{f2}(x,sx)$, $\underline{fs}(x,sx)$ senkrecht zur Messachse Funktionsverläufe aufweisen, die sich nur durch einen Proportionalitätsfaktor unterscheiden.

**4.** Verfahren nach Anspruch 1, 2 oder 3, durchgeführt mit einer Horn oder einer Arrayantenne (HA; PA) die für die erste Messachse x (z.B. Azimut) eine erste Gruppe von drei Teilantennen bzw. eine erste Gruppe von drei Beleuchtungsfunktionen J01(lx), J02(lx), Js(lx) aufweist und die für eine zweite Messachse y (z.B. Elevation) eine zweite Gruppe von drei Teilantennen (Ω, C, D) bzw. eine zweite Gruppe von drei Beleuchtungsfunktionen J01(ly), J02(ly), Js(ly) aufweist und dass vorzugsweise eine Teilantenne (Ω) bzw. eine Beleuchtungsfunktion js(lx,ly) mit js(lx,0) = Js(lx); js(0,ly)=Js(ly) beiden Gruppen gemeinsam ist.

**5.** Verfahren nach Anspruch 1, 2, 3 oder 4, **dadurch gekennzeichnet, dass** die Zielablagen (x1, x2 bzw. y1, y2) näherungsweise berechnet werden, indem die Funktion F2(x) bzw. F2(y) durch F2(0) ersetzt wird.

**6.** Verfahren nach einem der Ansprüche 1 - 5, **dadurch gekennzeichnet, dass** der Verlauf der für die Krümmungsmessung vorgesehenen geraden Beleuchtungsfunktionen J02(x) bzw. J02(y) wenigstens annähernd dem Verlauf der Funktion:

$$J02(lx) = Const * (lx^2 - lx0^2) * e^{\frac{lx^2}{2*lx0^2}} \text{ bzw. } J02(ly) = Const * (ly^2 - ly0^2) * e^{\frac{ly^2}{2*ly0^2}}$$

entspricht und/oder dass die zur Messung der Feldkrümmung vorgesehene Beleuchtungsfunktion J02(lx) der zweiten Ableitung der zur Messung der Feldintensität vorgesehen Beleuchtungsfunktion Js(lx) entspricht, undloder dass der festgelegte Verlauf der Beleuchtungsfunktion J02(x) bzw. J02(y) dem Verlauf der Funktion

$$W2(lx) = \left(\frac{lx}{lxo}\right)^2 - \frac{1}{3} \text{ bzw. } W2(ly) = \left(\frac{ly}{lyo}\right)^2 - \frac{1}{3}$$

soweit angenähert wird, bis die Seitenzipfel das zulässige Mass erreichen.

**7.** Verfahren nach einem der Ansprüche 1 - 6, **dadurch gekennzeichnet, dass** das Verhältnis der Antennenfunktionen F02(x) / Fs(x) im Einziel-Fall mindestens annähernd zum Quadrat der Winkelablage proportional und/oder auf der Boresightachse (keine Winkelablage) gleich null ist.

**8.** Verfahren nach einem der Ansprüche 1 - 7, **dadurch gekennzeichnet, dass** als Antennenfunktion F02(x) die Control-, SLS- oder Omnidirectional-Beam-Function eines entsprechenden Antennnensystems verwendet wird.

**9.** Verfahren nach einem der Ansprüche 1 - 8, **dadurch gekennzeichnet, dass** die in den Eingangsstufen (AF, NM) des Radargerätes gebildeten Signale $F1_{ACT}$, $F2_{ACT}$ in einer weiteren Stufe (QG) in Inphaseanteile $F1p_{ACT}$, $F2p_{ACT}$ und in Quadraturanteile $F1q_{ACT}$, $F2q_{ACT}$ aufgeteilt und gleichzeitig abgetastet werden.

**10.** Verfahren insbesondere nach einem der Ansprüche 1 - 9, **dadurch gekennzeichnet, dass** die Phasendifferenz φ zwischen aus zwei Richtungen eintreffenden Signalen gemessen und festgestellt wird, ob ein echter Zweiziel-Fall oder ein Reflexions-Fall und/oder, sowie für die Vermessung ungünstige Phasenlagen erkannt werden, bei denen der Winkel φ nahe null oder nahe π wird und die z.B. durch einen Wechsel der Sendefrequenz vermieden werden können

**11.** Verfahren insbesondere nach einem der Ansprüche 1 - 10, **dadurch gekennzeichnet, dass** die Verhältnisse L1, L2 der Leistungen der Signale von zwei Zielen aus den Richtungen x1,y1 und x2,y2 im Verhältnis zur Leistung des Summensignals bestimmt werden, dass im Reflexionsfall anhand der ermittelten Leistungsverhältnisse L1, L2 der Reflexionsfaktor bestimmt wird und/oder dass, falls der durch die Leistungsverhältnisse L1, L2 gebildete Quotient L1/L2 genügend nahe null oder ∞ liegt, die Berechnung der Zieldaten für den Einziel-Fall erfolgt und/oder dass die lokalisierten Ziele mit den zugehörigen Leistungsverhältnissen L1, L2 etikettiert werden, die bei der Verfolgung eines Zieles vorzugsweise mit jedem Messintervall überprüft werden, so dass das betreffende Ziel von weiteren Zielen oder Störquellen unterschieden werden kann und/oder dass die Leistungsverhältnisse $L_A1$, $L_A2$ bei der Zielvermessung in zwei Dimensionen den Zielablagen x1, x2, y1 und y2 zugeordnet werden und anschliessend festgestellt wird, welches Paar der Zielablagen x1, y1; x1 ,y2 bzw. x2, y1; x2,y2 dem ersten und dem zweiten Ziel zugehört.

**12.** Verfahren nach einem der Ansprüche 1 - 11, **dadurch gekennzeichnet, dass** eine elektronisch steuerbare Antenne verwendet wird, deren Sendediagramm vorzugsweise derart eingestellt wird, dass inbezug auf die Richtung eines Störsignals oder eines auszublendenen Ziels möglichst kein Signal ausgesendet und/oder empfangen wird.

**13.** Verfahren nach Anspruch 1 oder nach einem der Ansprüche 1 - 12, **dadurch gekennzeichnet, dass** die Signale der für jede Messrichtung vorgesehenen Teilantennen (A, B, Ω bzw. Ω, C, D) vorzugsweise in einem in der Antenneneinheit vorgesehenen Gewichtungsnetzwerk durch Faktoren R, S, T; E, G und H derart gewichtet werden, dass für jede Messrichtung x;y eine ungerade Neigungsfunktion F01(x); F01(y), eine gerade Kurvaturfunktion F02(x); F02(y) sowie eine Summenfunktion Fs(x); Fs(y) gebildet wird.

**14.** Verfahren nach einem der Ansprüche 1 - 13, **dadurch gekennzeichnet, dass** Beleuchtungsfunktionen j01(lx,lsx); j01(ly,lsy), j02(lx,lsx); j02(ly,lsy), js(lx,lsx); js(ly,lsy) und/oder Antennenfunktionen f01(x,sx); f01(y,sy), f02(x,sx); f02(y,sy), fs(x,sx); fs(y,sy) gewählt werden, die sich als Produkt aus einem Anteil J01(lx); J01(ly), J02(lx); J02(ly) Js(lx); Js(ly) bzw. F01(x); F01(y), F02(x); F02(y), Fs(x); Fs(y) in Messrichtung x,y und einem Anteil J01(lsx); J01(lsy), J02(lsx); J02(lsy), Js(lsx); Js(lsy) in Richtung der Senkrechten lsx,lsy zu lx,ly und Senkrechten sx, sy zur Messrichtung x,y darstellen lassen.

**15.** Verfahren nach einem der Ansprüche 1 - 14, **dadurch gekennzeichnet, dass** die Ermittlung der Zieldaten basierend auf dem Amplituden- undloder dem Phasenmonopulsverfahren erfolgt.

**16.** Verfahren nach einem der Ansprüche 1 - 15, **dadurch gekennzeichnet, dass** für die Ermittlung der Zieldaten im Einziel-Fall wenigstens eine der nachstehenden Gleichungen verwendet wird

für das Amplitudenmonopulsverfahren $x = F1_A^{-1}(F1_A p_{ACT})$ und/oder $x = F2_A^{-1}(F2_A p_{ACT})$

für das Phasenmonopulsverfahren $x = \underline{F1}_\phi^{-1}(j * F1_\phi q_{ACT})$ und/oder $x = F2_\phi^{-1}(F2_\phi p_{ACT})$.

**17.** Verfahren nach einem der Ansprüche 1 - 16, **dadurch gekennzeichnet, dass** die Messung vorzugsweise mit einer Bienenwabenantenne mit sieben Subarrays für drei in einer Ebene liegende Messdimensionen x, y und z durchgeführt und festgestellt wird, welche Zielrichtungen aufgrund der Messungen in den drei Messdimensionen x, y und z übereinstimmend festgelegt werden können.

**18.** Amplituden- oder Phasen-Monopulsradargerät zur Lagevermessung eines ersten und gegebenenfalls eines zweiten vom Radarstrahl erfassten Ziels (TT1, TT2) aus den Richtungen x1,y1; x2,y2, deren Echosignale sich überlappen, mit einer Horn- oder Arrayantenne (HA; PA), die für eine erste Messachse x wenigstens drei derart ausgestaltete und angeordnete Teilantennen (A, B, Ω) aufweist, dass mit deren Ausgangssignalen zwei Linearkombinationen F01(x) und F02(x) formbar sind, durch die, nach Normierung mit einer dritten Linearkombination Fs(x) von Ausgangssignalen, zwei voneinander linear unabhängige, rein reelle oder rein imaginäre und von Zielablagen senkrecht zur Messachse unabhängige Antennenfunktionen

$$\underline{F1}(x) = \underline{F01}(x)/\underline{Fs}(x) = F1p(x) + j\ F1q(x), \text{ mit } F1p(x) \text{ oder } F1q(x) = 0$$

$$\underline{F2}(x) = \underline{F02}(x)/\underline{Fs}(x) = F2p(x) + j\ F2q(x), \text{ mit } F2p(x) \text{ oder } F2q(x) = 0$$

gebildet werden, dass eine Speichereinheit (MEM) vorgesehen ist, in die die Funktionswerte der für den Einziel-Fall ausgemessenen Antennenfunktionen F1(x) und F2(x) gespeichert sind, dass für die vom Radarstrahl erfassten Ziele (TT1, TT2) gemäss den Antennenfunktionen F1 und F2 Messwerte

$$\underline{F1}_{ACT} = F1p_{ACT} + F1q_{ACT}, \text{ im Zweiziel-Fall mit } F1p_{ACT} \text{ und } F1q_{ACT} \neq 0,$$

$$\underline{F2}_{ACT} = F2p_{ACT} + F2q_{ACT}, \text{ im Zweiziel-Fall mit } F2p_{ACT} \text{ und } F2q_{ACT} \neq 0$$

ermittelbar sind und dass ein Rechner (PROC) vorgesehen ist, der zur Lösung nach x1 und x2 der nachstehenden für das Amplituden- bzw. das Phasen-Monopulsverfahren angegebenen Gleichung vorgesehen ist:

$$\frac{F1_A(x) - F1_A p_{ACT}}{F1_A q_{ACT}} = \frac{F2_A(x) - F2_A p_{ACT}}{F2_A q_{ACT}};$$

$$\frac{-j * F1_\phi(x) - F1_\phi q_{ACT}}{-F1_\phi p_{ACT}} = \frac{F2_\phi(x) - F2_\phi p_{ACT}}{F2_\phi q_{ACT}}$$

**19.** Amplituden- oder Phasen-Monopulsradargerät zur Lagevermessung eines ersten und gegebenenfalls eines zweiten vom Radarstrahl erfassten Ziels (TT1, TT2) aus den Richtungen x1,y1; x2,y2, deren Echosignale sich überlappen, mit einer Antenne, deren Signale durch drei derart gewählte und zu Antennenfunktionen F01(x), F02(x), Fs(x) transformierte Beleuchtungsfunktionen, von denen die erste J01(lx) zur Messung der Feldneigung, die zweite J02(lx) zur Messung der Feldkrümmung und die dritte Js(lx) zur Messung der Feldintensität vorgesehen ist, erzeugt werden, dass nach Normierung der Antennenfunktionen F01(x), F02(x) mit der Antennenfunktion Fs(x) zwei voneinander linear unabhängige, rein reelle oder rein imaginäre und von Zielablagen senkrecht zur Messachse unabhängige Antennenfunktionen

$$\underline{F1}(x) = \underline{F01}(x)/\underline{Fs}(x) = F1p(x) + j\, F1q(x), \text{ mit } F1p(x) \text{ oder } F1q(x) = 0$$

$$\underline{F2}(x) = \underline{F02}(x)/\underline{Fs}(x) = F2p(x) + j\, F2q(x), \text{ mit } F2p(x) \text{ oder } F2q(x) = 0$$

gebildet werden, dass eine Speichereinheit (MEM) vorgesehen ist, in die die Funktionswerte der für den Einziel-Fall ausgemessenen Antennenfunktionen $\underline{F1}(x)$ und $\underline{F2}(x)$ gespeichert sind, dass für die vom Radarstrahl erfassten Ziele (TT1, TT2) gemäss den Antennenfunktionen $\underline{F1}$ und $\underline{F2}$ Messwerte

$$\underline{F1}_{ACT} = F1p_{ACT} + F1q_{ACT}, \text{ im Zweiziel-Fall mit } F1p_{ACT} \text{ und } F1q_{ACT} \neq 0,$$

$$\underline{F2}_{ACT} = F2p_{ACT} + F2q_{ACT}, \text{ im Zweiziel-Fall mit } F2p_{ACT} \text{ und } F2q_{ACT} \neq 0$$

ermittelbar sind und dass ein Rechner (PROC) vorgesehen ist, der zur Lösung nach x1 und x2 der nachstehenden für das Amplituden- bzw. das Phasen-Monopulsverfahren angegebenen Gleichung vorgesehen ist :

$$\frac{F1_A(x) - F1_A p_{ACT}}{F1_A q_{ACT}} = \frac{F2_A(x) - F2_A p_{ACT}}{F2_A q_{ACT}};$$

$$\frac{-j * F1_\phi(x) - F1_\phi q_{ACT}}{-F1_\phi p_{ACT}} = \frac{F2_\phi(x) - F2_\phi p_{ACT}}{F2_\phi q_{ACT}}$$

**20.** Monopulsradargerät nach Anspruch 18 oder 19, **dadurch gekennzeichnet, dass** eine der Funktionen $\underline{F1}(x)$, $\underline{F2}(x)$ gerade und die andere ungerade ist und/oder dass die Hauptstrahlungsrichtungen der drei Teilantennen (A, B, Ω) bzw. die Extrema aller Beleuchtungsfunktionen j01(lx,lsx), j02(lx,lsx), js(lx,lsx) in einer Ebene liegen und/oder dass die Strahlungsdiagramme der drei Teilantennen (A, B, Ω) bzw. die Beleuchtungsfunktionen j01(lx,lsx), j02(lx, lsx), js(lx,lsx) bezüglich Ablagen senkrecht zur Messachse einen geraden Symmetrie-Verlauf aufweisen und/oder dass die Funktionen $\underline{f1}(x,sx)$, $\underline{f2}(x,sx)$, $\underline{fs}(x,sx)$ senkrecht zur Messachse Funktionsverläufe aufweisen, die sich nur durch einen Proportionalitätsfaktor unterscheiden.

**21.** Monopulsradargerät nach Anspruch 18, 19 oder 20, **dadurch gekennzeichnet, dass** eine Hom oder eine Arrayantenne (HA; PA) vorgesehen ist, die für die erste Messachse x (z.B. Azimut) eine erste Gruppe von drei Teilantennen bzw. eine erste Gruppe von drei Beleuchtungsfunktionen J01(lx), J02(lx), Js(lx) aufweist und die für eine zweite Messachse y (z.B. Elevation) eine zweite Gruppe von drei Teilantennen (Ω, C, D) bzw. eine zweite Gruppe von drei Beleuchtungsfunktionen J01(ly), J02(ly), Js(ly) aufweist und dass vorzugsweise eine Teilantenne (Ω) bzw. eine Beleuchtungsfunktion js(lx,ly) mit js(lx,0) = Js(lx); js(0,ly)=Js(ly) beiden Gruppen gemeinsam ist.

**22.** Monopulsradargerät nach Anspruch 19, 20 oder 21, **dadurch gekennzeichnet, dass** der Verlauf der für die Krümmungsmessung vorgesehenen gerade Beleuchtungsfunktionen J02(x) bzw. J02(y) wenigstens annähernd dem Verlauf der Funktion:

$$J02(lx) = Const * (lx^2 - lx0^2) * e^{\frac{lx^2}{2*lx0^2}} \text{ bzw. } J02(ly) = Const * (ly^2 - ly0^2) * e^{\frac{ly^2}{2*ly0^2}}$$

entspricht und/oder dass die zur Messung der Feldkrümmung vorgesehene Beleuchtungsfunktion J02(lx) der zweiten Ableitung der zur Messung der Feldintensität vorgesehen Beleuchtungsfunktion Js(lx) entspricht, und/oder dass der festgelegte Verlauf der Beleuchtungsfunktion J02(x) bzw. J02(y) dem Verlauf der Funktion

$$W2(lx) = \left(\frac{lx}{lxo}\right)^2 - \frac{1}{3} \text{ bzw. } W2(ly) = \left(\frac{ly}{lyo}\right)^2 - \frac{1}{3}$$

unter Berücksichtigung der zulässigen Seitenzipfel angenähert ist.

**23.** Monopulsradargerät nach einem der Ansprüche 18 - 22, **dadurch gekennzeichnet, dass** die Antenne eine Control-, SLS- oder Omnidirectional-Beam-Function aufweist, die als Kurvaturfunktion $\underline{F02}$(x) bzw. $\underline{F02}$(y) verwendet wird.

**24.** Monopulsradargerät nach einem der Ansprüche 18 - 23, **dadurch gekennzeichnet, dass** die Phasendifferenz φ zwischen aus zwei Richtungen eintreffenden Signalen und/oder die Verhältnisse L1, L2 der Leistungen der Signale von zwei Zielen aus den Richtungen x1,y1 und x2,y2 im Verhältnis zur Leistung des Summensignals mess- und auswertbar sind.

**25.** Monopulsradargerät nach einem der Ansprüche 18 - 24, **dadurch gekennzeichnet, dass** die Antenne (PA) elektronisch derart steuerbar und deren Sendediagramm vorzugsweise derart einstellbar ist, dass inbezug auf die Richtung eines Störsignals oder eines auszublendenden Ziels möglichst kein Signal ausgesendet und/oder empfangen wird.

**26.** Monopulsradargerät nach Anspruch 18 - 25, **dadurch gekennzeichnet, dass** ein Netzwerk (AF) sowie eine Divisionsstufe (NM) vorgesehen sind, die aus den Ausgangssignalen der Teilantennen (A, B, Ω bzw. Ω, C, D) die Signale $\underline{F1}_{ACT}$, $\underline{F2}_{ACT}$ bilden und dass in einer weiteren Stufe (QG) in Inphaseanteile $F1p_{ACT}$, $F2p_{ACT}$ und in Quadraturanteile $F1q_{ACT}$, $F2q_{ACT}$ aufgeteilt werden.

**27.** Monopulsradargerät nach einem der Ansprüche 18 - 26, **dadurch gekennzeichnet, dass** die Amplituden-Monopulsantenne für jede Messachse x;y drei Teilantennen (A, B, Ω bzw. Ω, C, D) aufweist, die je ein gemeinsames Phasenzentrum aufweisen und deren Strahlungsachsen für jede Messachse in einer Ebene liegen bzw. dass die Phasen-Monopulsantenne für jede Messachse x;y drei Teilantennen (A, B, Ω bzw. Ω, C, D) aufweist, deren Phasenzentren für jede Messachse auf einer gemeinsamen Geraden liegen und deren Strahlungsachsen parallel zueinander verlaufen.

**28.** Monopulsradargerät nach einem der Ansprüche 18 - 27, **dadurch gekennzeichnet, dass** die Amplituden-Monopulsantenne bzw. die Phasen- Monopulsantenne eine Array-Antenne mit mehreren Antennenelementen (AE) ist, die einzeln oder zusammengefasst in Gruppen zur Bildung der Teilantennen (A, B, Ω bzw. Ω, C, D) vorgesehen sind.

**29.** Monopulsradargerät nach einem der Ansprüche 18 - 28, **dadurch gekennzeichnet, dass** die Phasenzentren der Teilantennen (A, B und Ω bzw. C, D und Ω) derart angeordnet sind, dass das Phasenzentrum der Teilantenne (Ω) mit gleichen Abständen zwischen den Phasenzentren der Teilantennen (A und B und/oder C und D) eingeschlossen ist und/oder dass die Strahlungsachsen der Teilantennen (A und Ω bzw. C und Ω) den gleichen Winkel einschliessen wie die Achsen der Teilantennen (Ω und B bzw. Ω und D) und/oder dass die Diagramme der Teilantennen (A und B bzw. C und D) einen zumindest annähemd gleichen Amplitudenverlauf aufweisen und/oder dass die Diagramme der Teilantennen (A und B bzw. C und D) zur Boresightachse eine gerade Symmetrie aufweisen und das Diagramm der Teilantenne (Ω) die Boresightachse bx der erweiterten Monopulsantenne (HA, PA) als Achse für eine gerade Symmetrie enthält.

**30.** Monopulsradargerät nach einem der Ansprüche 18 - 29 zur Vermessung der Ziele in drei Winkel-Dimensionen, **dadurch gekennzeichnet, dass** die Antenne (WA) die Form einer Bienenwabe mit vorzugsweise sieben Subarrays aufweist, durch deren Phasenzentren pz5, pzΩ, pz6; pz3, pzΩ, pz4 bzw. pz1, pzΩ, pz2 drei sich im Phasenzentrum pzΩ des zentralen Subarrays schneidende Messachsen x,y,z verlaufen.

**31.** Monopulsradargerät nach einem der Ansprüche 18 - 30, **dadurch gekennzeichnet, dass** ein Prozessor (PROC) vorgesehen ist, der nach dem Pipelineverfahren arbeitet und/oder der die gespeicherten Funktionen F1, F2 in einem ersten Schritt durch Polynome dritten Grades approximiert und die Gleichungen analytisch löst und/oder der die dadurch gefundenen Lösungen vorzugsweise als erste Näherung für ein iteratives Verfahren verwendet.

## Claims

**1.** Method for an amplitude or phase monopulse radar for position measurement of a first and, if necessary, a second target (TT1, TT2) from directions x1, y1; x2, y2, detected by the radar beam whose echo signals overlap, with a horn or array antenna (HA; PA) which has at least three subantennas (A, B, Ω) for a measured axis x equipped and arranged such that two linear combinations $\underline{F01}(x)$ and $\underline{F02}(x)$ can be formed by their output signals, by means of which, after standardisation with a third linear combination $\underline{Fs}(x)$ of output signals, two purely real or purely imaginary antenna functions

$$\underline{F1}(x) = \underline{F01}(x)/\underline{Fs}(x) = F1p(x) + j\,F1q(x), \text{ with } F1p(x) \text{ or } F1q(x) = 0$$

$$\underline{F2}(x) = \underline{F02}(x)/\underline{Fs}(x) = F2p(x) + j\,F2q(x), \text{ with } F2p(x) \text{ or } F2q(x) = 0$$

are formed, which are linearly independent of each other and independent of target deviations perpendicular to the measured axis, that these antenna functions $\underline{F1}(x)$ and $\underline{F2}(x)$ are measured for the single-target case and the function values depending on the target deviation x are stored, that for the targets (TT1, TT2) detected by the radar beam in accordance with the antenna functions $\underline{F1}(x)$ and $\underline{F2}(x)$ measured values

$$\underline{F1}_{ACT} = F1p_{ACT} + F1q_{ACT}, \text{ in the two-target case with } F1p_{ACT} \text{ and } F1q_{ACT} \neq 0$$

$$\underline{F2}_{ACT} = F2p_{ACT} + F2q_{ACT}, \text{ in the two-target case with } F2p_{ACT} \text{ and } F2q_{ACT} \neq 0$$

are determined and the following equation given for the amplitude or phase monopulse method is solved using the stored function values in accordance with target directions x1 and x2.

$$\frac{F1_A(x) - F1_A p_{ACT}}{F1_A q_{ACT}} = \frac{F2_A(x) - F2_A p_{ACT}}{F2_A q_{ACT}};$$

$$\frac{-j * F1_\phi(x) - F1_\phi q_{ACT}}{-F1_\phi\, p_{ACT}} = \frac{F2_\phi(x) - F2_\phi\, p_{ACT}}{F2_\phi q_{ACT}}$$

**2.** Method for an amplitude or phase monopulse radar system for position measurement of a first, and if necessary a second, target (TT1, TT2) from directions x1, y1; x2, y2, detected by the radar beam whose echo signals overlap, with an antenna whose signals are generated by three illumination functions chosen in such a way and transformed to antenna functions F01(x), F02(x), Fs(x), of which the first J01(lx) is provided for measurement of the field slope, second J02(lx) for measurement of the field curvature and the third Js(lx) for measurement of the field intensity, that after standardisation of the antenna functions F01(x), F02(x) with the antenna function Fs(x) two purely real or purely imaginary antenna functions

$$\underline{F1}(x) = \underline{F01}(x)/\underline{Fs}(x) = F1p(x) + jF1q(x), \text{ with } F1p(x) \text{ or } F1q(x) = 0$$

$$\underline{F2}(x) = \underline{F02}(x)/\underline{Fs}(x) = F2p(x) + j\,F2q(x), \text{ with } F2p(x) \text{ or } F2q(x) = 0$$

which are linearly independent of each other and independent of target deviations perpendicular to the measuring axis are formed, that these antenna functions $\underline{F1}(x)$ and $\underline{F2}(x)$ are measured for the single-target case and the function values relative to target deviation x are stored, that for the targets (TT1, TT2) detected by the radar beam in accordance with the antenna functions $\underline{F1}$ and $\underline{F2}$ measured values

$$\underline{F1}_{ACT} = F1p_{ACT} + F1q_{ACT}, \text{ in the two-target case with } F1p_{ACT} \text{ and } F1q_{ACT} \neq 0$$

$$\underline{F2}_{ACT} = F2p_{ACT} + F2q_{ACT}, \text{ in the two-target case with } F2p_{ACT} \text{ and } F2q_{ACT} \neq 0$$

are determined and the following equation given for the amplitude or phase monopulse method is solved using the stored function values in accordance with target directions x1 and x2.

$$\frac{F1_A(x) - F1_A p_{ACT}}{F1_A q_{ACT}} = \frac{F2_A(x) - F2_A p_{ACT}}{F2_A q_{ACT}};$$

$$\frac{-j * F1_\phi(x) - F1_\phi q_{ACT}}{-F1_\phi p_{ACT}} = \frac{F2_\phi(x) - F2_\phi p_{ACT}}{F2_\phi q_{ACT}}$$

**3.** Method in accordance with claims 1 or 2, characterised in that one of the functions $\underline{F1}(x)$, $\underline{F2}(x)$ is even and the other is odd and/or that the main beam directions of the three subantennas (A, B, Ω) or the extreme values of all illumination functions j01(lx,lsx), j02(lx,lsx), js(lx,lsx) lie in one plane and/or that the radiation diagrams of the three subantennas (A, B, Ω) or the illumination functions j01(lx,lsx), j02(lx,lsx), js(lx,lsx) have a straight symmetrical pattern relative to deviations perpendicular to the measured axis and/or that the functions $\underline{f1}$(x,sx), $\underline{f2}$(x,sx), $\underline{fs}$(x, sx) have function patterns perpendicular to the measured axis, which differ from each other only by a proportionality factor.

**4.** Method in accordance with claims 1, 2 or 3, performed with a horn or antenna array (HA; PA) which for the first measured axis x (e.g. azimuth) has a first group of three subantennas or a first group of three illumination functions J01(lx), J02(lx) Js(lx) and which for a second measured axis y (e.g. elevation) has a second group of three subantennas (Ω, C, D) or a second group of three illumination functions J01(ly), J02(ly), Js(ly) and that preferably one subantenna (Ω) or one illumination function js(lx,ly) with js(lx,0) = Js(lx); js(0,ly) = Js(ly) is common to both groups.

**5.** Method in accordance with claims 1, 2, 3 or 4, characterised in that the target deviations (x1, x2 or y1, y2) can be approximately calculated in that the functions F2(x) or F2(y) are replaced by F2(0).

**6.** Method in accordance with one of claims 1 to 5, characterised in that the pattern of the even illumination functions J02(x) or J02(y) provided for measurement of the curvature correspond at least approximately to the pattern of function

$$J02(lx) = Const*(lx^2 - lx0^2)* e^{\frac{lx^2}{2*lx0^2}} \text{ or } J02(ly) = Const*(ly^2 - ly0^2)* e^{\frac{ly^2}{2*ly0^2}}$$

and/or that the illumination function J02(lx) provided for measurement of the field curvature corresponds to the second derivation of the illumination function Js(lx) provided for measurement of the field intensity, and/or that the stipulated pattern of the illumination function J02(x) or J02(y) approximates to the pattern of the function

$$W2(lx) = \left(\frac{lx}{lxo}\right)^2 - \frac{1}{3} \text{ or } W2(ly) = \left(\frac{ly}{lyo}\right)^2 - \frac{1}{3}$$

sufficiently until the sidelobes reach the permissible size.

**7.** Method in accordance with one of claims 1 to 6, characterised in that the ratio of the antenna functions F02(x) / Fs(x) in the single-target case is proportional at least close to the square of the angular deviation and/or is equal to zero on the boresight axis (no angular deviation).

**8.** Method in accordance with one of claims 1 to 7, characterised in that the control, SLS or omnidirectional beam function of a corresponding antenna system is used as the antenna function F02(x).

**9.** Method in accordance with one of claims 1 to 8, characterised in that the signals $F1_{ACT}$, $F2_{ACT}$ formed in the input stages (AF, NM) of the radar are divided in a further stage (QG) into in-phase elements $F1p_{ACT}$, $F2p_{ACT}$ and into quadrature elements $F1q_{ACT}$, $F2q_{ACT}$ and scanned simultaneously.

**10.** Method particularly in accordance with one of claims 1 to 9, characterised in that the phase difference $\varphi$ between signals arriving from two directions are measured and it is determined whether a real two-target case or a reflection case and/or also phase angles are detected which are unsatisfactory for the measurement, at which the angle $\varphi$ is close to zero or close to $\pi$ and which could be avoided, for example by changing the transmission frequency.

**11.** Method particularly in accordance with one of claims 1 to 10, characterised in that the ratios L1, L2 of the powers of the signals from two targets from directions x1, y1 and x2, y2 are determined relative to the power of the summation signal, that in the case of a reflection, the reflection factor is determined using the established power ratio L1, L2 of the reflection factor and/or that if the quotient L1/L2 formed by the power ratios L1, L2 is sufficiently close to zero or $\infty$, the calculation of the target data is carried out for the single-target case and/or that the localised targets are labelled with the associated power ratios L1, L2, which when tracking a target are checked preferably at each measuring interval, so that the relevant target can be distinguished from other targets or sources of interference and/or that the power ratios $L_A1$, $L_A2$ are assigned to the target deviations x1, x2, y1 and y2 during target measurement in two dimensions and it is finally determined which pair of the target deviations x1, y1; x1, y2 or x2, y1; x2, y2 belongs to the first and second targets.

**12.** Method in accordance with one of claims 1 to 11, characterised in that an electronically-controllable antenna is used whose transmission diagram is preferably set in a manner such that no signal is transmitted and/or received relative to the direction of an interference signal or a target to be blanked out.

**13.** Method in accordance with claim 1 or in accordance with one of claims 1 to 12, characterised in that the signals of the subantennas (A, B, Ω or Ω, C, D) provided for each direction of measurement are preferably weighted in a weighting network provided in the antenna unit, by factors R, S, T; E, G and H so that for each direction of measurement x;y an odd slope function $F\underline{01}(x)$; $\underline{F01}(y)$, an even curvature function $\underline{F02}(x)$; $\underline{F02}(y)$ and a summation function $\underline{Fs}(x)$; $\underline{Fs}(y)$ are formed.

**14.** Method in accordance with one of claims 1 to 13, characterised in that illumination functions $\underline{j01}(lx,lsx)$; $\underline{j01}(ly,lsy)$, $\underline{j02}(lx,lsx)$; $\underline{j02}(ly,lsy)$, $\underline{js}(lx,lsx)$; $\underline{js}(ly,lsy)$ and/or antenna functions $\underline{f01}(x,sx)$; $\underline{f01}(y,sy)$, $\underline{f02}(x,sx)$; $\underline{f02}(y,sy)$, $\underline{fs}(x,sx)$; $\underline{fs}(y,sy)$ are chosen which can be represented as a product from an element $\underline{J01}(lx)$; $\underline{J01}(ly)$, $\underline{J02}(lx)$; $\underline{J02}(ly)$, $\underline{Js}(lx)$; $\underline{Js}(ly)$ or $\underline{F01}(x)$; $\underline{F01}(y)$, $\underline{F02}(x)$; $\underline{F02}(y)$, $\underline{Fs}(x)$; $\underline{Fs}(y)$ in direction of measurement x,y and an element $\underline{J01}(lsx)$; $\underline{J01}(lsy)$, $\underline{J02}(lsx)$; $\underline{J02}(lsy)$, $\underline{Js}(lsx)$; $\underline{Js}(lsy)$ in the direction of perpendiculars lsx, lsy to lx, ly and perpendiculars sx, sy relative to the direction of measurement x,y.

**15.** Method in accordance with one of claims 1 to 14, characterised in that the determination of the target data is based on the amplitude and/or phase monopulse method.

**16.** Method in accordance with one of claims 1 to 15, characterised in that for determination of the target data in the single-target case at least one of the following equations is used:

for the amplitude monopulse method $x = F1_A^{-1}(F1_A p_{ACT})$ and/or $x = F2_A^{-1}(F2_A p_{ACT})$

for the phase monopulse method $x = \underline{F1}_{\phi}^{-1} (J^*F1_{\phi}q_{ACT})$ and/or $x = F2_{\phi}^{-1} (F2_{\phi}q_{ACT})$.

**17.** Method in accordance with one of claims 1 to 16, characterised in that the measurement is preferably carried out with a honeycomb antenna with seven subarrays for three measurement dimensions x, y and z in one plane and it is determined which target directions on the basis of the measurements in the three directions of measurement, x, y and z can be determined in conformity.

**18.** Amplitude or phase monopulse radar for position measurement of a first, and if necessary, a second, target (TT1, TT2) from directions x1, y1; x2, y2, detected by the radar beam, whose echo signals overlap, with a horn or array antenna (HA; PA) which for a first measured axis x has at least three subantennas (A, B, Ω) configured and arranged such that with their output signals two linear combination $\underline{F01}(x)$ and $\underline{F02}(x)$ can be formed, by means of which, after standardisation with a third linear combination $\underline{Fs}(x)$ of output signals, two antenna functions

$$\underline{F1}(x) = \underline{F01}(x)/\underline{Fs}(x) = F1p(x) + j\ F1q(x), \text{ with } F1p(x) \text{ or } F1q(x) = 0$$

$$\underline{F2}(x) = \underline{F02}(x)/\underline{Fs}(x) = F2p(x) + j\ F2q(x), \text{ with } F2p(x) \text{ or } F2q(x) = 0$$

are formed, which are linearly independent of each other, are purely real or purely imaginary and independent of target deviations perpendicular to the measured axis, that a memory unit (MEM) is provided in which the function values of the antenna functions $\underline{F1}(x)$ and $\underline{F2}(x)$ measured for the single-target case are stored, that for the targets (TT1, TT2) detected by the radar beam in accordance with the antenna functions $\underline{F1}$ and $\underline{F2}$ measured values

$$\underline{F1}_{ACT} = F1p_{ACT} + F1q_{ACT}, \text{ in the two-target case with } F1p_{ACT} \text{ and } F1q_{ACT} \neq 0$$

$$\underline{F2}_{ACT} = F2p_{ACT} + F2q_{ACT}, \text{ in the two-target case with } F2p_{ACT} \text{ and } F2q_{ACT} \neq 0$$

can be determined and that a processor (PROC) is provided which is designed to solve, in accordance with x1 and x2, the following equation given for the amplitude or phase monopulse method.

$$\frac{F1_A(x) - F1_A p_{ACT}}{F1_A q_{ACT}} = \frac{F2_A(x) - F2_A p_{ACT}}{F2_A q_{ACT}};$$

$$\frac{-j^*F1_{\phi}(x) - F1_{\phi} q_{ACT}}{-F1_{\phi} p_{ACT}} = \frac{F2_{\phi}(x) - F2_{\phi} p_{ACT}}{F2_{\phi} q_{ACT}}$$

**19.** Amplitude or phase monopulse radar system for position measurement of a first, and if necessary a second, target (TT1, TT2) from directions x1, y1; x2, y2, detected by the radar beam, whose echo signals overlap, with an antenna whose signals are generated by three illumination functions, chosen in such a way and transformed to antenna functions F01(x), F02(x), Fs(x), of which the first J01(lx) is provided for measurement of the field slope, the second J02(lx) is provided for measurement of the field curvature and the third Js(lx) for measurement of the field intensity, that after standardisation of the antenna functions F01(x), F02(x) with the antenna function Fs(x) two antenna functions

$$\underline{F1}(x) = \underline{F01}(x) / \underline{Fs}(x) = F1p(x) + j\ F1q(x), \text{ with } F1p(x) \text{ or } F1q(x) = 0$$

$$\underline{F2}(x) = \underline{F02}(x) / \underline{Fs}(x) = F2p(x) + j\ F2q(x), \text{ with } F2p(x) \text{ or } F2q(x) = 0$$

are formed, which are linearly independent of each other, are purely real or purely imaginary and are independent of target deviations perpendicular to the measured axis, that a memory unit (MEM) is provided in which the function values of the antenna functions $\underline{F1}(x)$ and $\underline{F2}(x)$ measured for the single-target case are stored, that for the targets (TT1, TT2) detected by the radar beam in accordance with the antenna functions $\underline{F1}$ and $\underline{F2}$ measured values

$$\underline{F1}_{ACT} = F1p_{ACT} + F1q_{ACT}, \text{ in the two-target case with } F1p_{ACT} \text{ and } F1q_{ACT} \neq 0$$

$$\underline{F2}_{ACT} = F2p_{ACT} + F2q_{ACT}, \text{ in the two-target case with } F2p_{ACT} \text{ and } F2q_{ACT} \neq 0$$

can be determined and that a processor (PROC) is provided which is designed to solve, in accordance with x1 and x2, the following equation given for the amplitude or phase monopulse method.

$$\frac{F1_A(x) - F1_A p_{ACT}}{F1_A q_{ACT}} = \frac{F2_A(x) - F2_A p_{ACT}}{F2_A q_{ACT}};$$

$$\frac{- j^*F1_\phi(x) - F1_\phi q_{ACT}}{- F1_\phi p_{ACT}} = \frac{F2_\phi\ (x) - F2_\phi p_{ACT}}{F2_\phi q_{ACT}}$$

**20.** Monopulse radar in accordance with claim 18 or 19, characterised in that one of the functions $\underline{F1}(x)$, $\underline{F2}(x)$ is even and the other is odd and/or that the direction of the main beam of the three subantennas (A, B, Ω) or the extreme values of all illumination functions j01(lx,lsx), j02(lx,lsx), js(lx,lsx) lie in one plane and/or that the radiation diagram of the three subantennas (A, B, Ω) or the illumination functions j01(lx,lsx), j02(lx,lsx), js(lx,lsx) have an even symmetry pattern relative to deviations perpendicular to the measured axis and/or that the functions $\underline{f1}(x,sx)$, $\underline{f2}(x,sx)$, $\underline{fs}(x,sx)$ have function patterns perpendicular to the measured axis which differ only by a proportionality factor.

**21.** Monopulse radar in accordance with claims 18, 19 or 20, characterised in that a horn or array antenna (HA; PA) is provided, which for the first measured axis x (e.g. azimuth) has a first group of three subantennas or a first group of three illumination functions J01(lx), J02(lx), Js(lx) and which for a second measured axis y (e.g. elevation) has a second group of three subantennas (Ω, C, D) or a second group of three illumination functions J01(ly), J02(ly), Js(ly) and that preferably one subantenna (Ω) or one illumination function js(lx,ly) where js(lx,0) = Js(lx); js(0,ly) = Js(ly) is common to both groups.

**22.** Monopulse radar in accordance with claims 19, 20 or 21, characterised in that the pattern of the even illumination functions J02(x) or J02(y) provided for measurement of the curvature at least approximately correspond to the pattern of the function

$$J02(lx) = Const^*(lx^2 - lx0^2)^* e^{\frac{lx^2}{2^*lx0^2}} \text{ or } J02(ly) = Const^*(ly^2 - ly0^2)^* e^{\frac{ly^2}{2^*ly0^2}}$$

and/or the illumination function J02(lx) provided for measurement of the field curvature corresponds to the second derivation of the illumination function Js(lx) provided for measurement of the field intensity and/or that the stipulated pattern of the illumination function J02(x) or J02(y) approximates to the pattern of the function

$$W2(lx) = \left(\frac{lx}{lxo}\right)^2 - \frac{1}{3} \text{ or } W2(ly) = \left(\frac{ly}{lyo}\right)^2 - \frac{1}{3}$$

taking account of the permissible sidelobe.

**23.** Monopulse radar in accordance with one of claims 18 to 22, characterised in that the antenna has a control, SLS or omnidirectional beam function which is used as a curvature function $\underline{F02}(x)$ or $\underline{F02}(y)$.

**24.** Monopulse radar in accordance with one of claims 18 to 23, characterised in that the phase difference φ between signals arriving from two directions and/or the ratios L1, L2 of the powers of the signals from two targets from directions x1, y1 and x2, y2 can be measured and assessed relative to the power of the summation signal.

25. Monopulse radar in accordance with one of claims 18 to 24, characterised in that the antenna (PA) can be electronically controlled and its transmission diagram preferably set such that where possible no signal can be transmitted and/or received relative to the direction of an interference signal or a target to be blanked out.

26. Monopulse radar in accordance with claims 18 to 25, characterised in that a network (AF) and also a division stage (NM) are provided which form the signals $\underline{F1}_{ACT}$, $\underline{F2}_{ACT}$ from the output signals of subantennas (A, B, Ω or Ω, C, D) and that in a further stage (QG) they are divided into in-phase elements $F1p_{ACT}$, $F2p_{ACT}$ and quadrature elements $F1q_{ACT}$, $F2q_{ACT}$.

27. Monopulse radar in accordance with one of claims 18 to 26, characterised in that the amplitude monopulse antenna has three subantennas (A, B, Ω or Ω, C, D) for each measured axis x;y, each of which has a common phase centre and whose radiation axes for each measured axis lie in one plane or that the phase monopulse antenna for each measured axis x;y has three subantennas (A, B, Ω or Ω, C, D) whose phase centres for each measured axis lie on a common straight line and whose radiation axes run parallel to each other.

28. Monopulse radar in accordance with one of claims 18 to 27, characterised in that the amplitude monopulse antenna or the phase monopulse antenna is an array antenna with several antenna elements (AE), which are provided individually, or assembled in groups, to form the subantennas (A, B, Ω or Ω, C, D).

29. Monopulse radar in accordance with one of claims 18 to 28, characterised in that the phase centres of the subantennas (A, B, Ω or C, D, Ω) are arranged such that the phase centre of the subantenna (Ω) is enclosed at equal distances between the phase centres of the subantennas (A and B and/or C and D) and/or that the radiation axes of the subantennas (A and Ω or C and Ω) enclose the same angle as the axes of the subantennas (Ω and B or Ω and D) and/or that the diagrams of the subantennas (A and B or C and D) have an amplitude pattern which is at least approximately equal and/or that the diagrams of the subantennas (A and B or C and D) have a straight symmetry relative to the boresight axis and that the diagram of the subantennas (Ω) contains the boresight axis bx of the expanded monopulse antenna (HA, PA) as an axis for a straight symmetry.

30. Monopulse radar in accordance with one of claims 18 to 29, for measuring the targets in three angular dimensions, characterised in that the antenna (WA) has the shape of a honeycomb, with preferably seven subarrays, whose phase centres pz5, pzΩ, pz6; pz3, pzΩ, pz4 or pz1, pzΩ,pz2 run in three measuring axes x,y,z which intersect in the phase centre pzΩ of the central subarray.

31. Monopulse radar equipment in accordance with one of claims 18 to 30, characterised in that a processor (PROC) is provided, which operates in accordance with the pipeline method and/or approximates in a first step to the stored functions F1, F2 by polynomials of third degree and analytically solves the equations, and/or uses the solutions obtained in this way preferably as an initial approach for an iterative method.

## Revendications

1. Procédé pour un appareil radar monopulsé en amplitude ou en phase destiné à repérer la position d'une première et éventuellement d'une deuxième cible (TT1, TT2) détectées par le faisceau radar dans les directions x1, y1 ; x2, y2, dont les signaux échos se chevauchent, avec une antenne en cornet ou une antenne en réseau (HA ; PA) qui comporte pour un axe de mesure x au moins trois sous-antennes (A, B, Ω) conçues et agencées de telle sorte qu'on peut former avec leurs signaux de sortie deux combinaisons linéaires $\underline{F01}(x)$ et $\underline{F02}(x)$ par lesquelles, après les avoir normées avec une troisième combinaison linéaire $\underline{Fs}(x)$ de signaux de sortie, peuvent être formées deux fonctions d'antennes linéairement indépendantes l'une de l'autre, purement réelles ou purement imaginaires et indépendantes des projections de cibles perpendiculairement à l'axe de mesure

$$\underline{F1}(x) = \underline{F01}(x)/\underline{Fs}(x) = F1p(x) + jF1q(x),$$

avec F1p(x) ou F1q(x) = 0

$$\underline{F2}(x) = \underline{F02}(x)/\underline{Fs}(x) = F2p(x) + jF2q(x),$$

avec F2p(x) ou F2q(x) = 0

qu'on dimensionne ces fonctions d'antennes $\underline{F1}$(x) et $\underline{F2}$(x) pour le cas d'une seule cible et on mémorise les valeurs de fonctions dépendantes de la projection de cible x, qu'on détermine selon les fonctions d'antennes $\underline{F1}$(x) et $\underline{F2}$(x) des valeurs mesurées

$$\underline{F1}_{ACT} = F1p_{ACT} + F1q_{ACT},$$

dans le cas à deux cibles avec $F1p_{ACT}$ et $F1q_{ACT} \neq 0$,

$$\underline{F2}_{ACT} = F2p_{ACT} + F2q_{ACT},$$

dans le cas à deux cibles avec $F2p_{ACT}$ et $F2q_{ACT} \neq 0$,

pour les cibles (TT1, TT2) détectées par le faisceau radar et que on résout pour trouver les directions de cibles x1 et x2 l'équation suivante, donnée pour le procédé monopulsé en amplitude ou en phase, en utilisant les valeurs de fonctions mémorisées :

$$\frac{F1_A(x) - F1_A p_{ACT}}{F1_A q_{ACT}} = \frac{F2_A(x) - F2_A p_{ACT}}{F2_A q_{ACT}};$$

$$\frac{-j * F1_\phi(x) - F1_\phi q_{ACT}}{-F1_\phi p_{ACT}} = \frac{F2_\phi(x) - F2_\phi p_{ACT}}{-F2_\phi q_{ACT}}$$

**2.** Procédé pour un appareil radar monopulsé en amplitude ou en phase destiné à repérer la position d'une première et éventuellement d'une deuxième cible (TT1, TT2) détectées par le faisceau radar dans les directions x1, y1; x2, y2, dont les signaux échos se chevauchent, avec une antenne dont les signaux sont produits par trois fonctions d'éclairage, dont la première J01(lx) est prévue pour la mesure de l'inclinaison de champ, la deuxième J02(lx) pour la mesure de la courbure de champ et la troisième Js(lx) pour la mesure de l'intensité de champ et qui sont choisies et transformées en fonctions d'antennes F01(x), F02(x), Fs(x) de telle sorte que, après avoir normé les fonctions d'antennes F01(x), F02(x) avec la fonction d'antenne Fs(x), on forme deux fonctions d'antennes linéairement indépendantes l'une de l'autre, purement réelles ou purement imaginaires et indépendantes des projections de cibles perpendiculairement à l'axe de mesure

$$\underline{F1}(x) = \underline{F01}(x)/\underline{Fs}(x) = F1p(x) + jF1q(x),$$

avec F1p(x) ou F1q(x) = 0

$$\underline{F2}(x) = \underline{F02}(x)/\underline{Fs}(x) = F2p(x) + jF2q(x),$$

avec F2p(x) ou F2q(x) = 0 qu'on dimensionne ces fonctions d'antennes $\underline{F1}$(x) et $\underline{F2}$(x) pour le cas d'une seule cible et on mémorise les valeurs de fonctions dépendantes de la projection de cible x, qu'on détermine selon les fonctions d'antennes $\underline{F1}$ et $\underline{F2}$ des valeurs mesurées

$$\underline{F1}_{ACT} = F1p_{ACT} + F1q_{ACT},$$

dans le cas à deux cibles avec $F1p_{ACT}$ et $F1q_{ACT} \neq 0$,

$$\underline{F2}_{ACT} = F2p_{ACT} + F2q_{ACT},$$

dans le cas à deux cibles avec $F2p_{ACT}$ et $F2q_{ACT} \neq 0$, pour les cibles (TT1, TT2) détectées par le faisceau radar et que on résout pour trouver les directions de cibles x1 et x2 l'équation suivante, donnée pour le procédé monopulsé en amplitude ou en phase, en utilisant les valeurs de fonctions mémorisées :

$$\frac{F1_A(x) - F1_A p_{ACT}}{F1_A q_{ACT}} = \frac{F2_A(x) - F2_A p_{ACT}}{F2_A q_{ACT}} ;$$

$$\frac{- j * F1_\phi(x) - F1_\phi q_{ACT}}{- F1_\phi p_{ACT}} = \frac{F2_\phi (x) - F2_\phi p_{ACT}}{F2_\phi q_{ACT}}$$

**3.** Procédé selon la revendication 1 ou 2, caractérisé par le fait que l'une des fonctions F1(x), F2(x) est paire et l'autre impaire et/ou que les directions de rayonnement principal des trois sous-antennes (A, B, Ω) respectivement les extrêmes de toutes les fonctions d'éclairage j01(lx, lsx), j02(lx, lsx), js(lx, lsx) se trouvent dans un plan et/ou que les diagrammes de rayonnement des trois sous-antennes (A, B, Ω) respectivement les fonctions d'éclairage j01 (lx, lsx), j02(lx, lsx), js(lx, lsx) ont une allure de symétrie droite par rapport aux projections perpendiculairement à l'axe de mesure et/ou que les fonctions f1(x, sx), f2(x, sx), fs(x, sx) ont des courbes de fonctions perpendiculairement à l'axe de mesure qui ne se distinguent que par un facteur de proportionnalité.

**4.** Procédé selon la revendication 1, 2 ou 3, mis en oeuvre avec une antenne en cornet ou en réseau (HA ; PA) qui comporte pour le premier axe de mesure x (par exemple azimut) un premier groupe de trois sous-antennes respectivement un premier groupe de trois fonctions d'éclairage J01(lx), J02(lx), Js(lx) et qui comporte pour un deuxième axe de mesure y (par exemple élévation) un deuxième groupe de trois sous-antennes (Ω, C, D) respectivement un deuxième groupe de trois fonctions d'éclairage J01(ly), J02(ly), Js(ly), une sous-antenne (Ω) respectivement une fonction d'éclairage js(lx, ly) avec js(lx, 0) = Js(lx) ; js(0,ly) = Js(ly) étant de préférence commune aux deux groupes.

**5.** Procédé selon la revendication 1, 2, 3 ou 4, caractérisé par le fait qu'on calcule par approximation les projections de cibles (x1, x2 respectivement y1, y2) en remplaçant la fonction F2(x) respectivement F2(y) par F2(0).

**6.** Procédé selon l'une des revendications 1 à 5, caractérisé par le fait que l'allure des fonctions d'éclairage paires J02(x) respectivement J02(y) prévues pour la mesure de courbure correspond au moins approximativement à l'allure de la fonction

$$J02(lx) = Const * (lx^2 - lx0^2) * e^{\frac{lx^2}{2*lx0^2}} ,$$

$$\text{resp. } J02(ly) = Const * (ly^2 - ly0^2) * e^{\frac{ly^2}{2*ly0^2}}$$

et/ou que la fonction d'éclairage J02(lx) prévue pour la mesure de la courbure de champ correspond à la dérivée seconde de la fonction d'éclairage Js(lx) prévue pour la mesure de l'intensité de champ et/ou qu'on approche l'allure fixée de la fonction d'éclairage J02(x) respectivement J02(y) de l'allure de la fonction

$$W2(lx) = \left(\frac{lx}{lxo}\right)^2 - \frac{1}{3}, \text{ resp. } W2(ly) = \left(\frac{ly}{lyo}\right)^2 - \frac{1}{3}$$

jusqu'à ce que les lobes latéraux atteignent la dimension autorisée.

**7.** Procédé selon l'une des revendications 1 à 6, caractérisé par le fait que le rapport des fonctions d'antennes F02 (x) / Fs(x) dans le cas d'une seule cible est au moins approximativement proportionnel au carré de la projection angulaire et/ou est égal à zéro sur l'axe de Boresight (pas de projection angulaire).

**8.** Procédé selon l'une des revendications 1 à 7, caractérisé par le fait qu'on utilise comme fonction d'antenne F02 (x) la Control-Function ou SLS-Function ou Omnidirectional-Beam-Function d'un système d'antenne correspondant.

**9.** Procédé selon l'une des revendications 1 à 8, caractérisé par le fait qu'on décompose les signaux $F1_{ACT}$, $F2_{ACT}$ formés dans les étages d'entrée (AF, NM) de l'appareil radar, dans un autre étage (QG), en composantes en phase $F1p_{ACT}$, $F2p_{ACT}$ et en composantes en quadrature $F1q_{ACT}$, $F2q_{ACT}$ et que, en même temps, on les échantillonne.

**10.** Procédé notamment selon l'une des revendications 1 à 9, caractérisé par le fait qu'on mesure la différence de phase φ entre des signaux provenant de deux directions et qu'on détermine si on a détecté un vrai cas à deux cibles ou un cas de réflexion et/ou des relations de phases défavorables au repérage dans lesquelles l'angle φ est près de zéro ou près de π et qui peuvent être évitées par exemple par un changement de la fréquence d'émission.

**11.** Procédé notamment selon l'une des revendications 1 à 10, caractérisé par le fait qu'on détermine les rapports L1, L2 des puissances des signaux de deux cibles dans les directions x1, y1 et x2, y2 par rapport à la puissance du signal cumulé, qu'on détermine dans le cas de réflexion, à l'aida des rapports de puissances déterminés L1, L2, le facteur de réflexion et/ou que, si le quotient L1/L2 formé par les rapports de puissances L1, L2 se trouve assez près de zéro ou de l'infini, on effectue le calcul des données de cible pour le cas d'une seule cible et/ou qu'on étiquette les cibles localisées avec les rapports de puissances associés L1, L2 qui sont contrôlés de préférence à chaque intervalle de mesure lors de la poursuite d'une cible de manière à pouvoir distinguer la cible concernée d'autres cibles ou de sources parasites et/ou qu'on associe les rapports de puissances $L_A1$, $L_A2$ lors du repérage de cible dans deux dimensions aux projections de cibles x1, x2, y1 et y2 et qu'on détermine ensuite quelle paire de projections de cibles x1, y1 ; x1, y2 respectivement x2, y1 ; x2, y2 est associée à la première et à la deuxième cible.

**12.** Procédé selon l'une des revendications 1 à 11, caractérisé par le fait qu'on utilise une antenne qui peut être commandée de façon électronique et dont le diagramme d'émission est réglé de préférence de telle sorte que, par rapport à la direction d'un signal parasite ou d'une cible à supprimer, si possible aucun signal n'est émis et/ou reçu.

**13.** Procédé selon la revendication 1 ou selon l'une des revendications 1 à 12, caractérisé par le fait qu'on pondère par des facteurs R, S, T ; E, G et H les signaux des sous-antennes (A, B, Ω respectivement Ω, C, D), prévues pour chaque direction de mesure, de préférence dans un réseau de pondération prévu dans l'unité d'antennes de telle sorte que, pour chaque direction de mesure x ; y, on forme une fonction d'inclinaison impaire $\underline{F01}(x)$ ; $\underline{F01}(y)$, une fonction de courbure paire $\underline{F02}(x)$ ; $\underline{F02}(y)$ ainsi qu'une fonction cumulée $\underline{Fs}(x)$ ; $\underline{Fs}(y)$.

**14.** Procédé selon l'une des resrendications 1 à 13, caractérisé par le fait qu'on choisit des fonctions d'éclairage $\underline{j01}$(lx, lsx) ; $\underline{j01}$(ly, lsy), $\underline{j02}$(lx, lsx) ; $\underline{j02}$(ly, lsy), $\underline{js}$(lx, lsx) ; $\underline{js}$(ly, lsy) et/ou des fonctions d'antennes $\underline{f01}$(x, sx) ; $\underline{f01}$(y, sy), $\underline{f02}$(x, sx) ; $\underline{f02}$(y, sy), $\underline{fs}$(x, sx) ; $\underline{fs}$(y, sy) qui peuvent être représentées comme produit d'une composante $\underline{J01}$(lx) ; $\underline{J01}$(ly), $\underline{J02}$(lx) ; $\underline{J02}$(ly), $\underline{Js}$(lx) ; $\underline{Js}$(ly) respectivement $\underline{F01}$(x) ; $\underline{F01}$(y), $\underline{F02}$(x) ; $\underline{F02}$(y), $\underline{Fs}$(x) ; $\underline{Fs}$(y) dans la direction de mesure x, y et d'une composante $\underline{J01}$(lsx) ; $\underline{J01}$(lsy), $\underline{J02}$(lsx) ; $\underline{J02}$(lsy), $\underline{Js}$(lsx) ; $\underline{Js}$(lsy) dans la direction des perpendiculaires lsx, lsy à lx, ly et des perpendiculaires sx, sy à la direction de mesure x, y.

**15.** Procédé selon l'une des revendications 1 à 14, caractérisé par le fait que la détermination des données de cibles s'effectue sur la base du procédé monopulsé en amplitude et/ou en phase.

**16.** Procédé selon l'une des revendications 1 à 15, caractérisé par le fait que, pour la détermination des données de cibles dans le cas d'une seule cible, on utilise au moins l'une des équations suivantes : pour le procédé monopulsé en amplitude

$$x = F1_A^{-1}(F1_A p_{ACT}) \text{ et/ou } x = F2_A^{-1}(F2_A p_{ACT})$$

pour le procédé monopulsé en phase

$$x = \underline{F1}_\phi^{-1}(j^* F1_\phi q_{ACT}) \text{ et/ou } x = F2_\phi^{-1}(F2_\phi p_{ACT}).$$

**17.** Procédé selon l'une des revendications 1 à 16, caractérisé par le fait qu'on effectue la mesure de préférence avec une antenne en nid d'abeilles avec sept Subarrays pour trois dimensions de mesure x, y et z se trouvant dans un plan et qu'on détermine quelles directions de cibles peuvent être fixées coïncidentes sur la base des mesures dans les trois dimensions de mesure x, y et z.

**18.** Appareil radar monopulsé en amplitude ou en phase destiné à repérer la position d'une première et éventuellement d'une deuxième cible (TT1, TT2) détectées par le faisceau radar dans les directions x1, y1 ; x2, y2, dont les signaux échos se chevauchent, avec une antenne en cornet ou une antenne en réseau (HA ; PA) qui comporte pour un premier axe de mesure x au moins trois sous-antennes (A, B, Ω) conçues et agencées de telle sorte qu'on peut former avec leurs signaux de sortie deux combinaisons linéaires $\underline{F01}(x)$ et $\underline{F02}(x)$ par lesquelles, après les avoir normées avec une troisième combinaison linéaire $\underline{Fs}(x)$ de signaux de sortie, peuvent être formées deux fonctions d'antennes linéairement indépendantes l'une de l'autre, purement réelles ou purement imaginaires et indépendantes des projections de cibles perpendiculairement à l'axe de mesure

$$\underline{F1}(x) = \underline{F01}(x)/\underline{Fs}(x) = F1p(x) + jF1q(x),$$

avec F1p(x) ou F1q(x) = 0

$$\underline{F2}(x) = \underline{F02}(x)\ /\underline{Fs}(x) = F2p(x) + jF2q(x),$$

avec F2p(x) ou F2q(x) = 0

qu'il est prévu une unité mémoire (MEM) dans laquelle sont mémorisées les valeurs de fonctions des fonctions d'antennes $\underline{F1}(x)$ et $\underline{F2}(x)$ dimensionnées pour le cas d'une seule cible, que des valeurs mesurées

$$\underline{F1}_{ACT} = F1p_{ACT} + F1q_{ACT},$$

dans le cas à deux cibles avec $F1p_{ACT}$ et $F1q_{ACT} \neq 0$,

$$\underline{F2}_{ACT} = F2p_{ACT} + F2q_{ACT},$$

dans le cas à deux cibles avec $F2p_{ACT}$ et $F2q_{ACT} \neq 0$, peuvent être déterminées selon les fonctions d'antennes $\underline{F1}$ et $\underline{F2}$ pour les cibles (TT1, TT2) détectées par le faisceau radar et qu'il est prévu un processeur (PROC) qui est prévu pour résoudre en x1 et x2 l'équation donnée ci-dessous pour le procédé monopulsé en amplitude ou en phase :

$$\frac{F1_A(x) - F1_A p_{ACT}}{F1_A q_{ACT}} = \frac{F2_A(x) - F2_A p_{ACT}}{F2_A q_{ACT}};$$

$$\frac{-j * F1_\phi(x) - F1_\phi q_{ACT}}{-F1_\phi\ p_{ACT}} = \frac{F2_\phi(x) - F2_\phi\ p_{ACT}}{F2_\phi q_{ACT}}$$

**19.** Appareil radar monopulsé en amplitude ou en phase destiné à repérer la position d'une première et éventuellement d'une deuxième cible (TT1, TT2) détectées par le faisceau radar dans les directions x1, y1 ; x2, y2, dont les signaux échos se chevauchent, avec une antenne dont les signaux sont produits par trois fonctions d'éclairage, parmi lesquelles la première J01(lx) est prévue pour la mesure de l'inclinaison de champ, la deuxième J02(lx) pour la mesure de la courbure de champ et la troisième Js(lx) pour la mesure de l'intensité de champ, choisies et transformées en fonctions d'antennes F01(x), F02(x) Fs(x) de telle sorte que, après avoir normé les fonctions d'antennes F01(x), F02(x) avec la fonction d'antenne Fs(x), on forme deux fonctions d'antennes linéairement indépendantes l'une de l'autre, purement réelles ou purement imaginaires et indépendantes des projections de cibles perpendiculairement à l'axe de mesure

$$\underline{F1}(x) = \underline{F01}(x)/\underline{Fs}(x) = F1p(x) + jF1q(x),$$

avec F1p(x) ou F1q(x) = 0

$$\underline{F2}(x) = \underline{F02}(x)/\underline{Fs}(x) = F2p(x) + jF2q(x),$$

avec F2p(x) ou F2q(x) = 0 qu'il est prévu une unité mémoire (MEM) dans laquelle sont mémorisées les valeurs de fonctions des fonctions d'antennes $\underline{F1}(x)$ et $\underline{F2}(x)$ dimensionnées pour le cas d'une seule cible, que des valeurs mesurées

$$\underline{F1}_{ACT} = F1p_{ACT} + F1q_{ACT},$$

dans le cas à deux cibles avec $F1p_{ACT}$ et $F1q_{ACT} \neq 0$,

$$\underline{F2}_{ACT} = F2p_{ACT} + F2q_{ACT},$$

dans le cas à deux cibles avec $F2p_{ACT}$ et $F2q_{ACT} \neq 0$,
peuvent être déterminées selon les fonctions d'antennes $\underline{F1}$ et $\underline{F2}$ pour les cibles (TT1, TT2) détectées par le faisceau radar et qu'il est prévu un processeur (PROC) qui est prévu pour résoudre en x1 et x2 l'équation suivante donnée pour le procédé monopulsé en amplitude ou en phase :

$$\frac{F1_A(x) - F1_A p_{ACT}}{F1_A q_{ACT}} = \frac{F2_A(x) - F2_A p_{ACT}}{F2_A q_{ACT}};$$

$$\frac{- j * F1_\phi(x) - F1_\phi q_{ACT}}{- F1_\phi p_{ACT}} = \frac{F2_\phi (x) - F2_\phi p_{ACT}}{F2_\phi q_{ACT}}$$

**20.** Appareil radar monopulsé selon la revendication 18 ou 19, caractérisé par le fait que l'une des fonctions $\underline{F1}(x)$, $\underline{F2}(x)$ est paire et l'autre impaire et/ou que les directions de rayonnement principal des trois sous-antennes (A, B, Ω) respectivement les extrêmes de toutes les fonctions d'éclairage j01(lx, lsx) j02(lx, lsx), js(lx, lsx) se trouvent dans un plan et/ou que les diagrammes de rayonnement des trois sous-antennes (A, B, Ω) respectivement les fonctions d'éclairage j01(lx, lsx), j02(lx, lsx), js (lx, lsx) ont une allure de symétrie droite par rapport aux projections perpendiculairement à l'axe de mesure et/ou que les fonctions $\underline{f1}(x, sx)$, $\underline{f2}(x, sx)$, $\underline{fs}(x, sx)$ ont des courbes de fonctions perpendiculairement à l'axe de mesure qui ne se distinguent que par un facteur de proportionnalité.

**21.** Appareil radar monopulsé selon la revendication 18, 19 ou 20, caractérisé par le fait qu'il est prévu une antenne en cornet ou en réseau (HA ; PA) qui comporte pour le premier axe de mesure x (par exemple azimut) un premier groupe de trois sous-antennes respectivement un premier groupe de trois fonctions d'éclairage J01(lx), J02(lx), Js(lx) et qui comporte pour un deuxième axe de mesure y (par exemple élévation) un deuxième groupe de trois sous-antennes (Ω, C, D) respectivement un deuxième groupe de trois fonctions d'éclairage J01(ly), J02(ly), Js(ly), et que de préférence une sous-antenne (Ω) respectivement une fonction d'éclairage js(lx, ly) avec js(lx, 0) = Js(lx) ; js(0, ly) = Js(ly) est commune aux deux groupes.

**22.** Appareil radar monopulsé selon la revendication 19, 20 ou 21, caractérisé par le fait que l'allure des fonctions d'éclairage paires J02(x) respectivement J02(y) prévues pour la mesure de courbure correspond au moins approximativement à l'allure de la fonction

$$J02(lx) = Const * (lx^2 - lx0^2) * e^{\frac{lx^2}{2*lx0^2}},$$

$$\text{resp. } J02(ly) = Const * (ly^2 - ly0^2) * e^{\frac{ly^2}{2*ly0^2}}$$

et/ou que la fonction d'éclairage J02(lx) prévue pour la mesure de la courbure de champ correspond à la dérivée seconde de la fonction d'éclairage Js(lx) prévue pour la mesure de l'intensité de champ et/ou qu'on approche l'allure fixée de la fonction d'éclairage J02(x) respectivement J02(y) de l'allure de la fonction

$$W2(lx) = \left(\frac{lx}{lxo}\right)^2 - \frac{1}{3}, \text{ resp. } W2(ly) = \left(\frac{ly}{lyo}\right)^2 - \frac{1}{3}$$

en tenant compte des lobes latéraux autorisés.

**23.** Appareil radar monopulsé selon l'une des revendications 18 à 22, caractérisé par le fait que l'antenne comporte une Control-Function ou SLS-Function ou Omnidirectional-Beam-Function qui est utilisée comme fonction de courbure $\underline{F02}$(x) respectivement $\underline{F02}$(y).

**24.** Appareil radar monopulsé selon l'une des revendications 18 à 23, caractérisé par le fait que la différence de phase φ entre deux signaux dans deux directions et/ou les rapports L1, L2 des puissances des signaux de deux cibles dans les directions x1, y1 et x2, y2 par rapport à la puissance du signal cumulé peuvent être mesurés et évalués.

**25.** Appareil radar monopulsé selon l'une des revendications 18 à 24, caractérisé par le fait que l'antenne (PA) peut être commandée de façon électronique et que son diagramme d'émission est réglé de préférence de telle sorte que, par rapport à la direction d'un signal parasite ou d'une cible à supprimer, si possible aucun signal n'est émis et/ou reçu.

**26.** Appareil radar monopulsé selon l'une des revendications 18 à 25, caractérisé par le fait qu'il est prévu un réseau (AF) ainsi qu'un étage de division (NM) qui forment à partir des signaux de sortie des sous-antennes (A, B, Ω respectivement Ω, C, D) les signaux $\underline{F1}_{ACT}$, $\underline{F2}_{ACT}$ qui sont, dans un autre étage (QG), décomposés en composantes en phase $F1p_{ACT}$, $F2p_{ACT}$ et en composantes en quadrature $F1q_{ACT}$, $F2q_{ACT}$.

**27.** Appareil radar monopulsé selon l'une des revendications 18 à 26, caractérisé par le fait que l'antenne monopulsée en amplitude comporte pour chaque axe de mesure x ; y trois sous-antennes (A, B, Ω respectivement Ω, C, D), qui ont chacune un centre de phase commun et dont les axes de rayonnement pour chaque axe de mesure se trouvent dans un plan, respectivement que l'antenne monopulsée en phase comporte pour chaque axe de mesure x ; y trois sous-antennes (A, B, Ω respectivement Ω, C, D), dont les centres de phases pour chaque axe de mesure se trouvent sur une droite commune et dont les axes de rayonnement s'étendent parallèlement les uns aux autres.

**28.** Appareil radar monopulsé selon l'une des revendications 18 à 27, caractérisé par le fait que l'antenne monopulsée en amplitude ou l'antenne monopulsée en phase est une antenne en réseau avec plusieurs éléments d'antennes (AE) qui sont prévus isolés ou regroupés pour former les sous-antennes (A, B, Ω respectivement Ω, C, D).

**29.** Appareil radar monopulsé selon l'une des revendications 18 à 28, caractérisé par le fait que les centres de phases des sous-antennes (A, B et Ω respectivement C, D et Ω) sont agencés de telle sorte que le centre de phase de la sous-antenne (Ω) est inclus à égale distance entre les centres de phases des sous-antennes (A et B et/ou C et D) et/ou que les axes de rayonnement des sous-antennes (A et Ω respectivement C et Ω) incluent le même angle que les axes des sous-antennes (Ω et B respectivement Ω et D) et/ou que les diagrammes des sous-antennes (A et B respectivement C et D) ont une allure d'amplitude au moins approximativement identique et/ou que les diagrammes des sous-antennes (A et B respectivement C et D) ont une symétrie droite par rapport à l'axe de Boresight et le diagramme de la sous-antenne (Ω) contient l'axe de Boresight bx de l'antenne monopulsée étendue (HA, PA) comme axe pour une symétrie droite.

**30.** Appareil radar monopulsé selon l'une des revendications 18 à 29 pour le repérage des cibles dans trois directions angulaires, caractérisé par le fait que l'antenne (WA) a la forme d'un nid d'abeilles avec de préférence sept Subarrays à travers les centres de phases pz5, pzΩ, pz6 ; pz3, pzΩ, pz4 respectivement pz1, pzΩ, pz2 desquels s'étendent trois axes de mesure x, y, z se coupant au centre de phase pzΩ du Subarray central.

**31.** Appareil radar monopulsé selon l'une des revendications 18 à 30, caractérisé par le fait qu'il est prévu un processeur (PROC) qui fonctionne selon le procédé du pipeline et/ou qui approche les fonctions mémorisées F1, F2 lors d'une première étape avec des polynômes de troisième degré et qui résout les équations de façon analytique et/ou qui utilise les solutions ainsi trouvées de préférence comme première approximation pour un procédé itératif.

Fig. 1

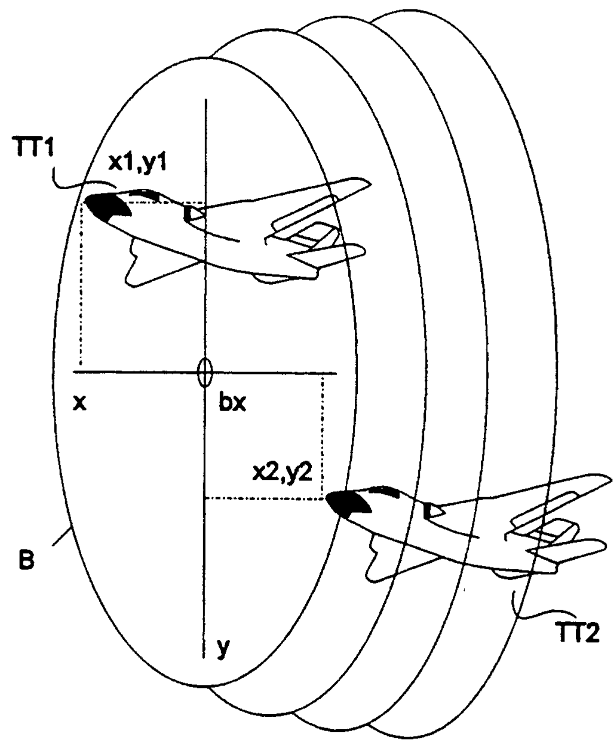


Fig. 4

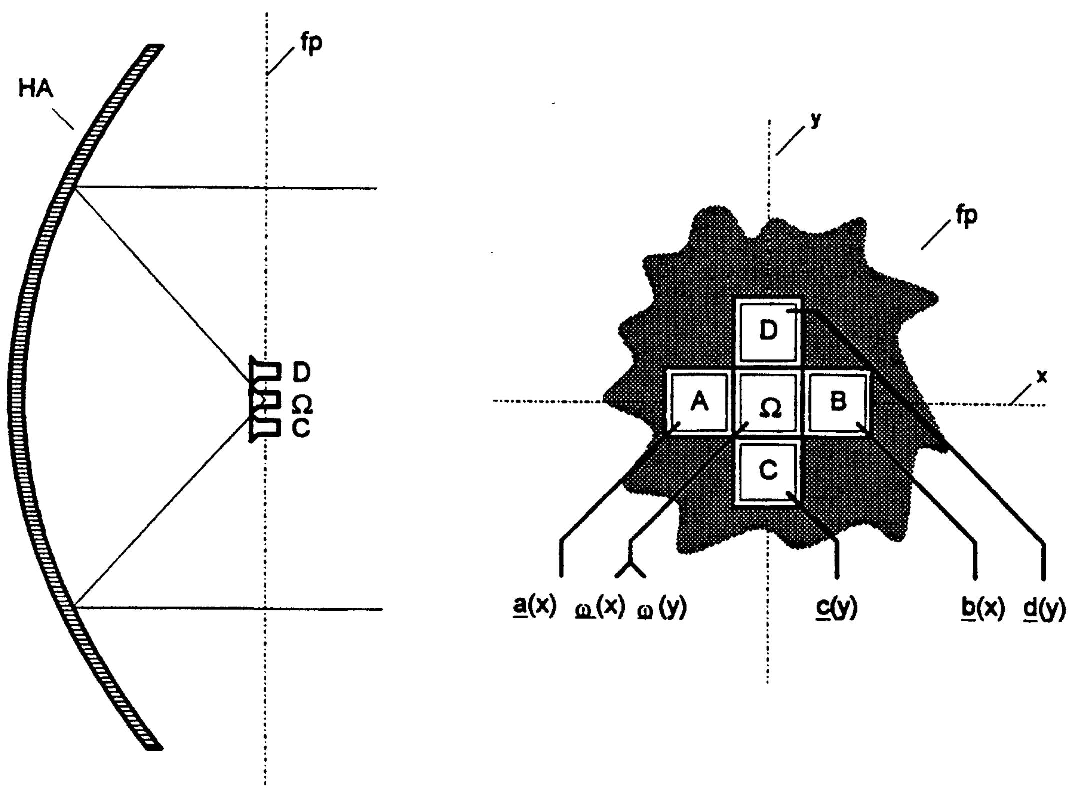

Fig. 2

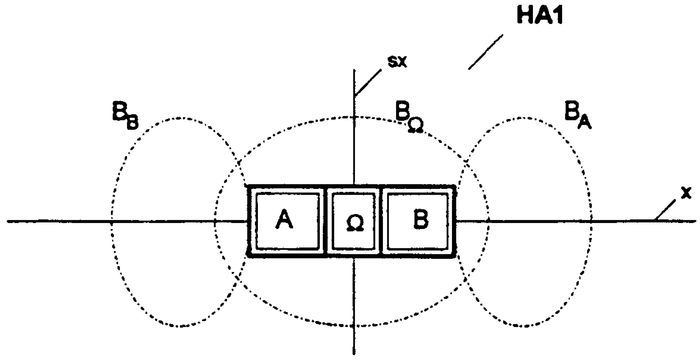


Fig. 3

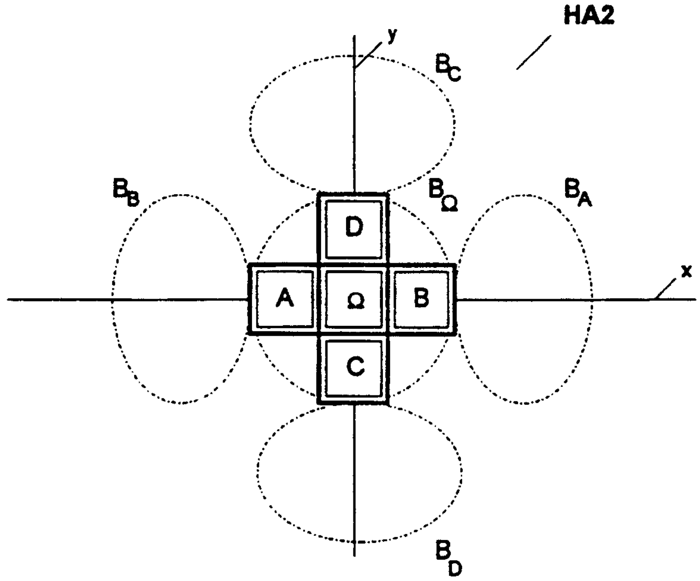


Fig. 17

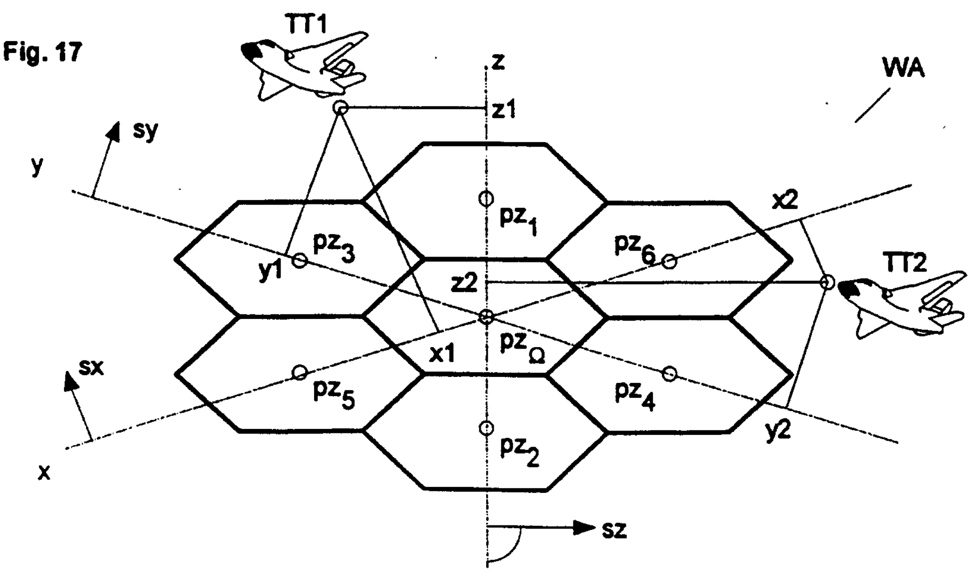

Fig. 5

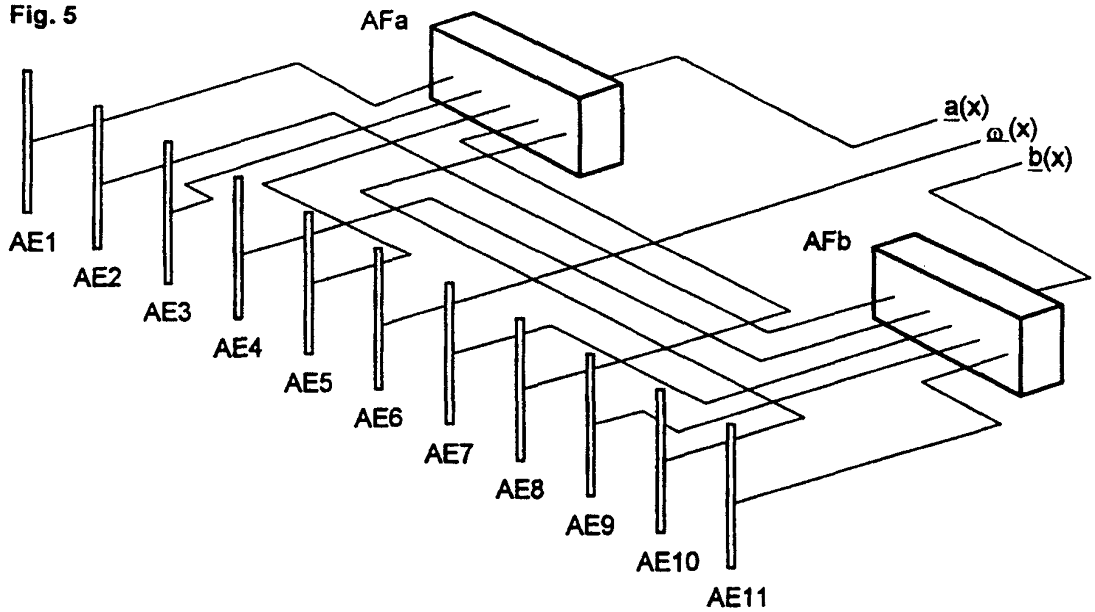


Fig. 6

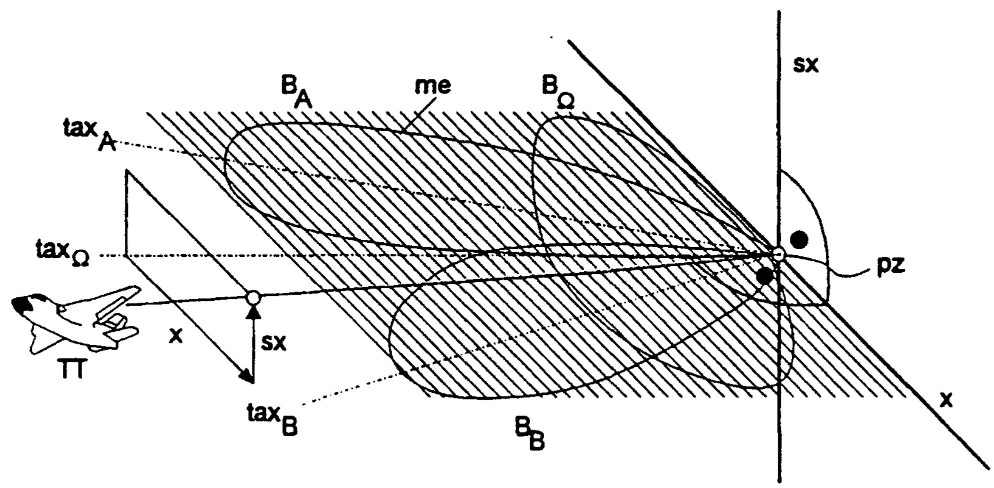


Fig. 18

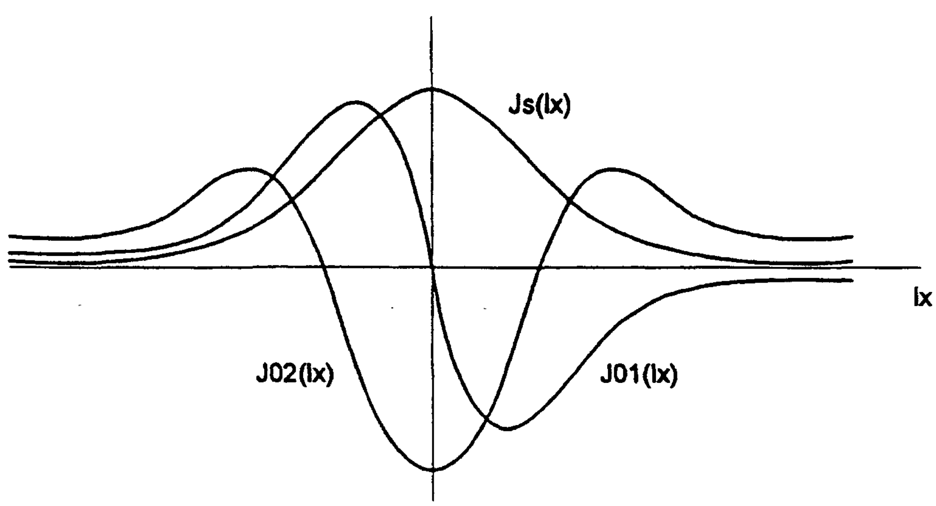

Fig. 7

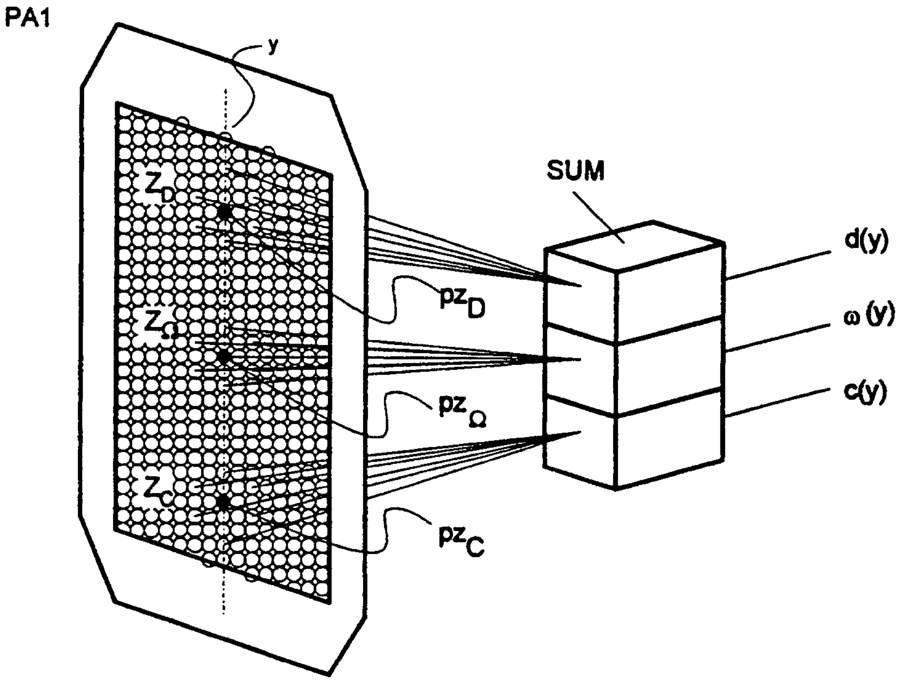
PA1
y
SUM
$Z_D$
$Z_\Omega$
$Z_C$
$pz_D$
$pz_\Omega$
$pz_C$
d(y)
ω (y)
c(y)

Fig. 8

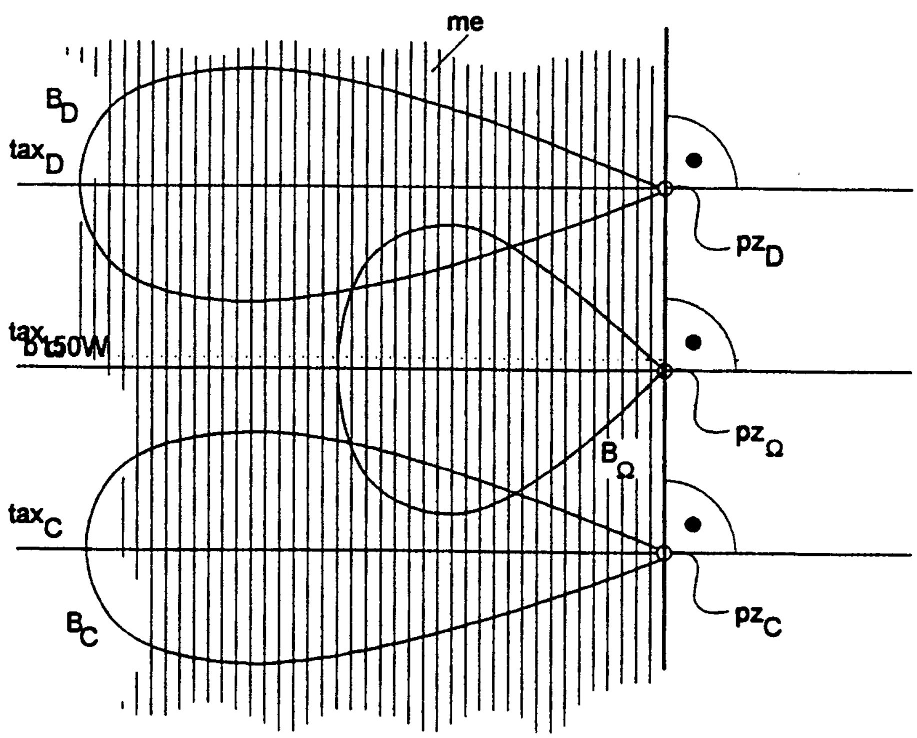
me
$B_D$
$tax_D$
$pz_D$
$tax_\Omega$
$pz_\Omega$
$B_\Omega$
$tax_C$
$pz_C$
$B_C$

Fig. 9

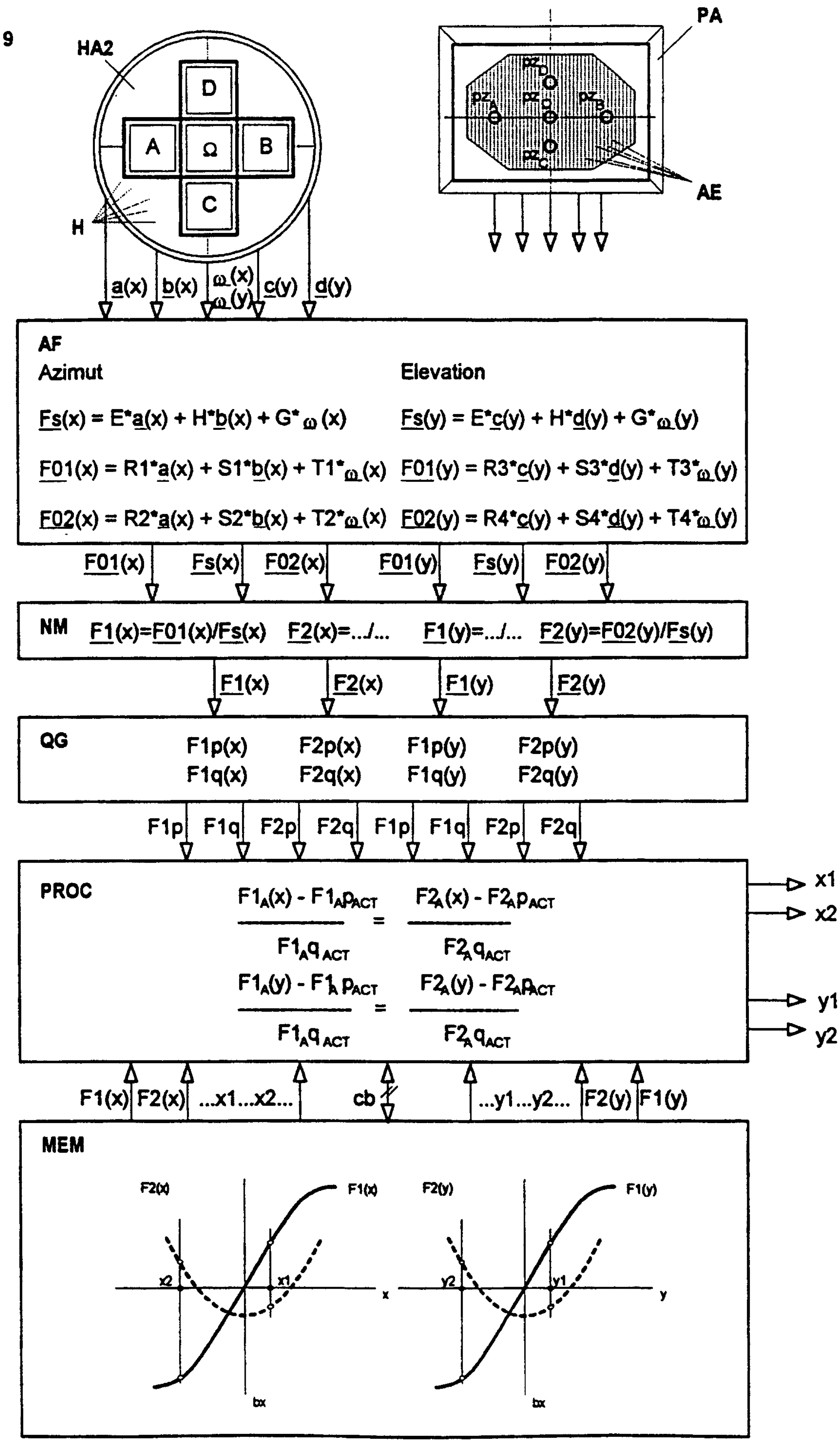
HA2
D
A
Ω
B
C
H
PA
AE
a(x)
b(x)
ω(x)
ω(y)
c(y)
d(y)
AF
Azimut
Elevation
Fs(x) = E*a(x) + H*b(x) + G*ω(x)
Fs(y) = E*c(y) + H*d(y) + G*ω(y)
F01(x) = R1*a(x) + S1*b(x) + T1*ω(x)
F01(y) = R3*c(y) + S3*d(y) + T3*ω(y)
F02(x) = R2*a(x) + S2*b(x) + T2*ω(x)
F02(y) = R4*c(y) + S4*d(y) + T4*ω(y)
F01(x) Fs(x) F02(x) F01(y) Fs(y) F02(y)
NM
F1(x)=F01(x)/Fs(x) F2(x)=.../... F1(y)=.../... F2(y)=F02(y)/Fs(y)
F1(x) F2(x) F1(y) F2(y)
QG
F1p(x) F2p(x) F1p(y) F2p(y)
F1q(x) F2q(x) F1q(y) F2q(y)
F1p F1q F2p F2q F1p F1q F2p F2q
PROC
(F1A(x) - F1ApACT) / F1AqACT = (F2A(x) - F2ApACT) / F2AqACT
(F1A(y) - F1ApACT) / F1AqACT = (F2A(y) - F2ApACT) / F2AqACT
x1
x2
y1
y2
F1(x) F2(x) ...x1...x2... cb ...y1...y2... F2(y) F1(y)
MEM
F2(x) F1(x) x2 x1 x bx
F2(y) F1(y) y2 y1 y bx

Fig. 10

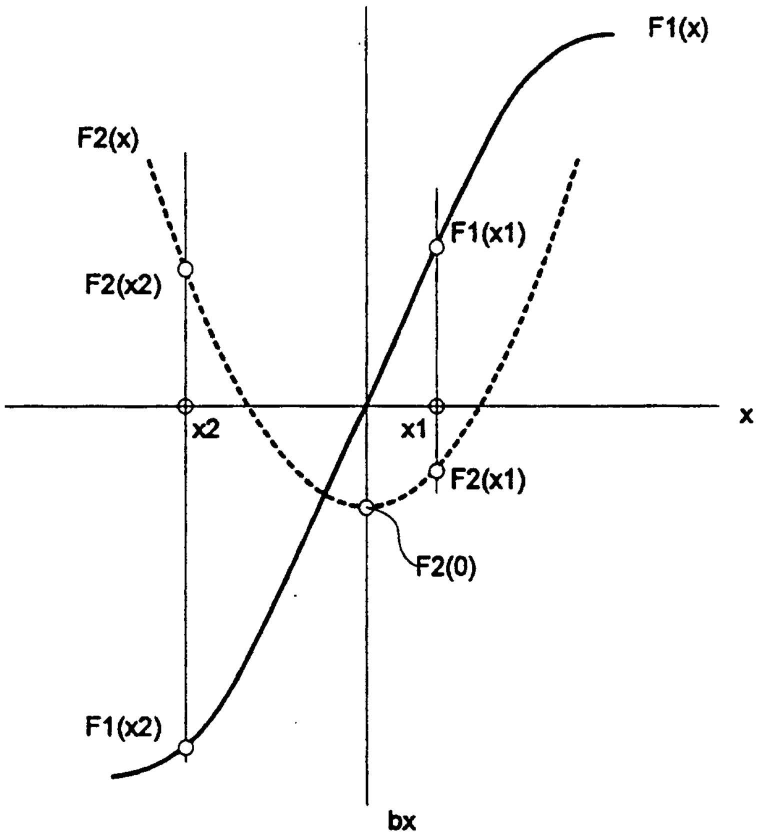
F1(x)
F2(x)
F1(x1)
F2(x2)
x
x2
x1
F2(x1)
F2(0)
F1(x2)
bx

Fig. 16

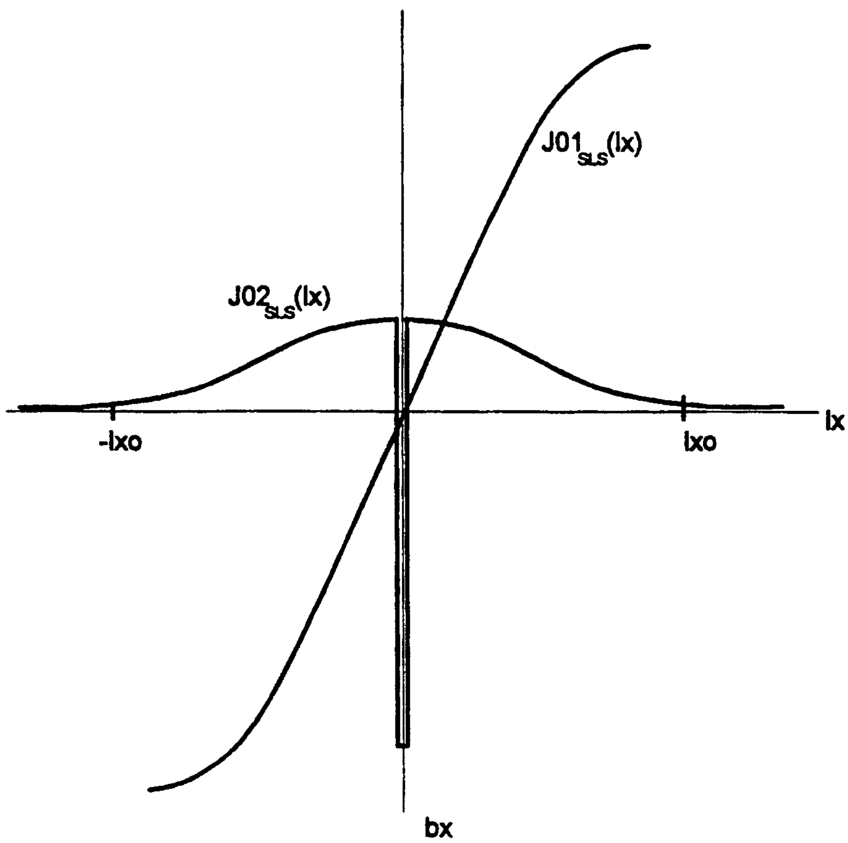
J01SLS(lx)
J02SLS(lx)
-lxo
lxo
lx
bx

Fig. 11

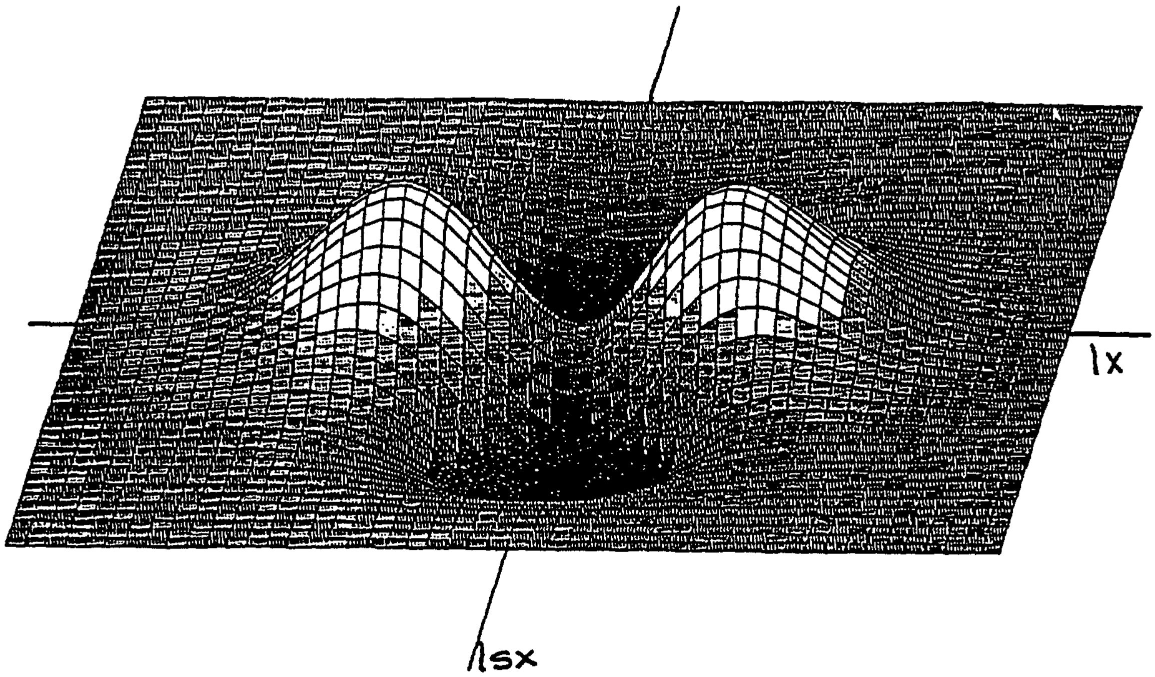


Fig. 12

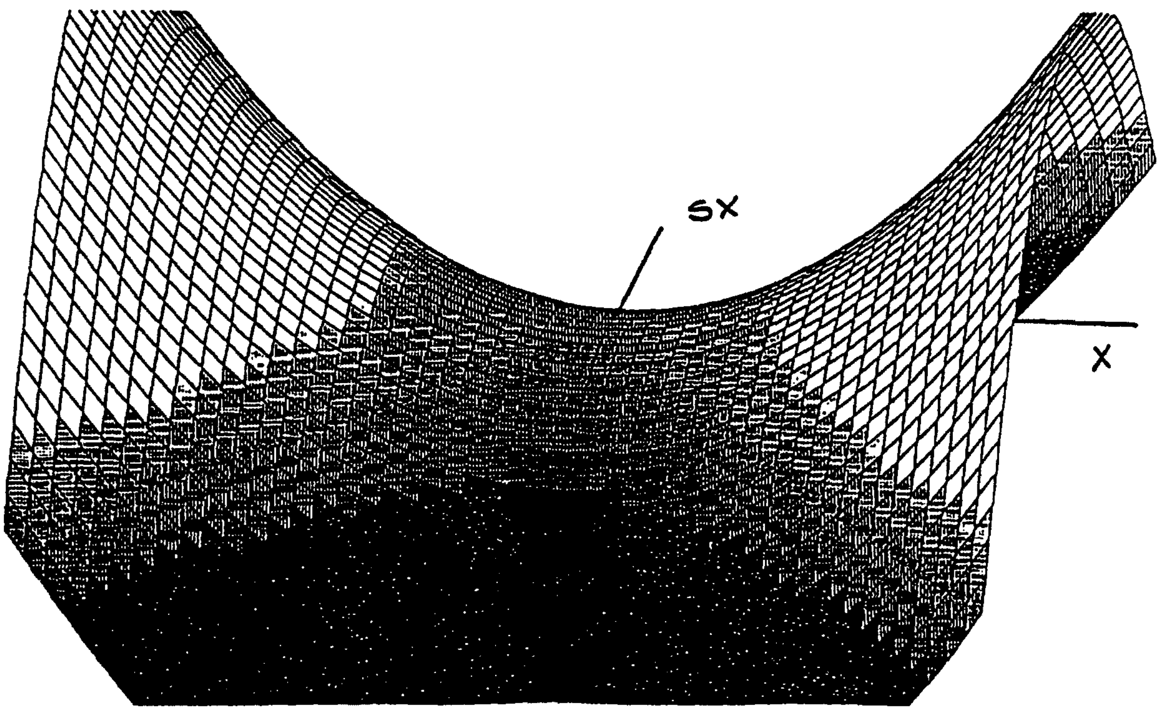

Fig. 13

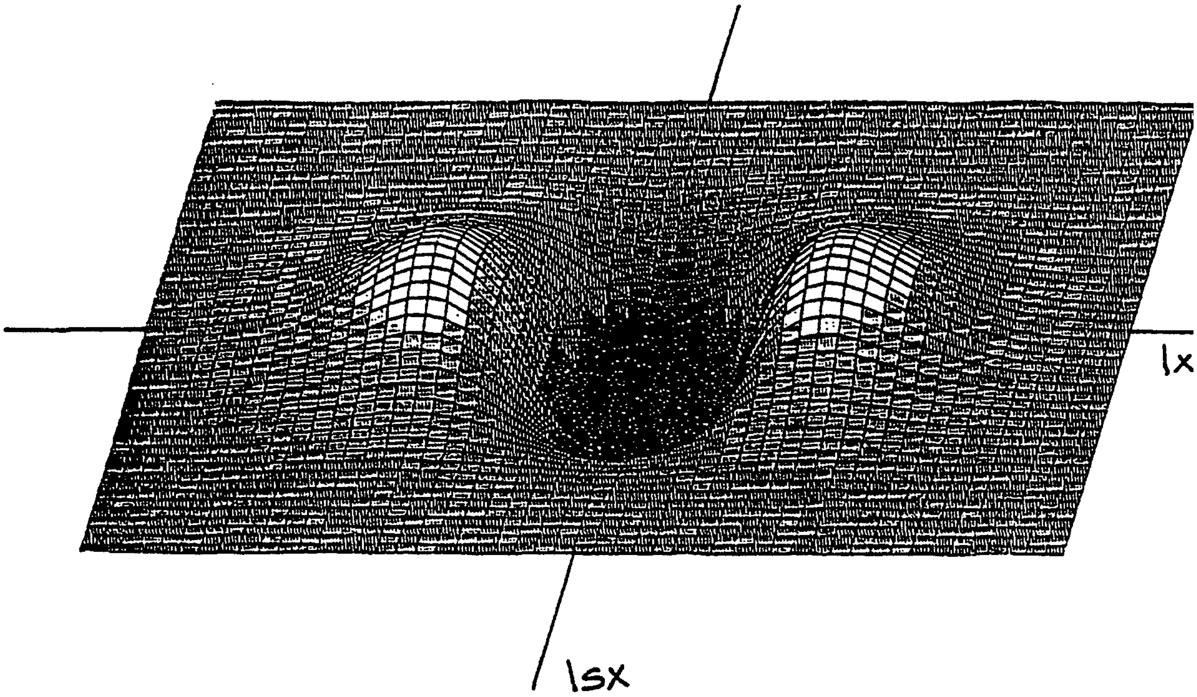


Fig. 14

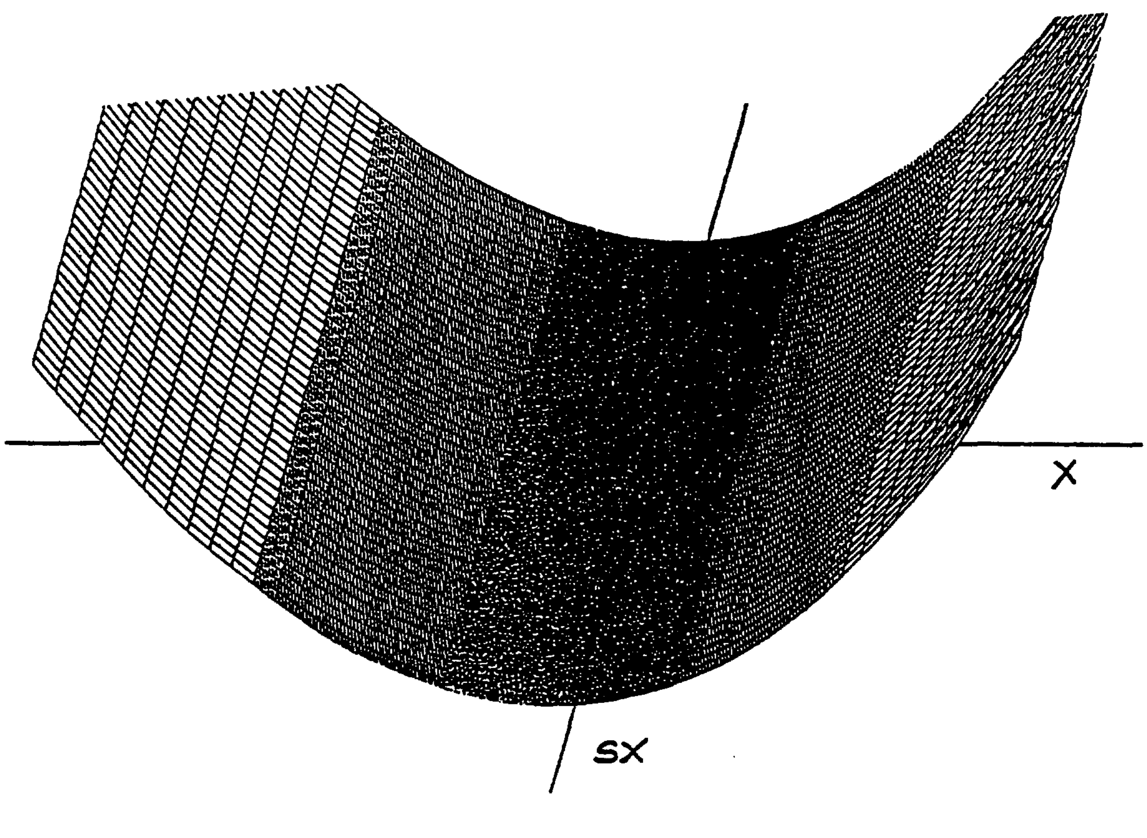

Fig. 15